# EUROPEAN PATENT APPLICATION

(11) **EP 4 668 090 A1**
(43) Date of publication of application: **24.12.2025**
(21) Application number: 24838316.8
(22) Date of filing: 05.03.2024
(51) Int. Cl.: G06F 3/0485, G06F 3/0486, G06F 3/14, G09G 5/14

(54) **CROSS-DEVICE DRAGGING METHOD FOR WINDOW, DEVICE, AND STORAGE MEDIUM**

(30) Priority: 11.07.2023 CN 202310849520; 11.07.2023 CN 202310850928
(71) Applicant: Honor Device Co., Ltd., Shenzhen, Guangdong 518040 (CN)
(72) Inventor: FANG, Jiapeng, Shenzhen, Guangdong 518040 (CN)
(74) Representative: Thun, Clemens
(86) International application number: PCT/CN2024/080060
(87) International publication number: WO 2025/011055

(57) **Abstract**

This application provides a cross-device window dragging method, a device, and a storage medium. The method is applied to a first electronic device with a Windows system and a second electronic device with an Android system. When a mouse that drags a first window displayed in the first electronic device to move traverses to the second electronic device, the first electronic device sends a window traversal indication to the second electronic device, so that the second electronic device can first start a first floating window that does not display the first window, making a user visually feel that the first window traverses. After the mouse is released, the first electronic device notifies the user of the second electronic device to release pressing of a left mouse button, so that the second electronic device can release the first floating window and start a second floating window that is used as an extension screen of the first electronic device. In this way, the first window may be displayed in a display area of the second floating window, thereby implementing cross-device window dragging in a keyboard and mouse sharing scenario.

## Description

This application claims priority to Chinese Patent Application No. 202310849520.9, filed with the China National Intellectual Property Administration on July 11, 2023 and entitled "CROSS-DEVICE WINDOW DRAGGING METHOD, DEVICE, AND STORAGE MEDIUM", and to Chinese Patent Application No. 202310850928.8, filed with the China National Intellectual Property Administration on July 11, 2023 and entitled "CROSS-DEVICE WINDOW DRAGGING METHOD, DEVICE, AND STORAGE MEDIUM", which are incorporated herein by reference in their entireties.

### TECHNICAL FIELD

This application relates to the field of electronic devices, and in particular, to a cross-device window dragging method, a device, and a storage medium.

### BACKGROUND

Keyboard and mouse sharing means that a plurality of electronic devices that establish a keyboard and mouse sharing connection may share one set of input/output (Input/Output, I/O) devices such as a keyboard and a mouse. To be specific, in a keyboard and mouse sharing scenario, a user may operate a plurality of electronic devices by using a same mouse.

However, with diversification of user requirements, traversing different electronic devices based only on one mouse and further implementing operations on different electronic devices cannot meet user requirements.

### SUMMARY

To resolve the foregoing technical problems, this application provides a cross-device window dragging method, a device, and a storage medium, so as to implement cross-device window dragging in a keyboard and mouse sharing scenario, especially dragging a window in a Windows device into an Android device, thereby better meeting a user requirement and improving user experience.

According to a first aspect, this application provides a cross-device window dragging method. The method is applied to a system including a first electronic device and a second electronic device, an operating system of the first electronic device is a Windows system, and an operating system of the second electronic device is an Android system. The method includes: The first electronic device displays a first window; the first electronic device drags, in response to a drag operation that is performed by a user on the first window by operating a mouse cursor, the first window to move on a screen of the first electronic device; the first electronic device sends, when the mouse cursor moves out of a screen edge of the first electronic device, a window traversal indication for the first window to the second electronic device, and hides the first window displayed on the first electronic device, where a mouse corresponding to the mouse cursor is connected to the first electronic device or the second electronic device; the second electronic device displays a first floating window on a screen of the second electronic device in response to the window traversal indication, where the first floating window does not display the first window; the first electronic device sends, in a process in which the mouse cursor drags the first floating window to move on the screen of the second electronic device, a first indication to the second electronic device in response to a release operation that is performed by the user on a left button of the mouse; the second electronic device releases the first floating window in response to the first indication, and displays a second floating window on the screen of the second electronic device, where the second floating window covers the first floating window; and the second electronic device displays, when receiving a first collaborative image sent by the first electronic device, the first collaborative image in a display area of the second floating window, where the first collaborative image includes all display content of the first window.

The first electronic device is, for example, a PC with a Windows system mentioned in the following embodiments, and the second electronic device is, for example, a tablet with an Android system mentioned in the following embodiments.

The first window is, for example, a window 20a mentioned in the following embodiments.

The first floating window is, for example, a floating window 40a mentioned in the following embodiments. The second floating window is, for example, a floating window 50a mentioned in the following embodiments.

The first collaborative image is, for example, a window 20b and a taskbar 30b that are displayed in a display area of the floating window 50a and that are mentioned in the following embodiments.

In a keyboard and mouse sharing scenario, various indications sent by the first electronic device to the second electronic device and various messages sent by the second electronic device to the first electronic device are sent based on a keyboard and mouse sharing connection that is established between the first electronic device and the second electronic device.

The first collaborative image and the following second collaborative image are transmitted based on an extended connection (a screen collaboration connection) that is established between the first electronic device and the second electronic device.

In this aspect, the first electronic device and the second electronic device establish a keyboard and mouse sharing connection, that is, are in a keyboard and mouse sharing scenario.

For a specific implementation process of dragging the first window from the first electronic device to the second electronic device, refer to descriptions of step 101 to step 139 and step 201 to step 227 in the following embodiments. Details are not described herein again.

In this way, cross-device window dragging can be implemented in a keyboard and mouse sharing scenario, especially dragging a window in a Windows device into an Android device.

According to the first aspect, after the displaying the first collaborative image in a display area of the second floating window, the method further includes: The first electronic device displays a second window; the first electronic device drags, in response to a drag operation that is performed by the user on the second window by operating the mouse cursor, the second window to move on the screen of the first electronic device; the first electronic device sends, when the mouse cursor moves out of the screen edge of the first electronic device, a second collaborative image for the second window to the second electronic device, where the second collaborative image includes a first part of the second window, and displays a second part of the second window on the screen of the first electronic device, where the first part is a part that moves out of the screen edge of the first electronic device, and the second part is a part that does not move out of the screen edge of the first electronic device; and the second electronic device displays, when receiving the second collaborative image sent by the first electronic device, the second collaborative image in the display area of the second floating window, where a window state of the second window in the second collaborative image is a restored state, and the second collaborative image blocks the first collaborative image; and when the window state is the restored state, a title bar of the first window includes a maximize control, and does not include a restore control.

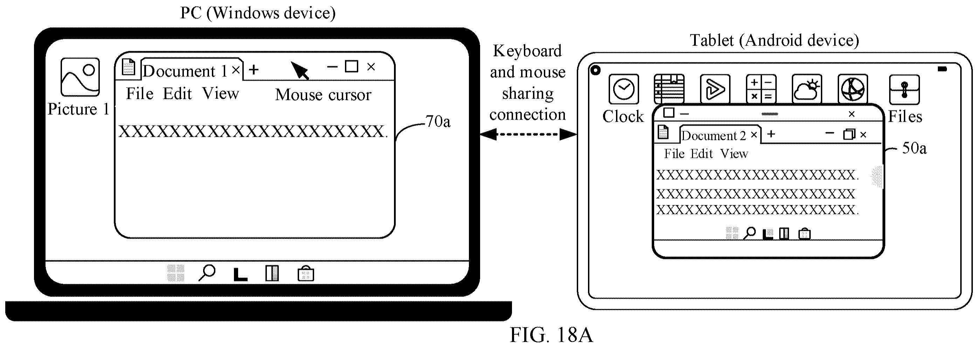

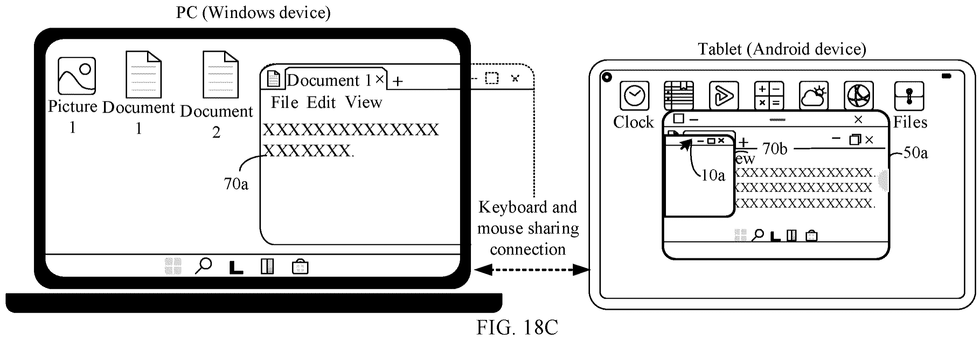

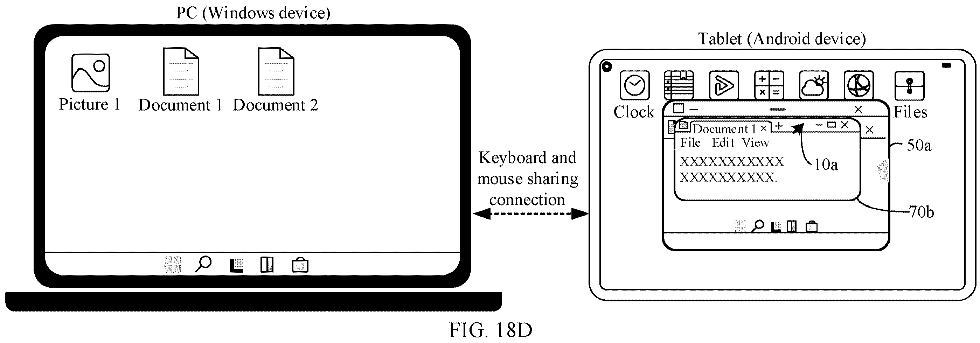

The second window displayed on the first electronic device is, for example, a window 70a corresponding to a document 1 shown in FIG. 18A. The second collaborative image displayed in the second floating window is, for example, a window 70b shown in FIG. 18C and FIG. 18D.

A compositing and drawing module also needs to be used in a process of generating the second collaborative image. The first collaborative image that includes the taskbar of the first electronic device is already displayed in the second floating window. Therefore, the second collaborative image needs to be generated based only on the second window.

For a process of dragging the second window in the first electronic device to the second floating window that is already displayed in the second electronic device, refer to the following part of the embodiment for FIG. 18A to FIG. 18D. Details are not described herein again.

According to the first aspect or any one of the foregoing implementations of the first aspect, that the first electronic device sends, when the mouse cursor moves out of a screen edge of the first electronic device, a window traversal indication for the first window to the second electronic device, and hides the first window displayed on the first electronic device includes: The first electronic device sends, when the mouse cursor moves out of the screen edge of the first electronic device, the window traversal indication for the first window to the second electronic device; and the first electronic device hides the first window displayed on the first electronic device, after sending the window traversal indication to the second electronic device and when receiving a window traversal acknowledgment message that is generated by the second electronic device for the window traversal indication.

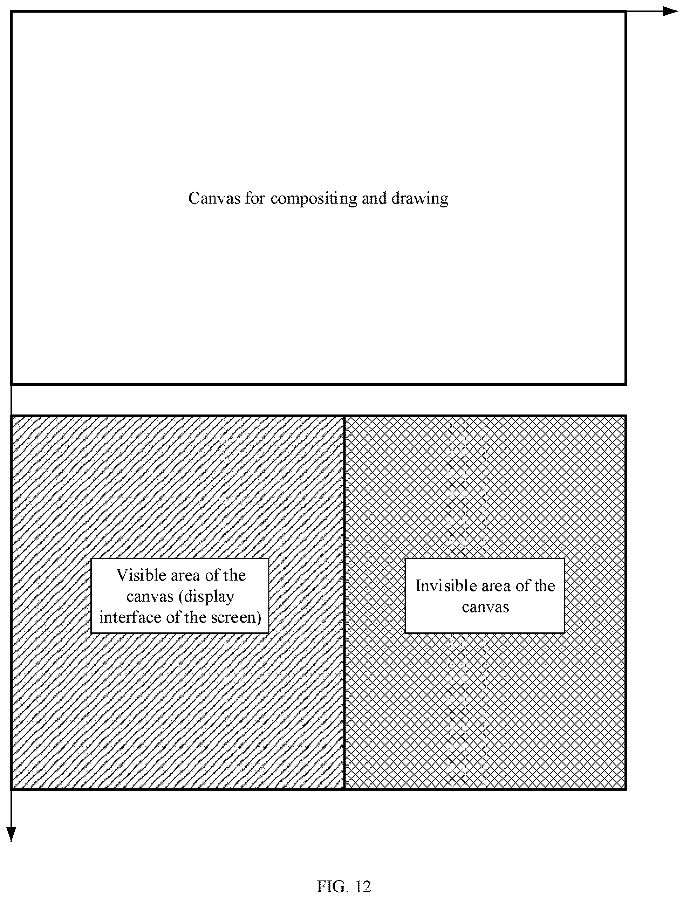

For traversal of the mouse cursor and the first window, and hiding of the first window, refer to FIG. 12, FIG. 13, FIG. 14A, and FIG. 14B, and step 110 to step 113 and step 207 and step 114 to step 117 in the following embodiments. Details are not described herein again.

According to the first aspect or any one of the foregoing implementations of the first aspect, after that the second electronic device displays a first floating window on a screen of the second electronic device in response to the window traversal indication, the method further includes: The second electronic device generates the window traversal acknowledgment message for the window traversal indication, and sends the window traversal message to the first electronic device.

For operations before and after the second electronic device generates the window traversal acknowledgment message, and a specific process of sending the window traversal message to the first electronic device, refer to step 113 and step 201 to step 207 in the following embodiments. Details are not described herein again.

According to the first aspect or any one of the foregoing implementations of the first aspect, the first indication includes a window release indication and a screen collaboration indication; the window release indication is used to indicate the second electronic device to release the first floating window; the screen collaboration indication is used to indicate the second electronic device to establish, to the first electronic device, a screen collaboration connection with a collaboration mode being an extended mode; and the second floating window is displayed on the screen of the second electronic device after the screen collaboration connection is successfully established.

The screen collaboration indication mentioned in this aspect is, for example, an extended mode indication mentioned in the following embodiments.

For operations that are performed by the second electronic device according to the window release indication and the screen collaboration indication, refer to step 129, step 217 to step 221, step 134, and step 222 to step 227 in the following embodiments. Details are not described herein again.

According to the first aspect or any one of the foregoing implementations of the first aspect, after that the second electronic device releases the first floating window in response to the first indication, and displays a second floating window on the screen of the second electronic device, the method further includes: The second electronic device generates a screen collaboration connection success message for the screen collaboration indication, and sends the screen collaboration connection success message to the first electronic device.

The screen collaboration indication mentioned in this aspect is, for example, an extended mode indication mentioned in the following embodiments. The screen collaboration connection success message is, for example, an extended connection success message mentioned in the following embodiments.

For specific implementation details of the extended connection success message (screen collaboration connection success message) that is generated by the second electronic device for the extended mode indication (screen collaboration indication) after the first floating window is released, refer to step 134 and step 222 to step 227 in the following embodiments. Details are not described herein again.

According to the first aspect or any one of the foregoing implementations of the first aspect, the first collaborative image further includes a taskbar of the first electronic device; and the method further includes: The first electronic device sets a window state of the first window to a maximized state in response to the screen collaboration connection success message, so that the first window displays all display content included; and the first electronic device composites and draws the first collaborative image based on the first window with the window state being the maximized state and the taskbar of the first electronic device, and sends the obtained first collaborative image to the second electronic device.

The taskbar of the first electronic device is, for example, a taskbar 30a mentioned in the following embodiments and the accompanying drawings. For specific implementation details of compositing and drawing the first collaborative image, refer to step 138 in the following embodiments. Details are not described herein again.

According to the first aspect or any one of the foregoing implementations of the first aspect, when the window state is the maximized state, a title bar of the first window includes a restore control, and does not include a maximize control.

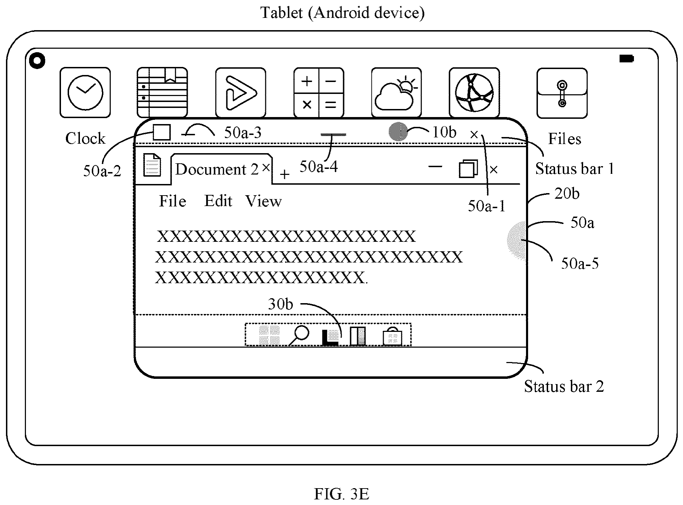

A style of the title bar of the first window with the window state being the maximized state is, for example, a title bar of a window (window 20b) corresponding to a document 2 displayed on the Android device in FIG. 3E.

According to the first aspect or any one of the foregoing implementations of the first aspect, that the first electronic device hides the first window displayed on the first electronic device includes: The first electronic device determines a width and a height of the first window based on a handle of the first window; the first electronic device determines a current X coordinate and a current Y coordinate of the mouse cursor corresponding to the mouse based on movement information of the mouse; the first electronic device determines, based on the current X coordinate and the current Y coordinate of the mouse cursor, the width of the first window, and an X coordinate interval corresponding to the screen of the first electronic device, hidden coordinates for hiding the first window, where the X coordinate interval includes an X-axis coordinate of a left side edge of the screen of the first electronic device and an X-axis coordinate of a right side edge of the screen of the first electronic device, and the X-axis coordinate of the left side edge of the screen is less than the X-axis coordinate of the right side edge of the screen; and the first electronic device hides the first window at a position of the hidden coordinates.

For a manner of determining the hidden coordinates, refer to the description part of the embodiment shown in FIG. 12. Details are not described herein again.

According to the first aspect or any one of the foregoing implementations of the first aspect, that the first electronic device determines, based on the current X coordinate and the current Y coordinate of the mouse cursor, the width of the first window, and an X coordinate interval corresponding to the screen of the first electronic device, hidden coordinates for hiding the first window includes: The first electronic device determines a difference between the X-axis coordinate of the left side edge of the screen and the width of the first window when the X coordinate of the mouse cursor is not greater than the X-axis coordinate of the left side edge of the screen; and the first electronic device uses the difference as an X coordinate of the hidden coordinates, and uses the Y coordinate of the mouse cursor as a Y coordinate of the hidden coordinates.

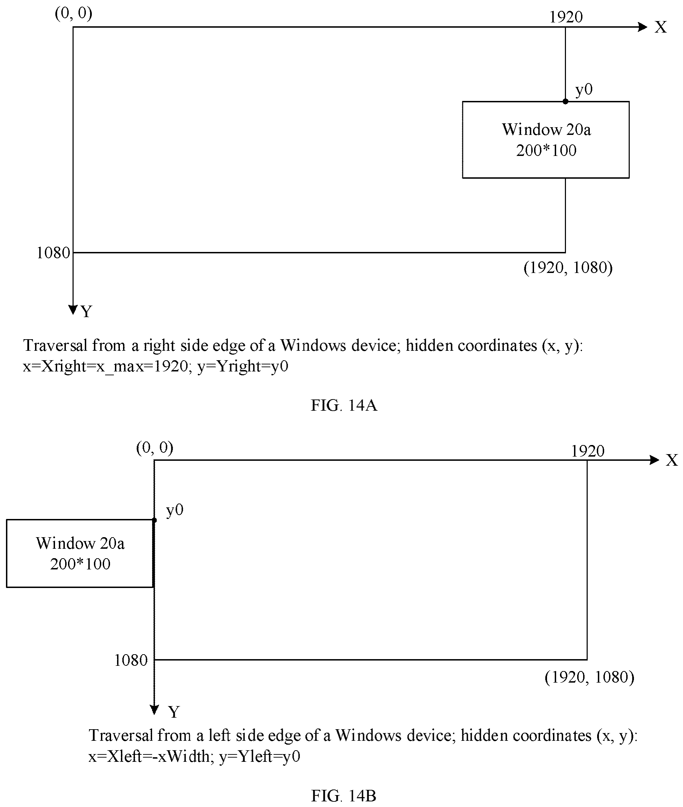

For the hidden coordinates corresponding to the first window traversing from the left side edge of the screen of the Windows device, refer to the description part of the embodiment shown in FIG. 14B. Details are not described herein again.

According to the first aspect or any one of the foregoing implementations of the first aspect, that the first electronic device determines, based on the current X coordinate and the current Y coordinate of the mouse cursor, the width of the first window, and an X coordinate interval corresponding to the screen of the first electronic device, hidden coordinates for hiding the first window includes: The first electronic device uses the X-axis coordinate of the right side edge of the screen as an X coordinate of the hidden coordinates, and uses the Y coordinate of the mouse cursor as a Y coordinate of the hidden coordinates when the X coordinate of the mouse cursor is not less than the X-axis coordinate of the right side edge of the screen.

For the hidden coordinates corresponding to the first window traversing from the right side edge of the screen of the Windows device, refer to the description part of the embodiment shown in FIG. 14A. Details are not described herein again.

According to the first aspect or any one of the foregoing implementations of the first aspect, after that the first electronic device hides the first window at a position of the hidden coordinates, the method further includes: displaying the first window from the hidden coordinates in response to a drag operation of traversing the first window from the second electronic device back to the first electronic device.

According to the first aspect or any one of the foregoing implementations of the first aspect, that the first electronic device displays a first window includes: The first electronic device displays the first window with the window state being the maximized state, where when the window state is the maximized state, the title bar of the first window includes the restore control, and does not include the maximize control.

To be specific, before the first window is dragged, the first window occupies an entire display area of the screen of the Windows device. In this scenario, the style of the title bar of the first window is, for example, a title bar of a window (window 20b) corresponding to the document 2 displayed on the Android device in FIG. 3E.

According to the first aspect or any one of the foregoing implementations of the first aspect, that the first electronic device drags, in response to a drag operation that is performed by a user on the first window by operating a mouse cursor, the first window to move on a screen of the first electronic device includes: The first electronic device switches the window state of the first window from the maximized state to the restored state in response to the drag operation that is performed by the user on the first window by operating the mouse cursor, where when the window state is the restored state, the title bar of the first window includes the maximize control, and does not include the restore control; and the first electronic device drags the first window with the window state being the restored state to move on the screen of the first electronic device.

To be specific, the first window displayed in the maximized state is first automatically switched to the restored state before dragging and moving.

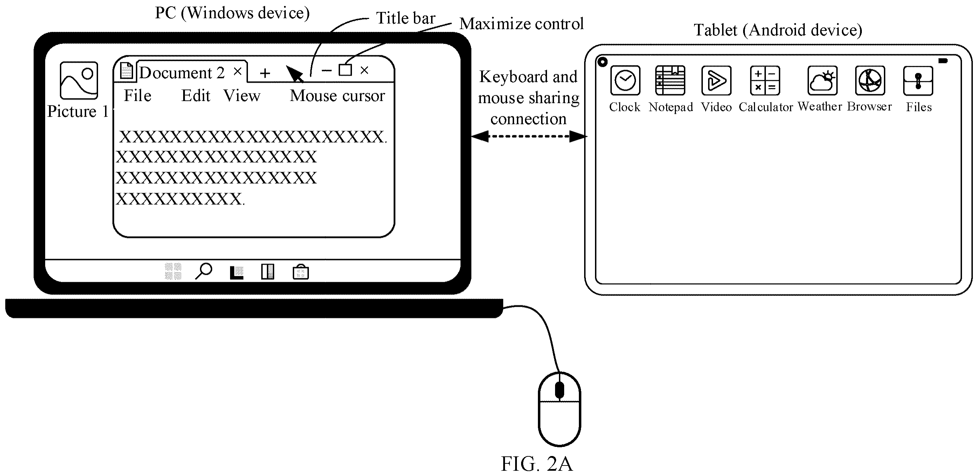

According to the first aspect or any one of the foregoing implementations of the first aspect, that the first electronic device displays a first window includes: The first electronic device displays the first window with the window state being the restored state, where when the window state is the restored state, the title bar of the first window includes the maximize control, and does not include the restore control. To be specific, the style of the title bar of the first window is, for example, a title bar of a window (window 20a) corresponding to the document 2 displayed on the Windows device in FIG. 2A.

According to the first aspect or any one of the foregoing implementations of the first aspect, that the first electronic device drags, in response to a drag operation that is performed by a user on the first window by operating a mouse cursor, the first window to move on a screen of the first electronic device includes: The first electronic device drags, in response to the drag operation that is performed by the user on the first window by operating the mouse cursor, the first window with the window state being the restored state to move on the screen of the first electronic device. To be specific, a window (window 20a) that corresponds to the document 2 and that is displayed in the Windows device is directly dragged, as shown in FIG. 2A.

According to the first aspect or any one of the foregoing implementations of the first aspect, in a process of dragging the first window to move on the screen of the first electronic device, the method further includes: In the process of dragging the first window to move on the screen of the first electronic device, the first electronic device determines, based on the movement information of the mouse, whether the mouse cursor corresponding to the mouse moves out of the screen of the first electronic device from the left side edge or the right side edge of the screen of the first electronic device; and when it is determined that the mouse cursor corresponding to the mouse moves out of the screen of the first electronic device from the left side edge or the right side edge of the screen of the first electronic device, the first electronic device determines that the mouse cursor moves out of the screen edge of the first electronic device.

For implementation of this aspect, refer to specific descriptions of step 109 and step 110 in the following embodiments. Details are not described herein again.

According to the first aspect or any one of the foregoing implementations of the first aspect, that the first electronic device drags, in response to a drag operation that is performed by a user on the first window by operating a mouse cursor, the first window to move on a screen of the first electronic device includes: The first electronic device determines, when detecting a window movement message of the first window and detecting a left mouse button pressing message indicating that the left button of the mouse is pressed, that the user operates the mouse cursor to perform the drag operation on the first window; and the first electronic device drags, in response to the drag operation, the first window to move on the screen of the first electronic device.

For the drag operation that is performed by the user on the first window by operating the mouse cursor, and a specific operation that is performed by the first electronic device in response to the drag operation, refer to descriptions of step 101 to step 107 in the following embodiments. Details are not described herein again.

According to the first aspect or any one of the foregoing implementations of the first aspect, that the first electronic device sends a first indication to the second electronic device in response to a release operation that is performed by the user on a left button of the mouse includes: The first electronic device determines, when detecting a release message for the left button of the mouse, and detecting a message indicating that the first window stops moving, that the user performs the release operation on the left button of the mouse; and the first electronic device sends the first indication to the second electronic device in response to the release operation.

The first indication may include the window release indication mentioned in step 125 and the extended mode indication (screen collaboration indication) in step 131 in the following embodiments.

For specific implementation details of the release operation that is performed by the user on the left button of the mouse, and the first electronic device sending the first indication to the second electronic device in response to the release operation, refer to descriptions of step 123 to step 134 in the following embodiments. Details are not described herein again.

According to the first aspect or any one of the foregoing implementations of the first aspect, the second electronic device includes a screen computer and a foldable-screen mobile phone.

In this way, an electronic device with a relatively large screen is selected as the second electronic device, so that the second floating window displayed on the second electronic device can be relatively large, and further the first window that is dragged from the first electronic device to the second floating window of the second electronic device for display can be displayed in a tiled manner, helping the user view content in the window.

According to a second aspect, this application provides a cross-device window dragging method. The method is applied to a system including a first electronic device and a second electronic device, an operating system of the first electronic device is a Windows system, and an operating system of the second electronic device is an Android system. The method includes: The first electronic device displays a first window; the first electronic device drags, in response to a drag operation that is performed by a user on the first window by operating a mouse cursor, the first window to move on a screen of the first electronic device; the first electronic device sends, when the mouse cursor moves out of a screen edge of the first electronic device, a window traversal indication for the first window to the second electronic device, and hides the first window displayed on the first electronic device, where a mouse corresponding to the mouse cursor is connected to the first electronic device or the second electronic device; the second electronic device displays a first floating window on a screen of the second electronic device in response to the window traversal indication, where the first floating window includes a first upper status bar, a first lower status bar, and a first display area, and the first display area does not display the first window; the second electronic device displays the mouse cursor in the first upper status bar, and registers a left mouse button pressing event for the mouse; the first electronic device sends, in a process in which the mouse cursor drags the first floating window to move on the screen of the second electronic device, a first indication to the second electronic device in response to a release operation that is performed by the user on a left button of the mouse; the second electronic device registers, in response to the first indication, a left mouse button lifting event for the mouse to release the first floating window, and displays a second floating window, where the second floating window covers the first floating window, and the second floating window includes a second upper status bar, a second lower status bar, and a second display area; and the second electronic device displays, when receiving a first collaborative image sent by the first electronic device, the first collaborative image in the second display area, where the first collaborative image includes all display content of the first window.

The first electronic device is, for example, a PC with a Windows system mentioned in the following embodiments, and the second electronic device is, for example, a tablet with an Android system mentioned in the following embodiments.

The first window is, for example, a window 20a mentioned in the following embodiments.

The first floating window is, for example, a floating window 40a mentioned in the following embodiments. The second floating window is, for example, a floating window 50a mentioned in the following embodiments.

The first collaborative image is, for example, a window 20b and a taskbar 30b that are displayed in a display area of the floating window 50a and that are mentioned in the following embodiments.

In a keyboard and mouse sharing scenario, various indications sent by the first electronic device to the second electronic device and various messages sent by the second electronic device to the first electronic device are sent based on a keyboard and mouse sharing connection that is established between the first electronic device and the second electronic device.

The first collaborative image and the following second collaborative image are transmitted based on an extended connection (a screen collaboration connection) that is established between the first electronic device and the second electronic device.

In this aspect, the first electronic device and the second electronic device establish a keyboard and mouse sharing connection, that is, are in a keyboard and mouse sharing scenario.

The first upper status bar is, for example, a status bar 1 of the floating window 40a mentioned in the following embodiments. The first lower status bar is, for example, a status bar 2 of the floating window 40a mentioned in the following embodiments. The first display area, namely, an area other than the first upper status bar and the first lower status bar in the first floating window is, for example, an area displaying a control 40a-5 in the floating window 40a mentioned in the following embodiments.

The second upper status bar is, for example, a status bar 1 of the floating window 50a mentioned in the following embodiments. The second lower status bar is, for example, a status bar 2 of the floating window 50a mentioned in the following embodiments. The second display area, namely, an area other than the first upper status bar and the first lower status bar in the second floating window is, for example, an area displaying a window 20b and a taskbar 30b in the floating window 50a mentioned in the following embodiments.

The left mouse button pressing event registered for the mouse is a down event mentioned in the following embodiments.

The left mouse button lifting event registered for the mouse is an up event mentioned in the following embodiments.

For a specific implementation process of dragging the first window from the first electronic device to the second electronic device, refer to descriptions of step 101 to step 139 and step 201 to step 227 in the following embodiments. Details are not described herein again.

In this way, cross-device window dragging can be implemented in a keyboard and mouse sharing scenario, especially dragging a window in a Windows device into an Android device.

According to the second aspect, before that the first electronic device sends, when the mouse cursor moves out of a screen edge of the first electronic device, a window traversal indication for the first window to the second electronic device, and hides the first window displayed on the first electronic device, the method further includes: The second electronic device establishes a keyboard and mouse sharing connection to the first electronic device, and agrees on an aspect ratio of the first display area in a process of establishing the keyboard and mouse sharing connection, where the aspect ratio of the first display area is the same as an aspect ratio of the screen of the first electronic device.

In this way, in the process in which the first electronic device establishes the keyboard and mouse sharing connection to the second electronic device, an aspect ratio to be followed by the first electronic device and the second electronic device in a screen collaboration scenario is determined in advance. Therefore, in the screen collaboration scenario, the first electronic device may generate the first collaborative image based on an agreed aspect ratio, and an area used to display the collaborative image in the second electronic device meets the aspect ratio. Therefore, the collaborative image subsequently displayed in the second display area does not have a black edge, making the user feel, in terms of a visual effect, that the first window is dragged directly to the second electronic device for display, thereby improving user experience.

According to the second aspect or any one of the foregoing implementations of the second aspect, a height of the first upper status bar and a height of the first lower status bar are fixed; and that the second electronic device displays a first floating window on a screen of the second electronic device in response to the window traversal indication includes: The second electronic device creates, in response to the window traversal indication, a first Activity based on the aspect ratio, a size of the screen of the second electronic device, the height of the first upper status bar, the height of the first lower status bar, and a preset proportion of the first window; and sets a window mode of the first Activity to a floating window mode to obtain the first floating window.

It may be understood that, in the Android system, each window includes an Activity component. Therefore, after the first Activity is drawn, the window mode of the first Activity is set to the floating window mode, and the first floating window may be obtained.

According to the second aspect or any one of the foregoing implementations of the second aspect, that the second electronic device creates, in response to the window traversal indication, a first Activity based on the aspect ratio, a size of the screen of the second electronic device, the height of the first upper status bar, the height of the first lower status bar, and a preset proportion of the first window includes: The second electronic device determines a width of the first display area and a height of the first display area based on the aspect ratio, the size of the screen of the second electronic device, and the preset proportion of the first window; the second electronic device obtains a Y coordinate for traversing the first window carried in the window traversal indication, and uses the Y coordinate for traversing the first window as a start Y coordinate of a height of the first Activity; the second electronic device determines an end Y coordinate of the height of the first Activity based on the start Y coordinate, the height of the first upper status bar, the height of the first display area, and the height of the first lower status bar; the second electronic device sets a first bounds attribute of the first Activity based on the width of the first display area, the start Y coordinate, and the end Y coordinate; and the second electronic device creates the first Activity based on the first bounds attribute.

The start Y coordinate of the height of the first Activity is, for example, a top coordinate mentioned in the following embodiments. The end Y coordinate of the height of the first Activity is, for example, a bottom coordinate mentioned in the following embodiments.

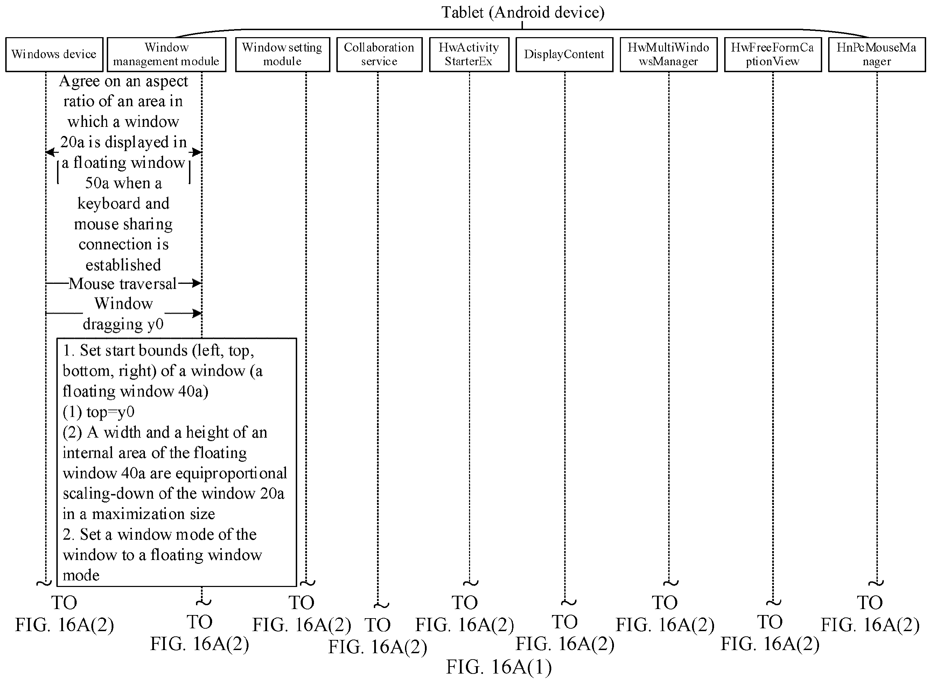

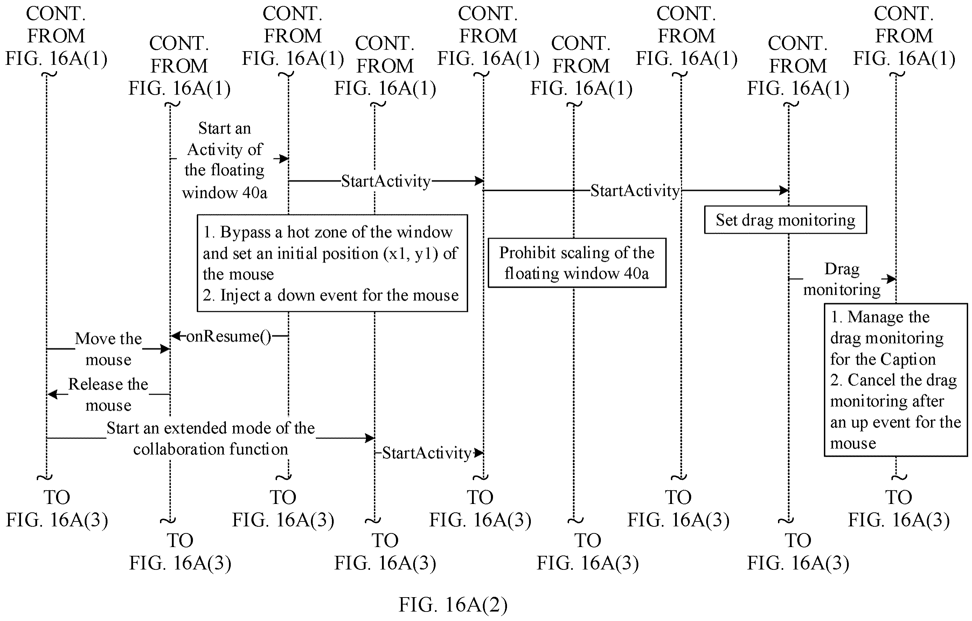

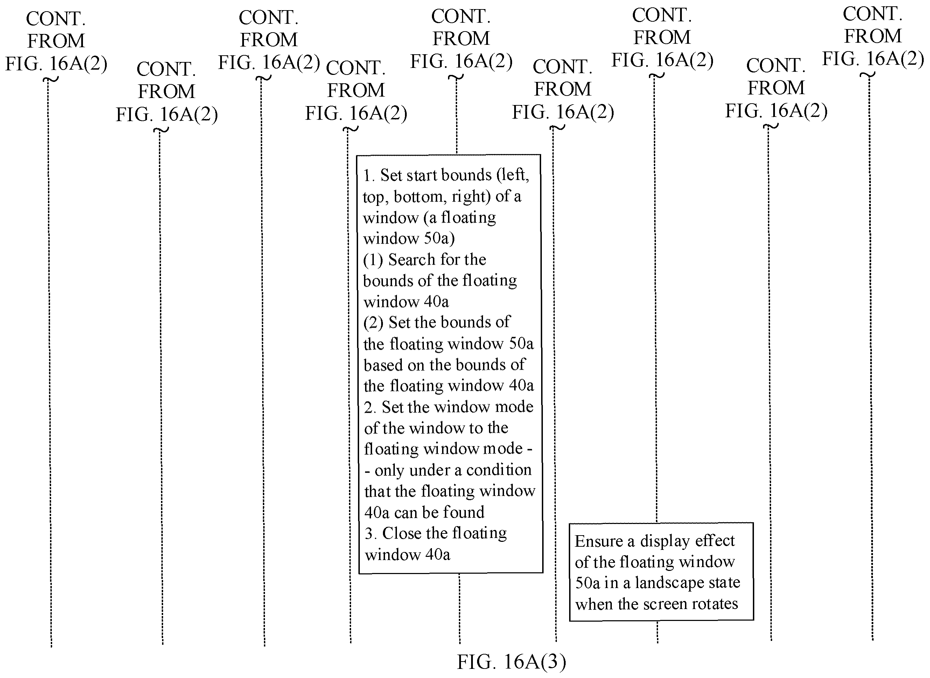

For setting of the first bounds attribute of the first Activity, refer to the following operations performed on the window management module in the embodiment shown in FIG. 16A(1) to FIG. 16A(3). Specific implementation details are not described herein again.

According to the second aspect or any one of the foregoing implementations of the second aspect, the displaying a second floating window includes: The second electronic device creates a second Activity based on the first Activity; and sets a window mode of the second Activity to a floating window mode to obtain the second floating window.

For specific implementation details of creating the second Activity based on the first Activity, that is, creating the second floating window based on the first floating window, refer to the following operations performed on the HwActivityStartEx in the embodiment shown in FIG. 16A(1) to FIG. 16A(3). The specific implementation details are not described herein again.

According to the second aspect or any one of the foregoing implementations of the second aspect, after the displaying a second floating window, the method further includes: The second electronic device destroys the first floating window.

For example, an operation of destroying the first floating window may be, for example, invoking finish(). For logic of invoking the interface, refer to the following operations performed on the HwActivityStartEx in the embodiment shown in FIG. 16A(1) to FIG. 16A(3). Specific implementation details are not described herein again.

In this way, occupation of a resource of the second electronic device is reduced.

According to the second aspect or any one of the foregoing implementations of the second aspect, a height of the second upper status bar is the same as the height of the first upper status bar, and a height of the second lower status bar is the same as the height of the first lower status bar; and that the second electronic device creates a second Activity based on the first Activity includes: The second electronic device obtains the first bounds attribute of the first Activity; the second electronic device sets, when obtaining the first bounds attribute, a second bounds attribute of the second Activity based on the first bounds attribute; and the second electronic device creates the second Activity based on the second bounds attribute.

For specific implementation details of creating the second Activity based on the first Activity, that is, creating the second floating window based on the first floating window, refer to the following operations performed on the HwActivityStartEx in the embodiment shown in FIG. 16A(1) to FIG. 16A(3). The specific implementation details are not described herein again.

According to the second aspect or any one of the foregoing implementations of the second aspect, the second bounds attribute is the same as the first bounds attribute.

This can ensure that a size and a layout of the second floating window are the same as those of the first floating window, so that the second floating window can completely cover the first floating window, and the user is unaware of the process of replacing the first floating window with the second floating window, further improving user experience.

According to the second aspect or any one of the foregoing implementations of the second aspect, the method further includes: The second electronic device determines, when the first bounds attribute is not obtained, a width of the second display area and a height of the second display area based on the aspect ratio, the size of the screen of the second electronic device, and the preset proportion of the first window; the second electronic device obtains the Y coordinate for traversing the first window carried in the window traversal indication, and uses the Y coordinate for traversing the first window as a start Y coordinate of a height of the second Activity; the second electronic device determines an end Y coordinate of the height of the second Activity based on the start Y coordinate, the height of the second upper status bar, the height of the second display area, and the height of the second lower status bar; and the second electronic device sets the second bounds attribute of the second Activity based on the width of the second display area, the start Y coordinate, and the end Y coordinate.

For specific implementation details of creating the second floating window, refer to the following operations performed on the HwActivityStartEx in the embodiment shown in FIG. 16A(1) to FIG. 16A(3). The specific implementation details are not described herein again.

According to the second aspect or any one of the foregoing implementations of the second aspect, the creating a first Activity further includes: setting a window attribute of the first Activity to a scaling-prohibited mode.

For example, the foregoing setting of the window attribute is implemented by using the DisplayContent mentioned in the following embodiments. Specific implementation details are not described herein again.

In this way, the window attribute of the first Activity is set to the scaling-prohibited mode, so as to ensure that when the second bounds are set based on the first bounds, the user cannot drag the first floating window. In other words, the first bounds do not change, thereby ensuring that the drawn second floating window can completely cover the first floating window without a failure of coverage.

According to the second aspect or any one of the foregoing implementations of the second aspect, that the second electronic device displays the mouse cursor in the first upper status bar includes: The second electronic device selects, based on a display position of the first floating window, a coordinate point from the currently displayed first upper status bar as initial coordinates of the mouse, where the initial coordinates of the mouse bypass an area in which a function key included in the first upper status bar is located and a hot zone on a side edge of the screen of the second electronic device; and the second electronic device displays the mouse cursor at the initial coordinates of the mouse.

For implementation details of setting the initial coordinates of the mouse, refer to the following operations performed on the window setting module in the embodiment shown in FIG. 16A(1) to FIG. 16A(3). The specific implementation details are not described herein again.

According to the second aspect or any one of the foregoing implementations of the second aspect, the first indication includes a window release indication and a screen collaboration indication; the window release indication is used to indicate the second electronic device to release the first floating window; the screen collaboration indication is used to indicate the second electronic device to establish, to the first electronic device, a screen collaboration connection with a collaboration mode being an extended mode; and the second floating window is displayed on the screen of the second electronic device after the screen collaboration connection is successfully established.

The screen collaboration indication mentioned in this aspect is, for example, an extended mode indication mentioned in the following embodiments.

For operations that are performed by the second electronic device according to the window release indication and the screen collaboration indication, refer to step 129, step 217 to step 221, step 134, and step 222 to step 227 in the following embodiments. Details are not described herein again.

According to the second aspect or any one of the foregoing implementations of the second aspect, the method further includes: The second electronic device registers drag monitoring for the first upper status bar, where the second electronic device is further configured to deregister the drag monitoring in response to the window release indication.

For example, the drag monitoring registered for the first upper status bar is implemented by using the HwFreeFormCaptionView mentioned in the following embodiments. Specific implementation details are not described herein again.

For example, the operation of deregistering the drag monitoring is implemented by using the HnPcMouseManager mentioned in the following embodiments. Specific implementation details are not described herein again.

According to the second aspect or any one of the foregoing implementations of the second aspect, before the deregistering the drag monitoring, the method further includes: When the drag monitoring is triggered and window movement position information sent by the first electronic device is received, the second electronic device moves the display position of the first floating window based on the window movement position information.

For a processing operation involved in moving the first floating window, refer to step 122 and step 212 to step 216 in the following embodiments. Details are not described herein again.

According to the second aspect or any one of the foregoing implementations of the second aspect, the second floating window is displayed in the second electronic device with a screen state being a landscape state; and after the displaying the first collaborative image in the second display area, the method further includes: The second electronic device displays a third floating window at a preset position distant from an upper edge of the screen in a portrait state in response to a screen rotation operation, where the third floating window includes a third upper status bar, a third lower status bar, and a third display area; and the second electronic device displays the first collaborative image in the third display area; and destroys or hides the second Activity, where a height of the third upper status bar and a height of the third lower status bar are fixed, an aspect ratio of the third display area is the same as the aspect ratio of the first display area agreed on with the first electronic device when the keyboard and mouse sharing connection is established, and the aspect ratio of the first display area is the same as the aspect ratio of the screen of the first electronic device.

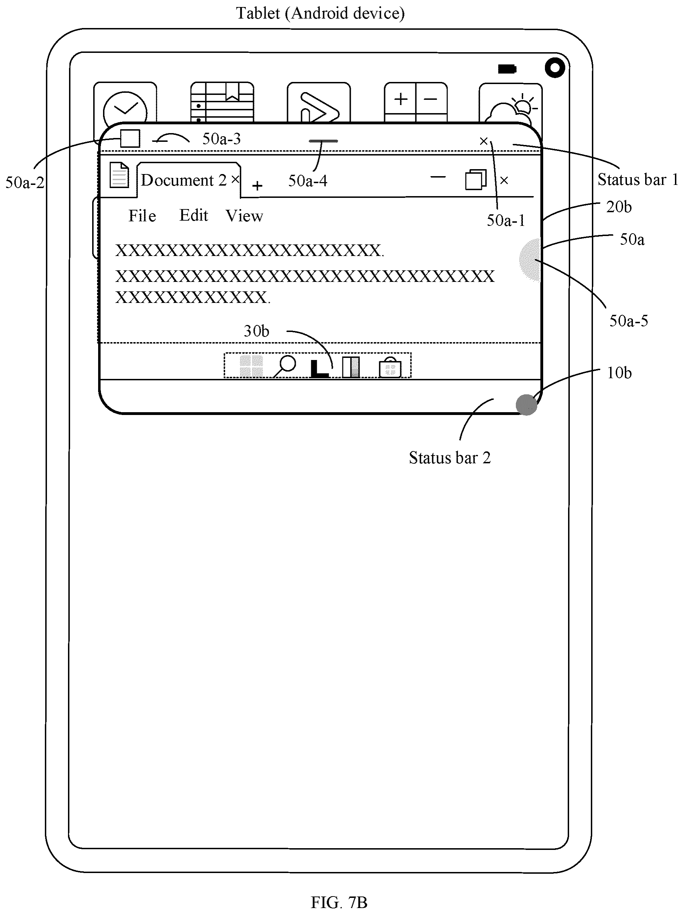

For example, when the second floating window is the floating window 50a in the following embodiments, the third floating window may be understood as a floating window 50a in a portrait state, for example, in a state shown in FIG. 7B.

Correspondingly, the third upper status bar, the third lower status bar, and the third display area are a status bar 1, a status bar 2, and an area used to display the window 20b and the taskbar 30b in the floating window 50a in the portrait state.

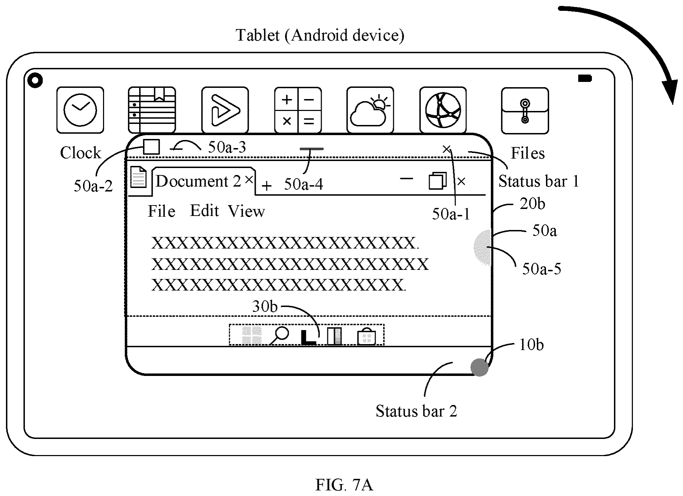

For switching between a landscape screen and a portrait screen, and changes in a position and a size of the floating window 50a during the switching, refer to the description part of the embodiment shown in FIG. 7A and FIG. 7B. Details are not described herein again.

According to the second aspect or any one of the foregoing implementations of the second aspect, the method further includes: The second electronic device scales the second floating window in response to a scaling operation on the second floating window, where an aspect ratio of the second display area of the scaled-up or scaled-down second floating window is the same as the aspect ratio of the first display area agreed on with the first electronic device when the keyboard and mouse sharing connection is established, and the aspect ratio of the first display area is the same as the aspect ratio of the screen of the first electronic device.

In this way, the second display area is set to still meet an agreed aspect ratio during the scaling of the second floating window, so that regardless of how the second floating window changes, no black edge appears in the process of displaying the first collaborative image.

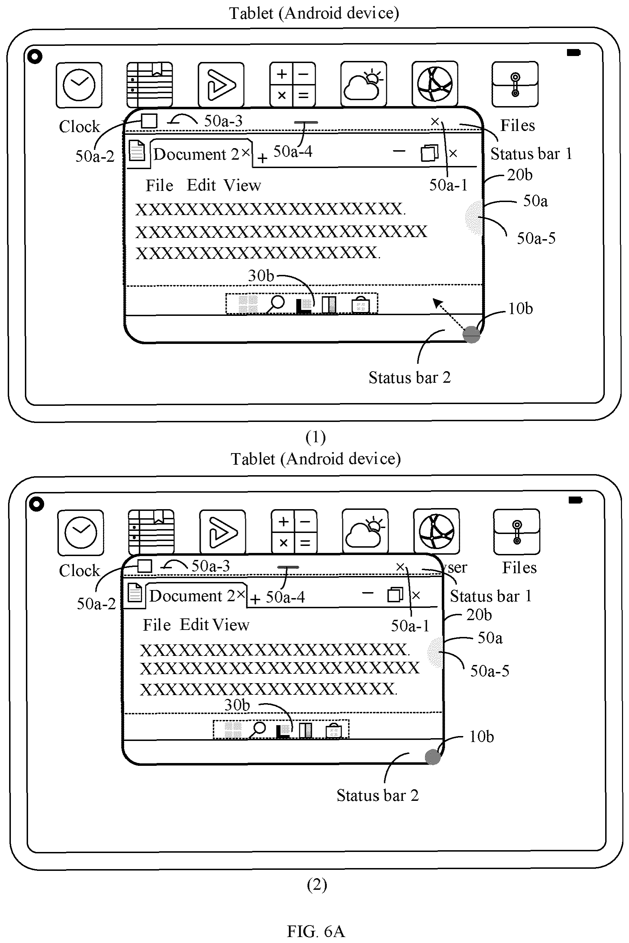

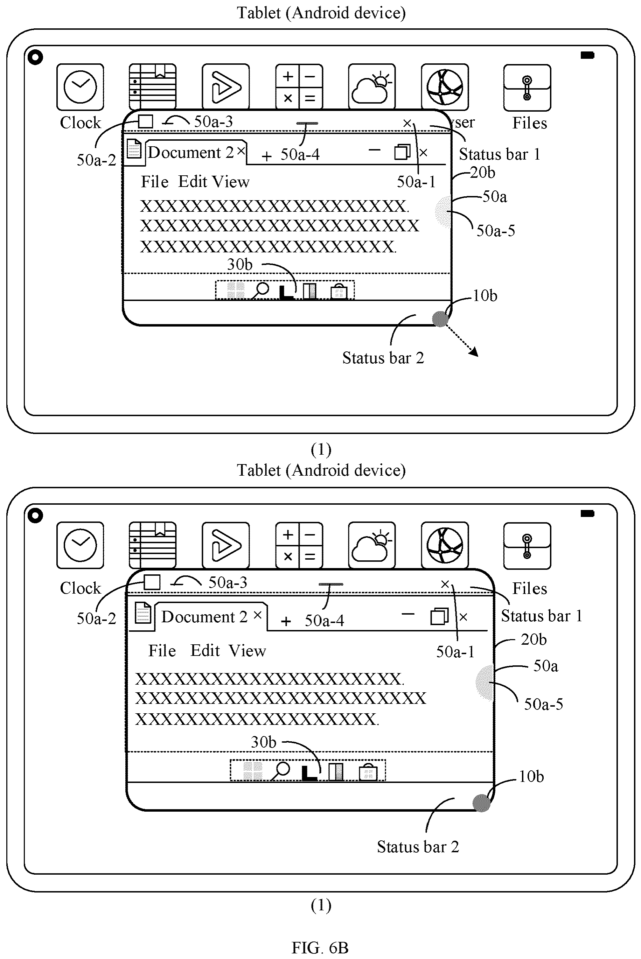

For the scaling operation performed on the second floating window, refer to the following description parts of the embodiments shown in FIG. 6A and FIG. 6B. Details are not described herein again.

According to a third aspect, this application provides an electronic device. The electronic device includes a memory and a processor. The memory is coupled to the processor. The memory stores program instructions, and when the program instructions are executed by the processor, the electronic device is enabled to perform the instructions of the method in the first aspect or any possible implementation of the first aspect, or the instructions of the method in the second aspect or any possible implementation of the second aspect.

The third aspect and any implementation of the third aspect correspond to the first aspect and any implementation of the first aspect, or the second aspect and any implementation of the second aspect, respectively. For technical effects corresponding to the third aspect and any implementation of the third aspect, refer to technical effects corresponding to the first aspect and any implementation of the first aspect, or technical effects corresponding to the second aspect and any implementation of the second aspect. Details are not described herein again.

According to a fourth aspect, this application provides a computer-readable medium, configured to store a computer program. The computer program includes instructions for performing the method in the first aspect or any possible implementation of the first aspect, or instructions for performing the method in the second aspect or any possible implementation of the second aspect.

The fourth aspect and any implementation of the fourth aspect correspond to the first aspect and any implementation of the first aspect, or the second aspect and any implementation of the second aspect, respectively. For technical effects corresponding to the fourth aspect and any implementation of the fourth aspect, refer to technical effects corresponding to the first aspect and any implementation of the first aspect, or technical effects corresponding to the second aspect and any implementation of the second aspect. Details are not described herein again.

According to a fifth aspect, this application provides a computer program. The computer program includes instructions for performing the method in the first aspect or any possible implementation of the first aspect, or instructions for performing the method in the second aspect or any possible implementation of the second aspect.

The fifth aspect and any implementation of the fifth aspect correspond to the first aspect and any implementation of the first aspect, or the second aspect and any implementation of the second aspect, respectively. For technical effects corresponding to the fifth aspect and any implementation of the fifth aspect, refer to technical effects corresponding to the first aspect and any implementation of the first aspect, or technical effects corresponding to the second aspect and any implementation of the second aspect. Details are not described herein again.

According to a sixth aspect, this application provides a chip. The chip includes a processing circuit and a transceiver pin. The transceiver pin and the processing circuit communicate with each other by using an internal connection path. The processing circuit performs the method according to the first aspect or any possible implementation of the first aspect, or the method according to the second aspect or any possible implementation of the second aspect, to control a receive pin to receive a signal, and to control a transmit pin to send a signal.

The sixth aspect and any implementation of the sixth aspect correspond to the first aspect and any implementation of the first aspect, or the second aspect and any implementation of the second aspect, respectively. For technical effects corresponding to the sixth aspect and any implementation of the sixth aspect, refer to technical effects corresponding to the first aspect and any implementation of the first aspect, or technical effects corresponding to the second aspect and any implementation of the second aspect. Details are not described herein again.

According to a seventh aspect, this application provides a system. The system includes a first electronic device and a second electronic device, an operating system of the first electronic device is a Windows system, and an operating system of the second electronic device is an Android system.

The first electronic device and the second electronic device may perform the method in the first aspect or any possible implementation of the first aspect, or perform the method in the second aspect or any possible implementation of the second aspect, so as to implement cross-device window dragging.

The seventh aspect and any implementation of the seventh aspect correspond to the first aspect and any implementation of the first aspect, or the second aspect and any implementation of the second aspect, respectively. For technical effects corresponding to the seventh aspect and any implementation of the seventh aspect, refer to technical effects corresponding to the first aspect and any implementation of the first aspect, or technical effects corresponding to the second aspect and any implementation of the second aspect. Details are not described herein again.

### BRIEF DESCRIPTION OF DRAWINGS

FIG. 1A~FIG. 1D are example schematic diagrams of a document dragging scenario in a keyboard and mouse sharing scenario;
FIG. 2A~FIG. 2C are example schematic diagrams of a window dragging scenario in a keyboard and mouse sharing scenario;
FIG. 3A~FIG. 3E are example schematic diagrams of implementing window dragging in a keyboard and mouse sharing scenario;
FIG. 4A~FIG. 4C are example schematic diagrams of a sidebar style corresponding to an extended mode in different states of a floating window on an Android device after an extended connection is established between a Windows device and an Android device;
FIG. 5 is an example schematic diagram of operating a taskbar corresponding to a control 50a-4 on a floating window 50a;
FIG. 6A and FIG. 6B are example schematic diagrams of scaling down and scaling up a floating window 50a;
FIG. 7A and FIG. 7B are example schematic diagrams of a change of a floating window 50a after an Android device rotates from a landscape state to a portrait state;
FIG. 8A and FIG. 8B are example schematic diagrams of a software architecture of a Windows device;
FIG. 9A and FIG. 9B are example schematic diagrams of a software architecture of an Android device;
FIG. 10A and FIG. 10B are example sequence diagrams of interaction between functional modules involved when a Windows device and an Android device implement a cross-device window dragging method according to an embodiment of this application;
FIG. 11A to FIG. 11C are example sequence diagrams of interaction between functional modules involved when the Windows device in FIG. 10A and FIG. 10B implements a cross-device window dragging method according to an embodiment of this application;
FIG. 12 is an example schematic diagram of a relationship between a screen of a Windows device and a canvas for compositing and drawing;
FIG. 13 is an example flowchart of calculating a hidden position of a window 20a;
FIG. 14A and FIG. 14B are example schematic diagrams of a hidden position of a window 20a;
FIG. 15 is an example sequence diagram of interaction between functional modules involved when the Android device in FIG. 10A and FIG. 10B implements a cross-device window dragging method according to an embodiment of this application;
FIG. 16A(1) to FIG. 16A(3) are other example sequence diagrams of interaction between functional modules involved when an Android device implements a cross-device window dragging method according to an embodiment of this application;
FIG. 16B is an example schematic diagram of determining an aspect ratio of an extension screen of different sizes;
FIG. 17A to FIG. 17E are example schematic diagrams of changes in interfaces of a Windows device and an Android device in a process of dragging a window 20a to the Android device for the first time when a collaboration function is not enabled, based on a cross-device window dragging method provided in an embodiment of this application; and
FIG. 18A to FIG. 18D are example schematic diagrams of changes in interfaces of a Windows device and an Android device in a process of dragging a window 70a to the Android device when a collaboration function is enabled and a floating window 50a is displayed, based on a cross-device window dragging method provided in an embodiment of this application.

### DESCRIPTION OF EMBODIMENTS

The technical solutions in the embodiments of this application are clearly and completely described below with reference to the accompanying drawings in the embodiments of this application. Clearly, the described embodiments are some rather than all of the embodiments of this application. All other embodiments obtained by persons of ordinary skill in the art based on the embodiments of this application without creative efforts shall fall within the protection scope of this application.

In this specification, the term "and/or" is merely used to describe an association relationship between associated objects, and indicates that three relationships may exist. For example, A and/or B may indicate the following three cases: Only A exists, both A and B exist, and only B exists.

The terms "first", "second", and the like in the specification and claims of the embodiments of this application are used to distinguish between different objects, and are not used to describe a particular order of the objects. For example, a first target object, a second target object, and the like are used to distinguish between different target objects, and are not used to describe a particular order of the target objects.

In the embodiments of this application, words such as "example" or "for example" are used to represent giving an example, an illustration, or a description. Any embodiment or design solution described as an "example" or "for example" in embodiments of this application should not be explained as being more preferred or having more advantages than other embodiments or design solutions. Exactly, use of the words such as "example" or "for example" is intended to present a related concept in a specific manner.

In the description of the embodiments of this application, unless otherwise stated, "a plurality of" means two or more. For example, a plurality of processing units refer to two or more processing units, and a plurality of systems refer to two or more systems.

With popularity of electronic devices, more users have a plurality of (at least two) electronic devices. To help a user to simultaneously use a plurality of electronic devices for office and entertainment, a keyboard and mouse sharing function is favored by more users. Based on the keyboard and mouse sharing function, electronic devices such as a mobile phone and a tablet that do not have or are not connected to an input/output (Input/Output, I/O) device such as a keyboard or a mouse may share a keyboard, a mouse, or a touchpad of a computer.

Specifically, in this application, the electronic device that does not have or is not connected to an I/O device specifically refers to an Android device (an electronic device with an operating system being an Android system), and the computer specifically refers to a Windows device (an electronic device with an operating system being a Windows system).

In other words, the Android device and the Windows device that have a keyboard and mouse sharing function may establish a keyboard and mouse connection, so that a mouse of the Windows device can freely traverse between the Android device and the Windows device. In this way, by manipulating a same mouse, a user can use applications, view and edit files, and perform similar operations in different electronic devices.

For establishment of a keyboard and mouse sharing connection, in some possible implementations, for example, the keyboard and mouse sharing connection may be established by placing the Android device that needs to establish a keyboard and mouse sharing connection next to the Windows device, and then moving a mouse pointer of the Windows device to a side edge of a screen of the Windows device, and tapping the side edge of the screen of the Windows device for two consecutive times.

For example, in some other possible implementations, for example, a keyboard and mouse sharing connection may be established between the Windows device and the Android device that is placed next to the Windows device by placing the Android device that needs to establish a keyboard and mouse sharing connection next to the Windows device, and then entering a computer manager in the Windows device, and further using a keyboard and mouse sharing entry in a smart interconnection directory in the computer manager.

It should be understood that the foregoing description is merely an example listed to better understand the technical solution of this embodiment, and is not used as a unique limitation on this embodiment. For specific implementation details of establishing a keyboard and mouse sharing connection between the Android device and the Windows device, refer to an existing keyboard and mouse sharing document. Details are not described herein again.

In addition, it should be noted that, after the keyboard and mouse sharing connection between the Android device and the Windows device is established, that is, when the Android device and the Windows device are in the keyboard and mouse sharing scenario, the mouse of the Windows device can freely traverse between the Android device and the Windows device. In some possible implementation scenarios, the user may further manipulate the mouse of the Windows device, so as to implement dragging and transmission of a picture and a document in different electronic devices. For example, the user may transmit a document in the Windows device to the Android device in a form of dragging by using the mouse of the Windows device.

In addition, it should be further noted that, after the foregoing dragging and transmission of the document are completed, the document not only exists in the Windows device, but also exists in the Android device, so that the user can view the document in both the Window device and the Android device.

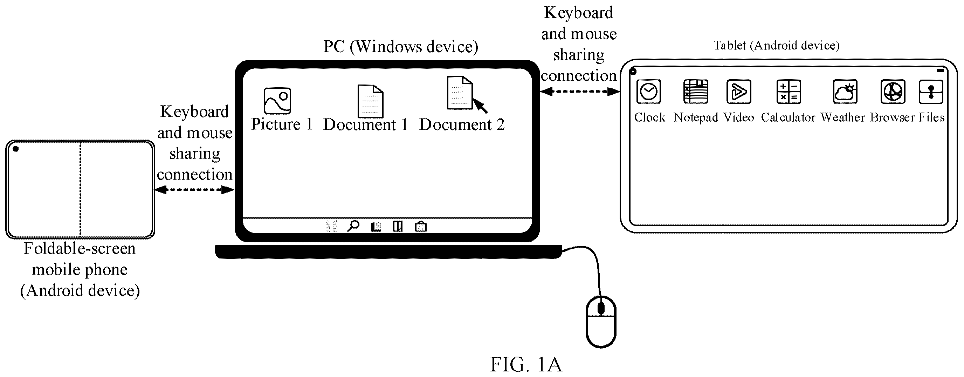

To better understand the foregoing dragging and transmission of the document by using the mouse in the Windows device, the following provides specific description with reference to FIG. 1A~FIG. 1D.

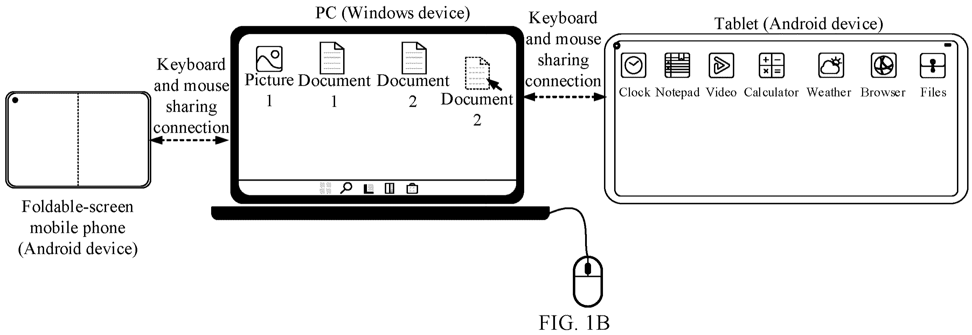

Referring to FIG. 1A, for example, this embodiment is described by using an example in which the Windows device is a PC and Android devices that establish a keyboard and mouse sharing connection to the PC are respectively a tablet and a foldable-screen mobile phone. As shown in FIG. 1A, when a user uses a mouse of the PC to operate a document 2 placed on a desktop of the PC, for example, moves a cursor of the mouse over the document 2, and presses a left mouse button to drag the document 2, in a keyboard and mouse sharing scenario, as the user performs an operation of pressing the left mouse button to drag an icon of the document 2, the icon of the document 2 moves with the mouse cursor, for example, moves from a position shown in FIG. 1A to a position shown in FIG. 1B.

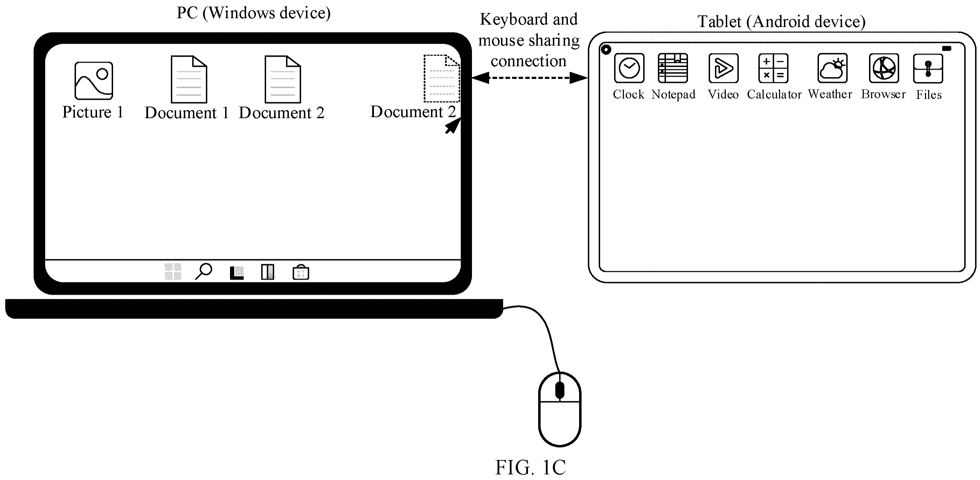

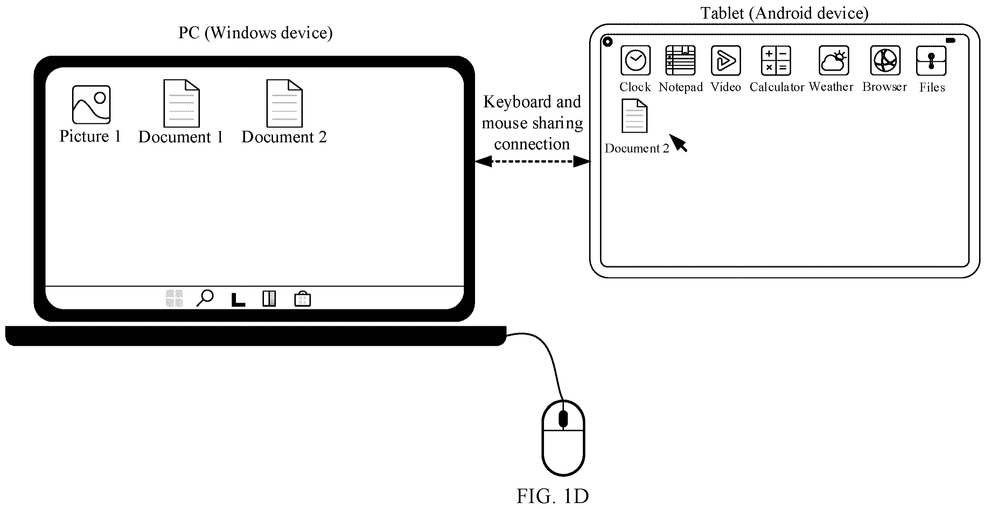

For example, if the user continues to press and hold the left mouse button to drag the icon of the document 2, when the mouse cursor moves to a side edge of a screen of the PC, for example, a right side edge of the screen in FIG. 1C, the document 2 is transmitted to the tablet by using the keyboard and mouse sharing connection between the PC and the tablet, that is, the icon of the document 2 is displayed on a screen of the tablet, as shown in FIG. 1D. Meanwhile, the icon of the document 2 is still displayed on the screen of the PC.

In other words, currently, in the keyboard and mouse sharing scenario, the user can drag and transmit pictures and documents in different electronic devices by manipulating one mouse. If the user wants to drag an open document, the user needs to first close a window of the document by using close control in a title bar of the window in which the document is located, and then drag the document to another electronic device in a dragging manner shown in FIG. 1A to FIG. 1D. In other words, the currently opened window cannot be dragged from the Windows device to the Android device, that is, cross-device window dragging cannot be performed.

In view of this, this application provides a cross-device window dragging method. Based on the cross-device window dragging method provided in this application, cross-device window dragging can be implemented in a keyboard and mouse sharing scenario, especially dragging a window in a Windows device into an Android device.

For the cross-device window dragging mentioned in this application, changes presented on screens of the Windows device and the Android device are shown in FIG. 2A~FIG. 2C.

Referring to FIG. 2A, for example, an example in which the Windows device is a PC and the Android device that establishes a keyboard and mouse sharing connection to the PC is a tablet is still used. In the keyboard and mouse sharing scenario shown in FIG. 2A, when the user operates the mouse of the PC to open the document 2 on the PC, and moves the cursor of the mouse (a mouse cursor of an arrow style shown in FIG. 2A) to a title bar of a window corresponding to the document 2, and presses the left mouse button and drags the cursor toward the right side edge of the screen of the PC. The window of the document 2 moves with the cursor of the mouse toward the right side edge of the screen of the PC.

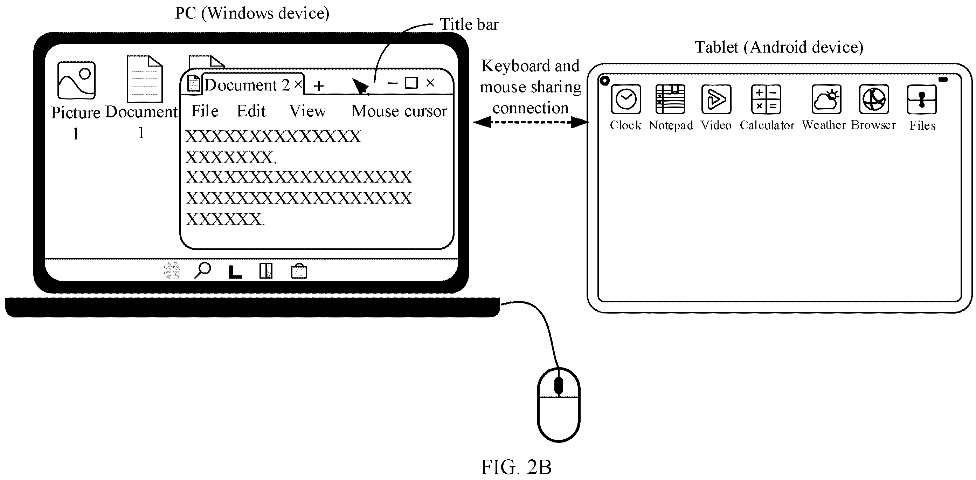

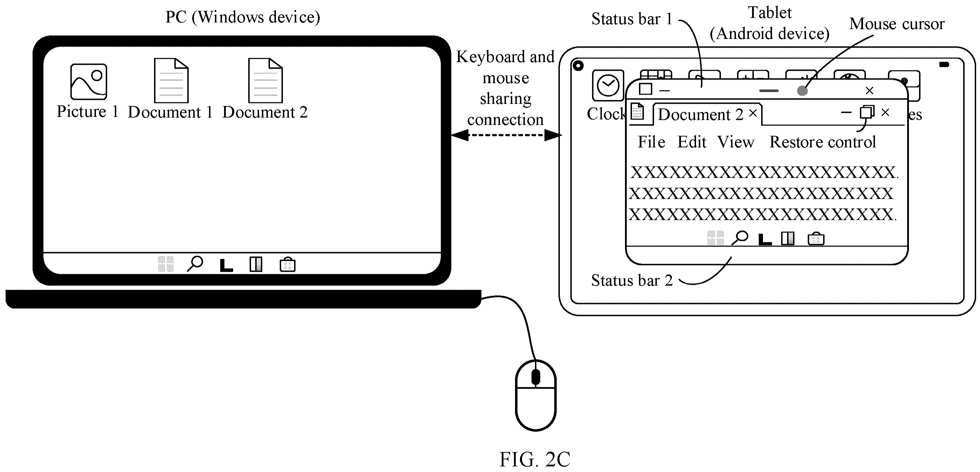

Referring to FIG. 2B, for example, when the window of the document 2 moves with the cursor of the mouse to the right side edge of the screen of the PC, if the user continues to press and hold the left mouse button and move the cursor to the right, based on the cross-device window dragging method provided in this application, the window of the document 2 in the PC is dragged onto the screen of the tablet that is located on the right side of the PC and that establishes a keyboard and mouse sharing connection to the PC, as shown in FIG. 2C. To be specific, based on the cross-device window dragging method provided in this application, the window of the document 2 displayed on the PC is displayed on the screen of the tablet in a form of a floating window. In this case, the window of the document 2 is no longer displayed on the screen of the PC.

Still referring to FIG. 2C, for example, after the window of the document 2 traverses from the PC to the tablet, the mouse connected to the PC also traverses to the tablet. In other words, the mouse cursor traverses from the PC to the tablet. In a possible implementation, after the mouse cursor traverses from the PC to the tablet, the displayed mouse cursor may be of a dot style shown in FIG. 2C. In addition, when the traversal is implemented for the first time, the mouse cursor may be located on a status bar 1 of a floating window displayed on the tablet.

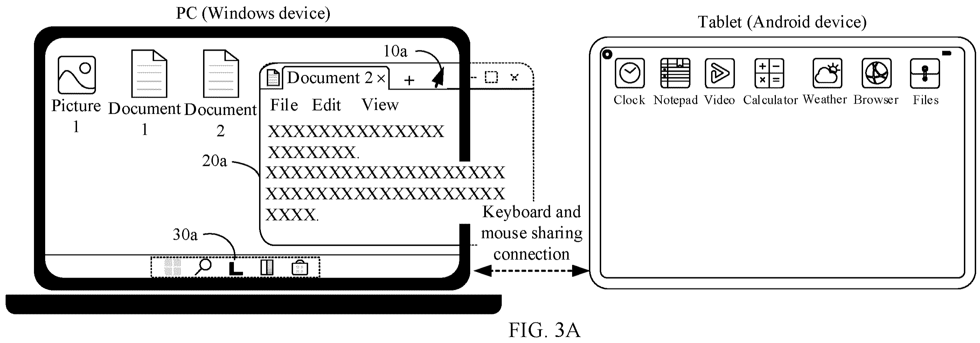

For details about switching of styles of the mouse cursor at different positions, arrangement of an initial position, and functions of the status bar 1 and the status bar 2 shown in FIG. 3A, refer to the following embodiments. Details are not described herein.

Therefore, when the Windows device and the Android device establish a keyboard and mouse sharing connection, that is, are in a keyboard and mouse sharing scenario, and when the user starts a plurality of applications by using the Windows device such as the PC mentioned in the foregoing embodiments, and needs to simultaneously use these applications, for example, view content in windows corresponding to these applications, based on the cross-device window dragging method provided in this application, drag monitoring may be performed on windows corresponding to applications/documents on the PC, and mouse traversal may be controlled in cooperation with keyboard and mouse sharing. During the mouse traversal, a position at which the window moves out of the screen of the PC is calculated, and information about the window is transmitted to the Android device, for example, the tablet mentioned in the foregoing embodiments. When the window is released on the tablet (the user releases the pressing of the left mouse button), a floating window is started on the tablet as an extension screen of the PC, and the window of the document 2 mentioned in the foregoing embodiments is displayed in the floating window, and the window of the document 2 is no longer displayed on the PC, thereby implementing experience of dragging the window on the PC onto the tablet for display.

In addition, it should be noted that, because the cross-device window dragging method provided in this application is intended to enable the Windows device in a keyboard and mouse sharing scenario to implement experience such as dual-screen or even multi-screen (three or more screens) office with the help of the Android device. In other words, the window dragged by using the mouse also needs to be displayed in a window form. Therefore, the Android device mentioned in this application may be an Android device with a relatively large screen, such as a tablet with an Android system or a foldable-screen mobile phone with an Android system. In this way, the currently used window may be displayed in a tiled manner, helping the user view content in the window.

In addition, it should be further noted that, to enable the tablet to be used as an extension screen of the PC, and to further ensure that in a keyboard and mouse sharing scenario, the window in the PC is dragged by using the mouse onto the tablet for display, during implementation of the cross-device window dragging method provided in this application, a screen collaboration function (subsequently referred to as a collaboration function for short) is further needed for cooperation.

Specifically, in embodiments of this application, the collaboration function includes: performing, by using a distributed technology, a collaboration connection between devices of different systems, and further using a Sink end (a receive end) as an extension screen of a Source end (a transmit end), thereby implementing experience of multi-screen office.

Based on the collaboration function, the user may implement multi-screen (at least two screens) experience. For example, for a plurality of files (documents, pictures, and the like) such as a file A and a file B at the Source end, the file A is opened at the Source end, and the file B is opened at the Sink end, so that the file A and the file B are displayed in a tiled manner, helping the user view the two files at the same time.

It should be understood that the foregoing description is merely an example listed to better understand the technical solution of this embodiment, and is not used as a unique limitation on this embodiment.

In addition, it should be further noted that, collaboration modes of the collaboration function may be classified into a mirror mode and an extended mode. The so-called mirror mode may be understood as that content displayed in the floating window displayed on the tablet is totally the same as that displayed on the screen of the PC. The so-called extended mode may be understood as displaying, as an extension in the floating window displayed on the tablet, content that is not displayed on the screen of the PC.

On this basis, to achieve an effect of dragging the window corresponding to the document 2 on the PC onto the tablet for display, the extended mode in the collaboration modes is used in this application.

To better understand a process of starting to drag the window from the Windows device, performing the collaboration connection between the Android device and the Windows device, starting the extended mode of the collaboration function, and further displaying, on the screen of the Android device, the window dragged from the Windows device, the following describes in detail changes in the screens of the Windows device and the Android device in this process with reference to the accompanying drawings.

Still, an example in which the Windows device mentioned in the foregoing embodiments is the PC, the window to be dragged is the window of the document 2 displayed on the PC, and the Android device to which the window is dragged is the tablet is used. For ease of description, in this embodiment, a cursor with an arrow shape corresponding to the mouse on the PC is referred to as a cursor 10a; a cursor with a dot shape corresponding to the mouse on the tablet after the mouse traverses to the tablet is referred to as a cursor 10b; a window corresponding to the document 2 on the PC is referred to as a window 20a; a window corresponding to the document 2 on the tablet is referred to as a window 20b; a taskbar displayed at a bottom of the screen of the PC is referred to as a taskbar 30a; a floating window displayed after the mouse traverses to the tablet and before the collaboration function is started is referred to as a floating window 40a; a floating window (equivalent to an extension screen of the PC) replacing the floating window 40a after the collaboration function is started is referred to as a floating window 50a; a taskbar 30a displayed in the floating window 50a is represented as a taskbar 30b; a status bar located on a top of each of the floating window 40a and the floating window 50a is referred to as a status bar 1; and a status bar located at a bottom of each of the floating window 40a and the floating window 50a is referred to as a status bar 2.

It should be understood that the foregoing description is merely an example listed to better understand the technical solution of this embodiment, and is not used as a unique limitation on this embodiment.

In addition, it should be noted that, the keyboard and mouse sharing scenario mentioned in embodiments of this application uses an example in which the mouse that may be shared by the Windows device and the Android is the mouse connected to the PC device, as shown in FIG. 1A to FIG. 1D. The mouse is not shown in subsequent accompanying drawings.

For example, when the user presses and holds the left mouse button and drags the window 20a to the right side edge of the screen of the PC (as shown in FIG. 2B), if the user continues to press and hold the left mouse button without releasing the left mouse button, and drags the window 20a to the right, the cursor 10a gradually approaches the right side edge of the screen of the PC. To achieve an effect of traversing the window 20a from the PC to the tablet, as the cursor 10a gradually approaches the right side edge of the screen of the PC, a part of the window 20a is moved out of the screen of the PC, that is, only a part preceding a position of the cursor 10a is displayed on the screen of the PC, for example, as shown in FIG. 3A. In FIG. 3A, the cursor 10a has not moved to the right side edge of the screen of the PC, that is, the mouse has not traversed. Therefore, the tablet does not display the cursor 10b, and does not display the window 20a.

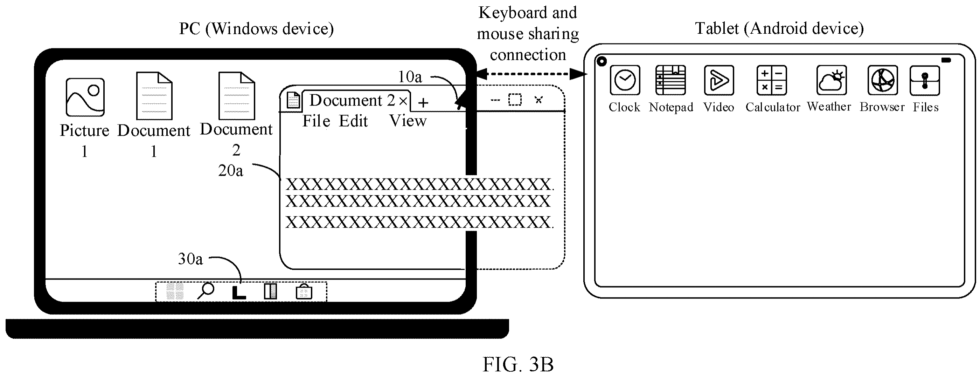

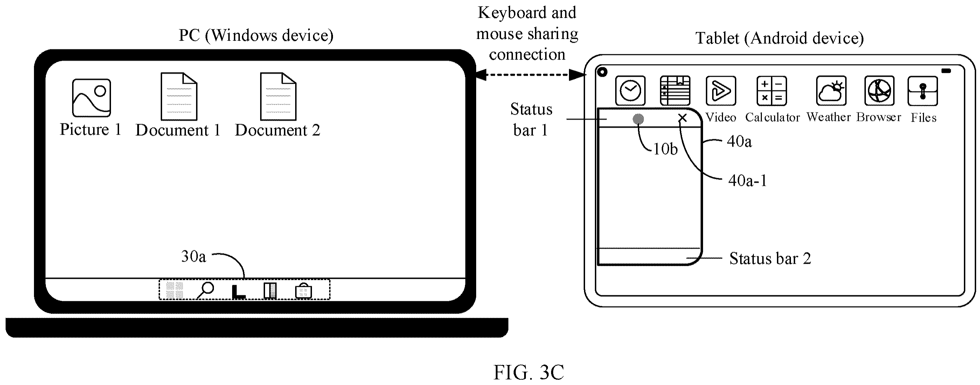

Referring to FIG. 3B, for example, the user presses and holds the left mouse button and continues to drag the window 20a. When the cursor 10a moves to the right side edge of the screen of the PC, based on a keyboard and mouse sharing connection established between the PC and the tablet, the mouse of the PC traverses from the PC to the tablet, that is, the cursor 10a traverses to the tablet, and is changed to a style of the cursor 10b. Meanwhile, approximately one third of the floating window 40a appears on the tablet, whereas the window 20a on the PC is hidden, as shown in FIG. 3C.

It should be noted that, before the user releases the left mouse button and starts the collaboration function, and the tablet further displays the floating window 50a that is used as an extension screen of the PC, the user may traverse the mouse back to the PC at any time. In this case, the dragged window 20a also returns to the screen of the PC for display. Therefore, before the collaboration function is started, the floating window 40a is first displayed in order to make the user visually feel that the window 20a traverses from the PC to the tablet. In other words, the floating window 40a is not an extension screen of the PC, and is only a floating window that is drawn and displayed on the tablet. After the floating window 50a that is used as an extension screen of the PC is started, the floating window 50a covers the floating window 40a, and the floating window 40a is destroyed.

On this basis, to prevent the user from perceiving that the floating window 40a is replaced by the floating window 50a, in some possible cases, the floating window 40a and the floating window 50a may be drawn to a same size, and the status bar 1 and the status bar 2 have a select control with a same function.

In this embodiment, an example in which a function control is set only in the status bar 1 is used for description. However, in actual application, the function control may also be set in the status bar 2 based on a service requirement.

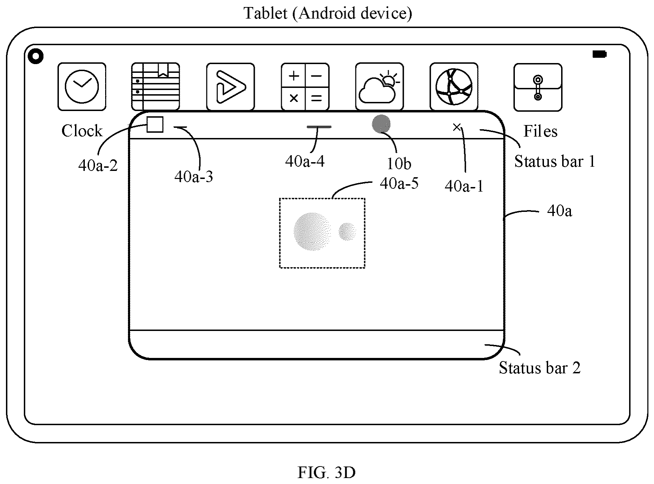

As shown in FIG. 3D and FIG. 3E, a control 40a-1 in the floating window 40a has a same function as a control 50a-1 in the floating window 50a, and both of the two controls are used to close the floating window currently displayed on the screen of the tablet. For an operation on the control 50a-1, because the collaboration function is enabled in this case, if the control is clicked, collaboration between the tablet and the PC is disconnected, that is, the tablet is no longer used as an extension screen of the PC.

Still referring to FIG. 3D and FIG. 3E, a control 40a-2 in the floating window 40a has a same function as a control 50a-2 in the floating window 50a, and both of the two controls are used to perform an operation of maximizing the floating window currently displayed on the screen of the tablet. A control 40a-3 in the floating window 40a has a same function as a control 50a-3 in the floating window 50a, and both of the two controls are used to perform an operation of minimizing the floating window currently displayed on the screen of the tablet. A control 40a-4 in the floating window 40a has a same function as a control 50a-4 in the floating window 50a, and both of the two controls are used to display a hidden taskbar on an upper edge of the current floating window.

Still referring to FIG. 3D, for example, if the user always presses and holds the left mouse button and drags the floating window 40a, and does not release the pressing until the floating window 40a is completely displayed on the screen of the tablet, when the mouse is released, the PC sends, to the tablet based on the keyboard and mouse sharing connection, an indication for releasing the window 40a. After receiving the indication for releasing the window 40a, the tablet releases the window 40a. The operation of releasing the window 40a may be understood as that the tablet injects an up event into the mouse. For specific implementation details of the operation, refer to description of step 221 in the following embodiments. Details are not described herein.

When the mouse is released and the floating window 40a is displayed on the tablet, the PC starts the collaboration function and selects the extended mode to establish a collaboration connection to the tablet. After the collaboration connection is established, the tablet creates the floating window 50a, and decompresses a collaborative image that is transmitted by the PC by using the collaboration connection, so as to display the collaborative image in a display area of the floating window 50a.

The display area of the floating window 50a is an area other than the status bar 1 and the status bar 2 in the floating window 50a.

In addition, because the floating window 50a is used as an extension screen of the PC, the taskbar 30a of the PC is displayed in the floating window 50a. Therefore, the collaborative image needs to include the window 20b and the taskbar 30b.

In addition, to make the user have better use experience, in a possible implementation, the collaborative image may be set to occupy an entire display area of the floating window 50a. In this way, the user visually sees that the window 20a is dragged to the tablet as a whole. Therefore, during generation of the collaborative image, a compositing (drawing) and rendering module in the PC specifically draws the window 20b based on the window 20a in a maximization mode. In other words, the window 20b is essentially the window 20a in the maximization mode.

For example, for the window 20a that is not displayed in the maximization mode and that is mentioned in this embodiment, function controls displayed in the title bar of the window 20a include a maximize control used to maximize display of the window 20a, as shown in FIG. 2A. The window 20b drawn based on the window 20a in the maximization mode is essentially the window 20a in the maximization mode. Therefore, in embodiments of this application, the function controls displayed in the title bar of the window 20b that is dragged to the floating window 50a of the tablet for display do not include the maximize control, but include the restore control, as shown in FIG. 3C.

In this way, after the floating window 40a is covered by the floating window 50a, the user may directly see the window 20b, as shown in FIG. 3E.

Still referring to FIG. 3D, for example, in a process of waiting for the PC to establish a collaboration connection to the tablet, and using the floating window 50a to cover the floating window 40a, the floating window 40a may further display a dynamic loading icon, such as an icon 40a-5 shown in FIG. 3D, to prompt the user that the window 20a is currently being loaded.

It should be understood that the foregoing description is merely an example listed to better understand the technical solution of this embodiment, and is not used as a unique limitation on this embodiment.

Referring to FIG. 3E, for example, because the cross-device window dragging solution provided in this embodiment does not use the entire screen of the tablet as an extension screen of the PC, but displays a floating window 50a on the tablet and then uses a display area in the floating window 50a as an extension screen of the PC. Therefore, in order not to block content in the window 20a in the floating window 50a, a sidebar that is displayed on an edge of the extension screen (generally on a left/right edge of the screen of the tablet, or generally on an upper/lower edge of the screen of the foldable-screen mobile phone) in the extended mode in the collaboration function is hidden from display. In other words, the sidebar is not displayed in the floating window 50a.

For example, in some possible implementations, a hot zone may be arranged on a right side edge of the floating window 50a. After the user moves the cursor 10b to the hot zone, the left mouse button is pressed to slide to the left, or the left mouse button is clicked/double-clicked, and then the hidden sidebar is displayed on the right side edge of the floating window 50a.

For example, in some other possible implementations, an operable control may alternatively be arranged on the right side edge of the floating window 50a, for example, a control 50a-5 shown in FIG. 3E. After the user moves the cursor 10b to the control 50a-5 and clicks the left mouse button, the hidden sidebar may be displayed on the right side edge of the floating window 50a.

It should be understood that the foregoing description is merely an example listed to better understand the technical solution of this embodiment, and is not used as a unique limitation on this embodiment. For ease of describing hiding and display of the sidebar, a form of the control 50a-5 shown in FIG. 3E is used for description in this embodiment.

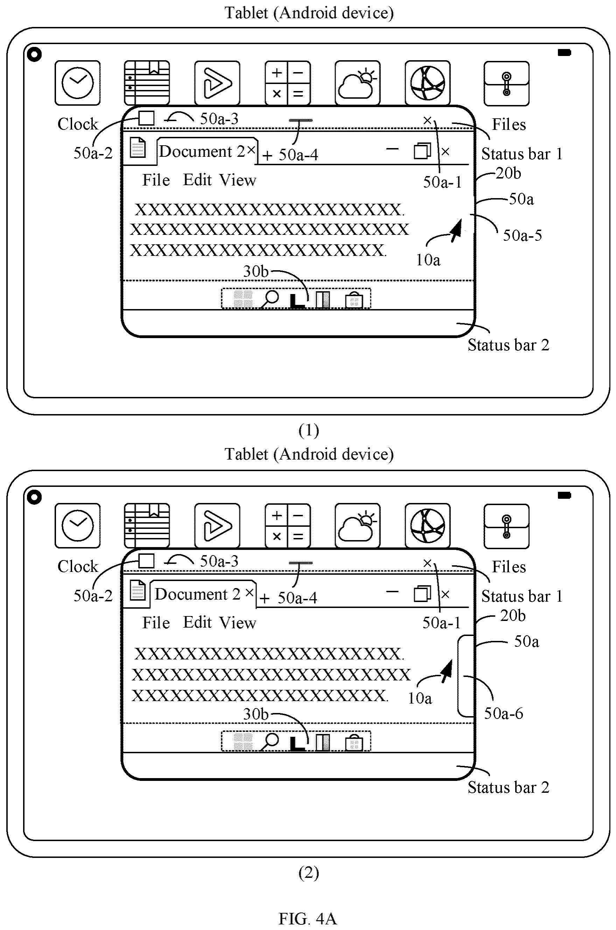

It can be learned from the foregoing definition of the cursor style that, when the cursor acts on the PC, the cursor style is a style of the cursor 10a, and when the cursor acts on the tablet, the cursor style is a style of the cursor 10b. Because the floating window 50a is used as an extension screen of the PC, when the cursor moves to the display area inside the floating window 50a, that is, an area in which the window 20b and the taskbar 30b are displayed in FIG. 4A, which is equivalent to that the cursor acts on the PC, the cursor is switched from the style of the cursor 10b to the style of the cursor 10a.

Referring to (1) in FIG. 4A, after the cursor 10a moves to the control 50a-5 and the user clicks the left mouse button, the control 50a-5 disappears, but a sidebar 50a-6 shown in (2) in FIG. 4A appears.

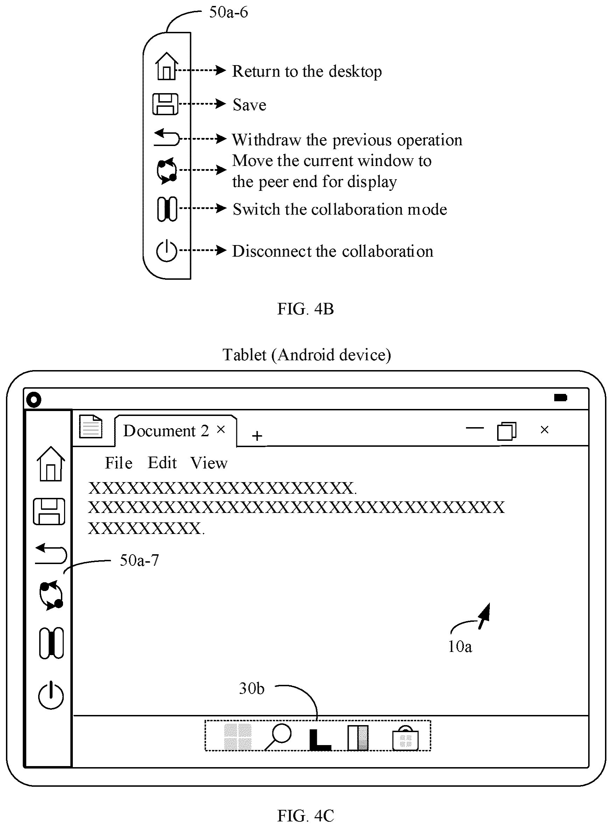

It may be understood that the sidebar 50a-6 displays a function option related to the extended mode, and the function option is not shown in the sidebar 50a-6 due to a limitation of a size of the area shown in (2) in FIG. 4A. To better understand the function options included in the sidebar, the following provides description with reference to FIG. 4B.

Referring to FIG. 4B, for example, in an optional case, the sidebar 50a-6 may include a function option used to return to a desktop, a function option used to save content on the extension screen, a function option used to withdraw a previous operation, a function option used to move a current window to a peer end for display, a function option used to perform collaboration mode switching, a function option used for port collaboration, and the like, which are not listed one by one herein. This is not limited in this embodiment.

It may be understood that, in a possible implementation, any function option in the sidebar 50a-6 may be set so that after the function option is selected, display of the sidebar 50a-6 is cancelled. In another possible implementation, the sidebar 50a-6 may alternatively be set to automatically disappear after being displayed for specified duration. In this case, the control 50a-5 may be displayed again in the floating window 50.

It should be understood that the foregoing description is merely an example listed to better understand the technical solution of this embodiment, and is not used as a unique limitation on this embodiment.

In addition, with regard to the function option for performing collaboration mode switching, when the extended mode is currently used, if the function option is selected, the collaboration mode is switched from the extended mode to the mirror mode. On the contrary, when the mirror mode is currently used, if the function option is selected, the collaboration mode is switched from the mirror mode to the extended mode. Because the mirror mode and the extended mode are different, a function option displayed in the sidebar also varies. Details may be determined based on the two collaboration modes. This is not limited in this embodiment.

Still referring to FIG. 3E, for example, if the user operates the mouse to move the cursor 10b to the control 50a-2, and clicks the left mouse button, the floating window 50a is displayed on the screen of the tablet in the maximization mode, as shown in FIG. 4C. In this case, the status bar 1 and the status bar 2 of the floating window 50a are not displayed. However, in the maximization mode, the sidebar corresponding to the current collaboration mode is displayed on the left or right side of the screen of the tablet (in this embodiment, the left side is used as an example), for example, the sidebar 50a-7 shown in FIG. 4C. Still in an example in which the current collaboration mode is the extended mode, the sidebar 50a-7 may display a same function option as the sidebar 50a-6.

Because the window 20b in the collaborative image is drawn based on the window 20a that is displayed in the maximization mode, after the floating window 50a is maximized, the collaborative image received from the PC is also enlarged as a whole. Therefore, when display of the floating window 50a is maximized, the window 20b and the taskbar 30b still occupy an entire display area of the floating window 50a, as shown in FIG. 4C.

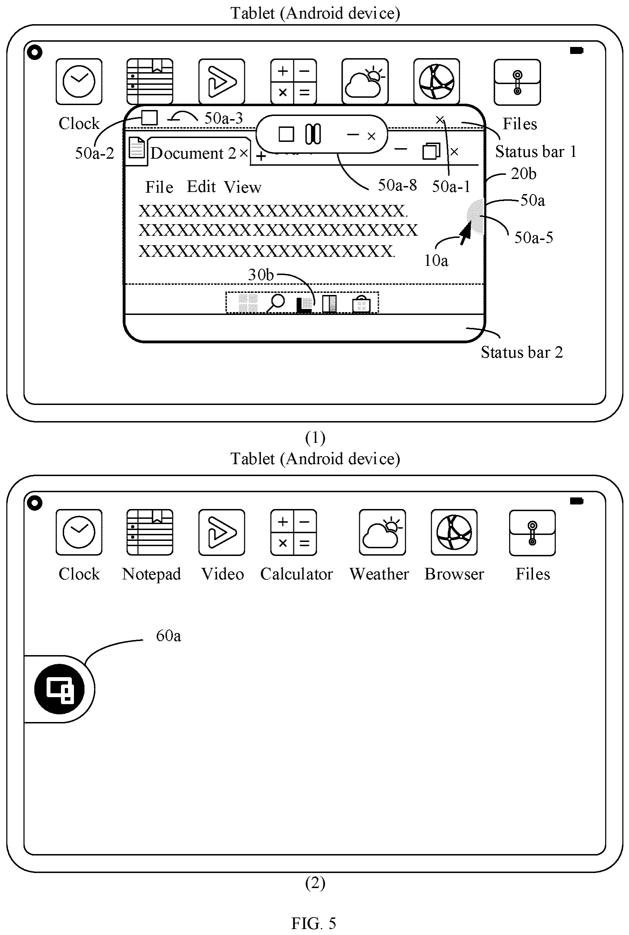

In addition, an operation on the floating window 50a may alternatively be implemented by using a function option in a taskbar corresponding to the control 50a-4. For example, after the cursor 10b moves to the control 50a-4, and the user clicks the left mouse button, the hidden taskbar may be displayed in an area in which the control 50a-4 is located, for example, a taskbar 50a-8 shown in (1) in FIG. 5.

Referring to (1) in FIG. 5, for example, in some possible implementations, the taskbar 50a-8 may include a function control that is the same as the controls 50a-1, 50a-2, and 50a-3, and a function option that is shown in the sidebar 50a-6 or the sidebar 50a-7 and that is used to perform collaboration mode switching.

For example, when the user clicks a function control that is the same as the control 50a-2 in the taskbar 50a-8, the floating window 50a is maximized, that is, the tablet displays interface content shown in (2) in FIG. 4.

For example, when the user clicks a function control that is the same as the control 50a-3 in the taskbar 50a-8, the floating window 50a is minimized. In a possible implementation, the minimized floating window is displayed in a style of a capsule 60a shown in (2) in FIG. 5. After the user clicks the capsule 60a, the floating window 50a is displayed again in an interface of the tablet, for example, in a style shown in (1) in FIG. 4.

For example, when the user clicks a function control that is the same as the control 50a-1 in the taskbar 50a-8, the tablet breaks a collaboration connection to the PC and closes the floating window 50a. To be specific, the tablet is restored to the style before the window 20 is dragged to the tablet, for example, a tablet shown in FIG. 3B.

It should be noted that, after the collaboration connection between the tablet and the PC is broken, in some possible implementations, the PC may automatically display the window 20a. In some other possible implementations, the user may click a specified position or control to display the window 20a on the screen of the PC again.

It should be understood that the foregoing description is merely an example listed to better understand the technical solution of this embodiment, and is not used as a unique limitation on this embodiment.

For example, after the user clicks the function option that is in the taskbar 50a-8 and that is used to perform collaboration mode switching, the collaboration mode is switched, and content displayed in the floating window 50a changes accordingly with the switching of the collaboration mode. For example, in the case of switching to the mirror mode, the floating window 50a displays the current desktop of the PC. In the case of switching back to the extended mode, a window dragged into the floating window 50a, such as the foregoing window 20a, is displayed.

It can be learned from the foregoing description that the taskbar 50a-8 is displayed after the control 50a-4 is clicked, and the control 40a-4 and the control 50a-4 in the floating window 40a have a same function. Therefore, to prevent the cursor 10b displayed in the interface of the tablet from clicking on the control 40a-4 when the mouse just traverses from the PC to the tablet, when the cursor 10a traverses from the PC to the tablet, the cursor 10b appearing on the tablet may be displayed in the status bar 1 of the floating window 40a, and is located at a position away from the control 40a-4, as shown in FIG. 3C.

It should be understood that the foregoing description is merely an example listed to better understand the technical solution of this embodiment, and is not used as a unique limitation on this embodiment.

In addition, it should be further noted that in this embodiment, the user may further scale up or scale down, by manipulating the mouse, the floating window 50a displayed on the tablet.

For example, after the user moves the cursor to an edge of the floating window 50a, that is, removes the display area of the floating window 50a, the cursor style is switched to the cursor 10b again.

Referring to (1) in FIG. 6A, for example, after the cursor 10b moves to the lower right corner of the floating window 50a, when the user presses and holds the left mouse button and drags the floating window 50a in an arrow direction, the floating window 50a is scaled down as a whole. After the floating window 50a is dragged to the position shown in (2) in FIG. 6A, the user releases the pressing of the left mouse button, and the floating window 50a is scaled down to the size shown in (2) in FIG. 6A, and stays at the position.

Referring to (1) in FIG. 6B, for example, after the cursor 10b moves to the lower right corner of the floating window 50a, when the user presses and holds the left mouse button and drags the floating window 50a in an arrow direction, the floating window 50a is scaled up as a whole. After the floating window 50a is dragged to the position shown in (2) in FIG. 6B, the user releases the pressing of the left mouse button, and the floating window 50a is scaled up to the size shown in (2) in FIG. 6B, and stays at the position.

In addition, it should be further noted that, to ensure an experience effect, in the window dragging method provided based on this embodiment, after the tablet that displays the floating window 50a rotates from a landscape state to a portrait state, for example, rotates from an arrow direction in FIG. 7A to FIG. 7B, the floating window 50a also rotates as a whole, and the size of the floating window 50a is adjusted with a horizontal distance in the portrait state.

In addition, in some possible implementations, with regard to rotating from the landscape state to the portrait state, or rotating from the portrait state to the landscape state, the floating window 50a is displayed in the middle relative to the left and right sides. However, after the user performs dragging and movement, the floating window 50a stays at a position to which the user performs dragging.

It should be understood that the foregoing description is merely an example listed to better understand the technical solution of this embodiment, and is not used as a unique limitation on this embodiment.

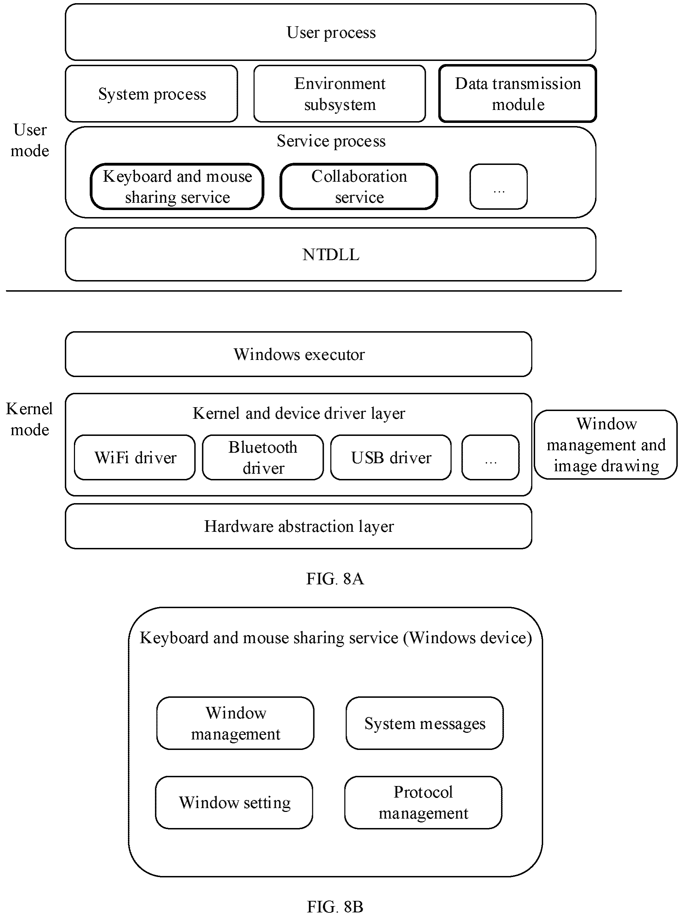

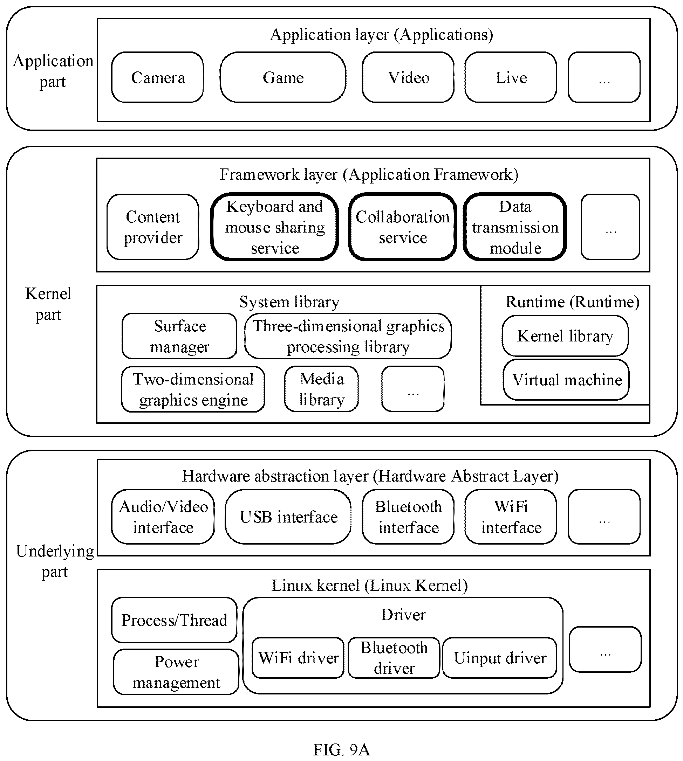

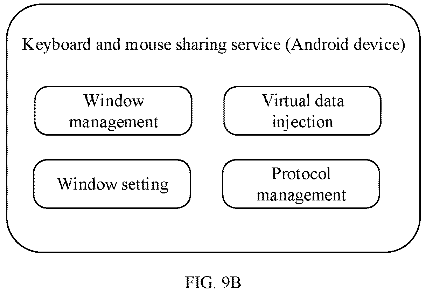

To better understand the cross-device window dragging method provided in this application, the following separately describes, with reference to FIG. 8A, FIG. 8B, FIG. 9A, and FIG. 9B, a software architecture of the Windows device and a software architecture of the Android device that implement the cross-device window dragging method.

It should be noted that in actual application, regardless of the Windows device or the Android device, a software system (an operating system) thereof may use a layered architecture, an event-driven architecture, a microkernel architecture, a microservice architecture, or a cloud architecture. In addition, each of the Windows device and the Android device may be divided into a user mode and a kernel mode.

FIG. 8A shows an example software architecture of the Windows device.

As shown in FIG. 8A, from a perspective of the user mode, an NTDLL, a service process, a system process, an environment subsystem, a data transmission module, a user process, and the like may be successively included from bottom to top. Specifically, in this embodiment, cross-device window dragging is implemented mainly depending on a keyboard and mouse sharing service and a collaboration service in the service process, and a data transmission mode. The keyboard and mouse sharing service (process) is a service process for implementing the foregoing keyboard and mouse sharing function. A collaboration service (process) is a service process for implementing the foregoing collaboration function, that is, is used to establish a collaboration connection between the Windows device and the Android device. The data transmission module is responsible for transmission of signaling and data. In an implementation, when both the Windows device and the Android device are electronic devices produced by Honor, the data transmission module is, for example, MagicLink.

For functions of other processes, systems, NTDLLs, and the like in the user mode, refer to description of an existing Windows system architecture. Details are not described herein again.

In addition, it should be noted that, in some possible implementations, the user process may include a process corresponding to an application similar to the foregoing computer manager. A process corresponding to the computer manager (for example, referred to as a service management process) may be used to implement management of various services and scheduling of various virtualization services, for example, scheduling of a keyboard and mouse sharing service and a collaboration service in the service process.

In addition, it should be further noted that in this embodiment, in an original keyboard and mouse sharing scenario, cross-device window dragging is implemented and the keyboard and mouse sharing service is improved. The improved keyboard and mouse sharing service includes at least four functional modules shown in FIG. 8B.

Referring to FIG. 8B, for example, the keyboard and mouse sharing service in the Windows device includes a window management module, a system message module, a window setting module, and a protocol management module.

The window management module is configured to manage a dragged window, manage a window message, identify a position, and so on. The window setting module is configured to calculate positions of window traversal, hiding, and displaying. The system message is used to be responsible for a message indicating that the mouse starts dragging a window or stops dragging a window. The protocol management is used to packetize or depacketize related data such as a command and a window parameter for window dragging.

It should be noted that, in Windows programming, after each Windows application starts to be executed, the system creates a message queue for the application. The message queue is used to store information about a window created by the application. For example, when the user presses the mouse in a specific window, a WM_RBUTTONDOWN message is generated in this case, and the system automatically puts the message into a message queue of an application to which the current window belongs, and waits for the application to end. The Windows successively puts the generated messages into the message queue, and the application continuously reads the messages from the message queue through one message loop, and makes a response. When the mouse moves and drags the window to move, the system generates a system message indicating window movement, that is, a message managed by the foregoing system message module.

Still referring to FIG. 8A, for example, from a perspective of the kernel mode, a hardware abstraction layer, a kernel and device driver layer, a window management and image drawing module, and a Windows executor may be successively included from bottom to top. Specifically, in the technical solution provided in this embodiment, the cross-device window dragging not only needs to rely on the keyboard and mouse sharing function, but also needs to rely on the collaboration function. However, both of the two functions need to rely on WiFi or Bluetooth. Therefore, functional modules related to WiFi and Bluetooth are required, such as WiFi driving and Bluetooth driving.

In addition, for a Windows device that does not have an I/O device, an external keyboard, an external mouse, or the like further needs to be implemented with the help of a USB interface, Bluetooth, or WiFi. Therefore, in addition to requiring the functional module related to WiFi and Bluetooth, a functional module related to USB, such as a USB driver, is further required.

For descriptions of the Windows executor, other functional modules in the kernel and device driver layer, the window management and drawing module, the hardware abstraction layer, and the like in the kernel mode, refer to description of an existing Windows system architecture. Details are not described herein again.

The software architecture of the Windows device is described above. It may be understood that the layers in the software Windows device shown in FIG. 8A and FIG. 8B, and the functional modules included in the layers do not constitute a specific limitation on the Windows device. In some possible implementations, the Windows device may include more or fewer layers than those shown in the figure, and each layer may include more or fewer components. This is not limited in this application.

FIG. 9A shows an example software architecture of the Windows device.

As shown in FIG. 9A, a layered architecture of the Android device divides software into several layers, and each layer has a clear role and task. Layers communicate with each other through a software interface. In some implementations, the Android system is divided into five layers: an application layer (Application, APP layer), a framework layer (Application Framework, FWK layer), an Android runtime (Android runtime) and system library, a hardware abstraction layer (Hardware Abstract Layer, HAL layer), and a kernel layer (Linux Kernel, kernel layer) from top to bottom.

The APP layer may include a series of application packages. As shown in FIG. 9A, the application packages may include applications such as a camera, a game, a video, and live streaming, which are not listed one by one herein. This is not limited in this application.

The FWK layer provides an application programming interface (application programming interface, API) and a programming framework for the applications at the APP layer. In some implementations, these programming interfaces and programming frameworks may be described as functions. As shown in FIG. 9A, the FWK layer may include functions such as a content provider, a keyboard and mouse sharing service, a collaboration service, and a data transmission module, which are not listed one by one herein. This is not limited in this application.

Functions of the collaboration service and the data transmission module in the Android device are the same as functions of the collaboration service and the data transmission module in the Windows device, and details are not described herein again.

The keyboard and mouse sharing service in the Android device is different from the keyboard and mouse sharing service in the Windows device. The keyboard and mouse sharing service in the Android device mainly includes the following functional modules: a window management module, a window setting module, a protocol management module, a virtual data injection module, and the like, as shown in FIG. 9B. The window management module, the window setting module, and the protocol management module have the same functions as the window management module, the window setting module, and the protocol management module in the Windows device, and details are not described herein again.

When the mouse traverses from the Windows device to the Android device, the user does not release the pressing of the left mouse button and then presses the left mouse button again. Therefore, the cursor 10b (as shown in FIG. 3B) displayed on the status bar 1 of the foregoing floating window 40a does not have a corresponding down event on the tablet side. In this way, when the user releases the mouse, and the PC sends a window release indication to the tablet, the tablet cannot detect an up event, so as to release the floating window 40a. To enable the tablet to release the floating window 40a, in this embodiment, when the mouse traverses, the keyboard and mouse sharing service in the tablet actively registers a down event by using the virtual data injection module. In this way, when the user releases the pressing of the left mouse button subsequently, an up event is detected.

Still referring to FIG. 9A, for example, the Android Runtime includes a kernel library and a virtual machine. The Android Runtime is responsible for scheduling and management of the Android system.

The kernel library includes two parts: One part is a functional function that needs to be invoked by a java language, and the other part is a kernel library of Android.

The APP layer and the FWK layer run in the virtual machine. The virtual machine executes java files of the application layer and the application framework layer as binary files. The virtual machine is configured to perform functions such as object lifecycle management, stack management, thread management, security and exception management, and garbage collection.

Still referring to FIG. 9A, for example, the system library may include a plurality of functional modules, for example, a surface manager (surface manager), a media library (Media Libraries), a three-dimensional (3D) graphics processing library (for example, OpenGL ES), and a two-dimensional (2D) graphics engine (for example, SGL).

The surface manager is configured to manage a display subsystem and provide fusion of 2D and 3D layers for a plurality of applications. The media library supports playback and recording in a plurality of common audio and video formats, a still image file, and the like. The media library may support a plurality of audio and video coding formats, for example, MPEG4, H.264, MP3, AAC, AMR, JPG, and PNG. The three-dimensional graphics processing library is configured to implement three-dimensional graphics drawing, image rendering and compositing, layer processing, and the like.

It may be understood that, the foregoing 2D graphics engine is a drawing engine for 2D drawing.

Still referring to FIG. 9A, for example, the HAL layer is an interface layer between an operating system kernel (a kernel layer) and a hardware circuit, and an objective of the HAL layer is to isolate the FWK layer from the kernel, so that the Android does not rely excessively on the kernel, thereby ensuring that development of the FWK may be performed without considering a driver.

Still referring to FIG. 9A, for example, the HAL layer may include various interfaces, such as an audio/video interface, a USB interface, a Bluetooth interface, and a WiFi interface, which are not listed one by one herein. This is not limited in this application.

Still referring to FIG. 9A, for example, the kernel layer in the Android system is a layer between hardware and software. The kernel layer may include various processes/threads, a power management module, and various drivers, such as a WiFi driver, a Bluetooth driver, and a kernel driver (Uinput driver) that is used to simulate a user input event.

The software architecture of the Android device is described above. It may be understood that the layers in the software Android device shown in FIG. 9A and FIG. 9B, and the functional modules included in the layers do not constitute a specific limitation on the Android device. In some possible implementations, the Android device may include more or fewer layers than those shown in the figure, and each layer may include more or fewer components. This is not limited in this application.

To better understand a specific implementation of the cross-device window dragging method provided in this application, the following describes, with reference to accompanying drawings, in detail the cross-device window dragging method provided in this application from a perspective of interaction logic of a keyboard and mouse sharing service (an included functional module), a collaboration service, and a data transmission module in the Windows device, and interaction logic of a keyboard and mouse sharing service (an included functional module), a collaboration service, and a data transmission module in the Android device.

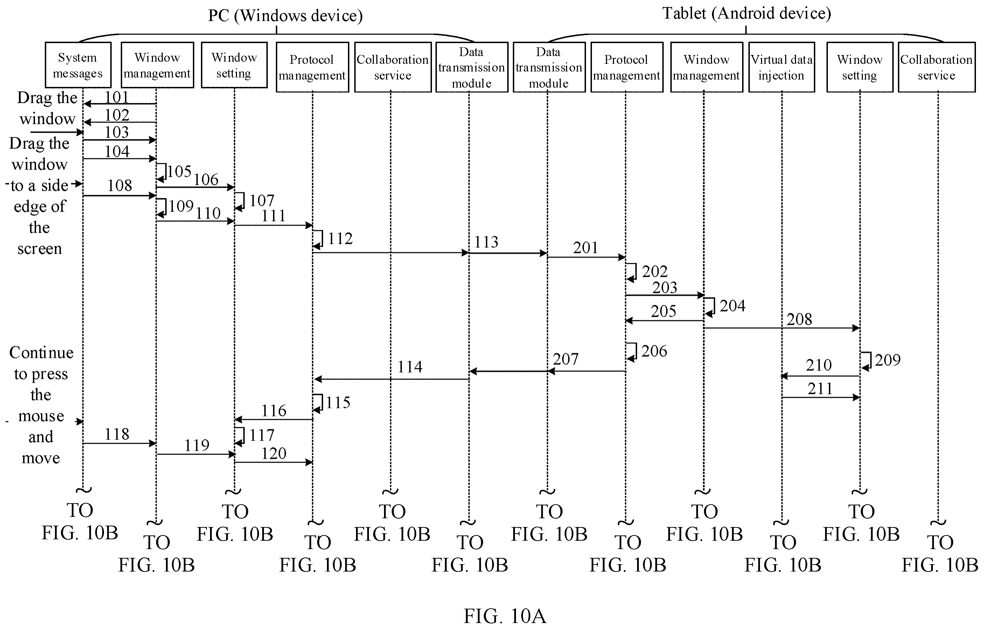

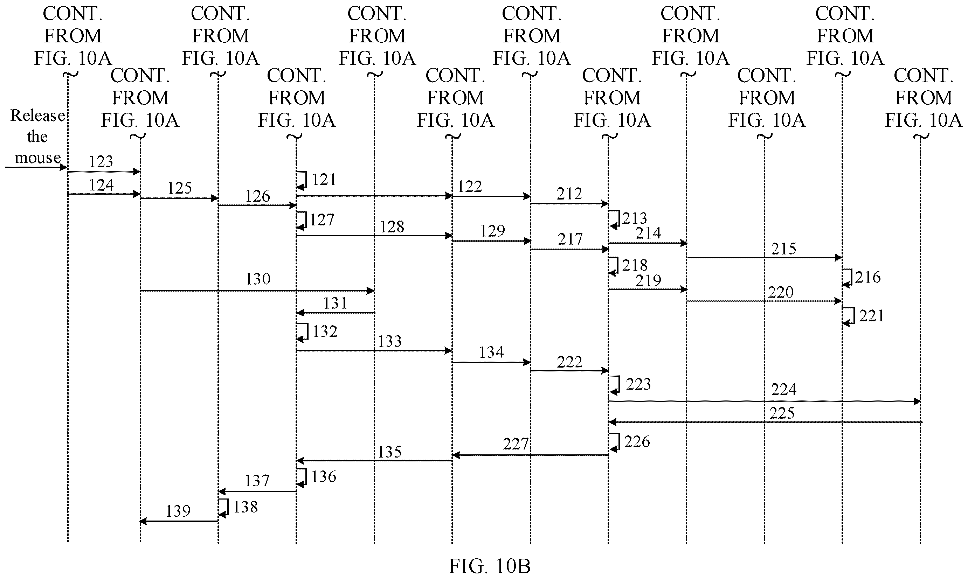

Referring to FIG. 10A and FIG. 10B, to implement the cross-device window dragging method provided in this application, a system message module, a window management module, a window setting module, a protocol management module, a collaboration service, and a data transmission module in the Windows device need to cooperate with each other, and perform interaction processing based on a sequence from step 101 to step 139 shown in FIG. 10A and FIG. 10B. A data transmission module, a protocol management module, a window setting module, a virtual data injection module, a window setting module, and a collaboration service in the Android device need to perform interaction processing based on a sequence from step 201 to step 227 shown in FIG. 10A and FIG. 10B. For sequence logic between an operation processed by the Windows device and an operation processed by the Android device, refer to FIG. 10A and FIG. 10B.

To help distinguish functional modules in the Windows device from functional modules in the Android device, in the following embodiments, the system message module, the window management module, the window setting module, the protocol management module, the collaboration service, and the data transmission module in the Windows device are respectively represented as a Windows system message module, a Windows window management module, a Windows window setting module, a Windows protocol management module, a Windows collaboration service, and a Windows data transmission module; the window management module, the window setting module, the protocol management module, the collaboration service, the data transmission module, and the virtual data injection module in the Android device are respectively represented as an Android window management module, an Android window setting module, an Android protocol management module, an Android collaboration service, an Android data transmission module, and an Android virtual data injection module.

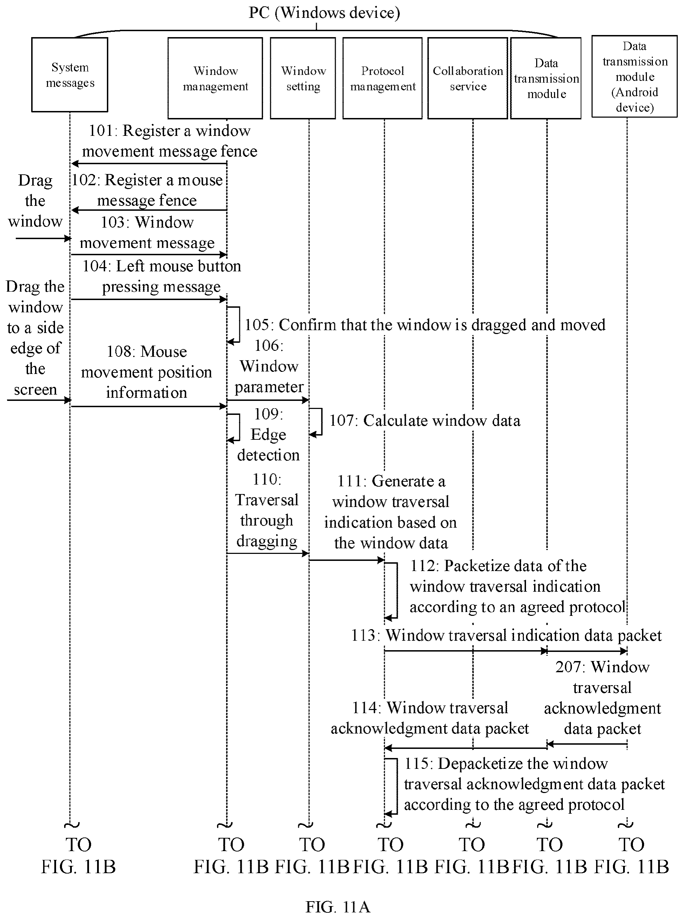

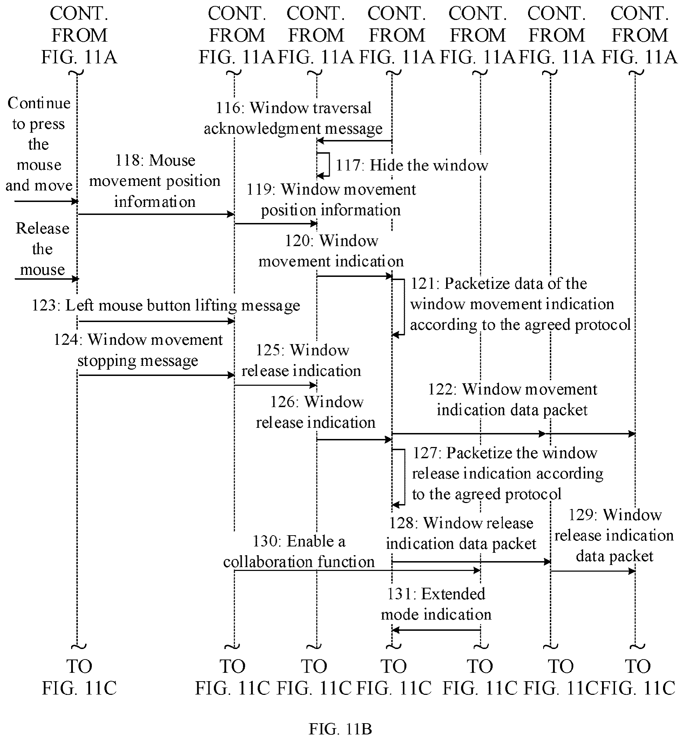

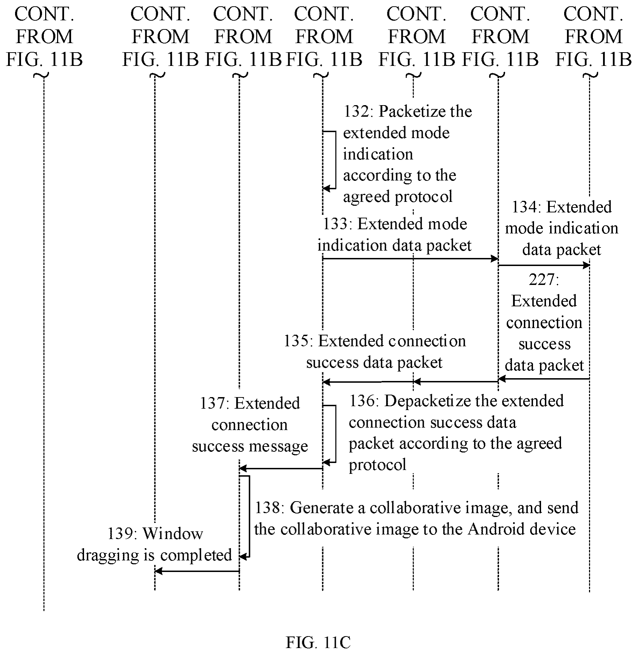

Specific details of step 101 to step 139 that are implemented by the Windows device shown in FIG. 10A and FIG. 10B are described below in detail with reference to FIG. 11A to FIG. 11C. It should be noted that only a part of text is shown in FIG. 11A to FIG. 11C. For specific details, refer to a corresponding text part.

Referring to FIG. 11A to FIG. 11C, to implement the cross-device window dragging method provided in this application, step 101 to step 139 performed by a system message module, a window management module, a window setting module, a protocol management module, a collaboration service, and a data transmission module in the Windows device specifically include:

101: The Windows window management module sends, in advance, a request for registering a window movement message fence to the Windows system message module, so that a Windows message system can monitor a movement status of a window displayed in the Windows device.

102: The Windows window management module sends, in advance, a request for registering a mouse message fence to the Windows system message module, so that the Windows message system can monitor a mouse used in a keyboard and mouse sharing scenario.

Specifically, in this embodiment, cross-device window dragging relies on a keyboard and mouse sharing function, that is, the Android device to which a window in the Windows device is dragged establishes a keyboard and mouse sharing connection to the Windows device. Therefore, in a feasible implementation, the operations in step 101 and step 102 may be triggered to execute after the Windows device and the Android device establish the keyboard and mouse sharing connection.

For example, when a user drags, by using a mouse in a keyboard and mouse sharing scenario, the window displayed in the Windows device (the window 20a in the foregoing embodiments is used as an example), the window movement message fence and the mouse message fence that are registered in steps 101 and 102 are triggered. In this case, the Windows system message module performs step 103 and step 104.

103: The Windows system message module obtains a window movement message corresponding to the window 20a, and sends the window movement message to the Windows window management module.

104: The Windows system message module obtains a message indicating that the mouse used in the keyboard and mouse sharing scenario is pressed, determines that a left mouse button is currently pressed, and sends the left mouse button pressing message to the window management module of the Windows device.

105: After receiving both the window movement message sent by the Windows system message module and the left mouse button pressing message sent by the Windows system message module, the Windows window management module determines that the window 20a is currently dragged and moved.

It should be noted that, in some possible implementations, the dragged window 20a may be displayed in a maximization mode in the Windows device, that is, the window 20a occupies an entire display area of the Windows device. In this case, when confirming that the window 20a is dragged and moved, the Windows device automatically restores the window 20a from the maximization mode to a small window mode in response to the drag operation, and then moves the window 20a with the dragging by the mouse.

In addition, it should be further noted that, in some other possible implementations, the dragged window 20a may be currently displayed in the small window mode, for example, in a style shown in FIG. 2A. In this case, when it is confirmed that the window 20a is dragged and moved, the window 20a remains in the current style, and directly moves with the mouse.

In addition, it should be further noted that, because the Windows device and the Android device are currently in the keyboard and mouse sharing scenario, when the user drags the window 20a by using the mouse, it is possible that the window 20a displayed in the Windows device needs to be dragged to the Android device for display. Therefore, when determining that the window 20a is currently dragged and moved, the Windows window management module sends a window parameter of the window 20a to the Windows window setting module for subsequent processing, that is, step 106 is performed.

In addition, it should be noted that, in a possible case, the user may control, by using an arrow key and a shortcut key on the keyboard, the window 20a to move on a screen of the Windows device. In this case, because the user does not operate the mouse, only the window movement message fence registered in step 101 is triggered. Therefore, the Windows system message module performs only step 103, that is, sends the window movement message to the Windows window management module for processing. Because there is only the window movement message and there is no left mouse button pressing message, the Windows window management module determines that the window 20a is not dragged and moved currently. In this case, the Windows window management module does not perform step 106.

In addition, in another possible case, the user may only press the left mouse button to click on a specific control in the window 20a, or click on another icon or document on the desktop. In this case, because the window 20a does not move, the Windows system message module performs only step 104, that is, sends the left mouse button pressing message to the Windows window management module for processing. Because there is only the left mouse button pressing message and there is no window movement message corresponding to the window 20a, the Windows window management module determines that the window 20a is not dragged and moved currently. In this case, the Windows window management module does not perform step 106.

In addition, in another possible case, the user may press a right mouse button. In this case, because the window 20a does not move, the Windows system message module performs only step 104, that is, sends a right mouse button pressing message to the Windows window management module for processing. Because there is only the right mouse button pressing message, and there is no left mouse button pressing message or window movement message corresponding to the window 20a, the Windows window management module determines that the window 20a is not dragged and moved currently. In this case, the Windows window management module does not perform step 106.

It should be understood that the foregoing description is merely an example listed to better understand the technical solution of this embodiment, and is not used as a unique limitation on this embodiment.

106: The Windows window management module sends a related window parameter of the window 20a to the Windows window setting module.

The related window parameter of the window 20a is, for example, a handle of the window 20a. It may be understood that the handle to the window includes coordinates of a start point (vertex) in the upper left corner of the window, and width data and height data of the window. Therefore, size information (width data xWidth and height data yHeight) of the window 20a may be determined by obtaining the handle of the window 20a.

107: The Windows window setting module calculates window data (such as the width data xWidth and the height data yHeight) of the window 20a based on the window parameter of the window 20a sent by the Windows window management module.

It can be learned from the descriptions of the foregoing embodiments that, in the cross-device window dragging method provided in this application, traversal of the window 20a occurs when the mouse traverses. Therefore, after the Windows system message module detects the window movement message and the left mouse button pressing message of the window 20a, if the user continuously presses the left mouse button and drags the window 20a, for example, moves the window 20a toward a side edge of the screen, such as the right side edge in the foregoing embodiments, with movement of the cursor displayed on the Windows device, such as the cursor 10a in the foregoing embodiments, the Windows system message module continuously obtains the mouse movement position information and sends the mouse movement position information to the Windows window management module, that is, step 108 is performed.

It should be noted that in this embodiment and the following embodiments, the mouse movement position information is movement position information of the cursor corresponding to the mouse, such as the cursor 10a in the foregoing embodiments.

108: The Windows system message module sends the mouse movement position message to the Windows window management module.

109: The Windows window management module performs edge detection based on the mouse movement position information to determine whether the mouse is dragged to a side edge (for example, the right side edge in the foregoing embodiments) of the screen of the Windows device.

It may be understood that, a size of the screen of the Windows device is known. Therefore, when the size of the screen is known and current mouse movement position information (coordinates) of the cursor 10a is also known, it may be determined whether the mouse is dragged to the side edge of the screen of the Windows device.

Specifically, in the keyboard and mouse sharing scenario, when determining that the mouse is dragged to the edge (the left side edge or the right side edge) of the screen, the Windows window management module triggers traversal of the keyboard and the mouse. In addition, in the cross-device window dragging solution provided in this application, the Windows window management module notifies the Windows window setting module that traversal through dragging occurs currently, that is, step 110 is performed, so that the Windows window setting module can generate a window traversal indication (command) based on window data, that is, step 111 is performed.

110: When determining, based on the mouse movement position information, that the mouse arrives at the edge of the screen, the Windows window management module notifies the Windows window setting module that traversal through dragging occurs currently.

111: The Windows window setting module generates a window traversal indication corresponding to the window 20a based on the window data, and sends the window traversal indication of the window 20a to the Windows protocol management module.

112: The Windows protocol management module packetizes data of the window traversal indication according to a predetermined protocol.

113: The Windows protocol management module sends an obtained window traversal indication data packet to the Android data transmission module through the Windows data transmission module.

It may be understood that, regardless of the Windows protocol management module or the Android protocol management module, a main responsibility thereof is to packetize and depacketize a related indication (command), a window parameter, confirmation information, and the like that are generated during window dragging. In other words, all data that needs to be sent to a peer end needs to be packetized by using a protocol management module of a current device. Then, the data is sent by a data transmission module of the current device to a data transmission module of the peer end.

Correspondingly, a data packet from the peer end also needs to be depacketized by the protocol management module of the current device, so as to be sent to a corresponding functional module for subsequent processing.

Protocols to be followed when the Windows protocol management module performs packetization and depacketization, and the Android protocol management module performs depacketization and packetization are agreed on in advance by the Android device and the Windows device. A specific agreement manner and a predetermined protocol are not limited in this application.

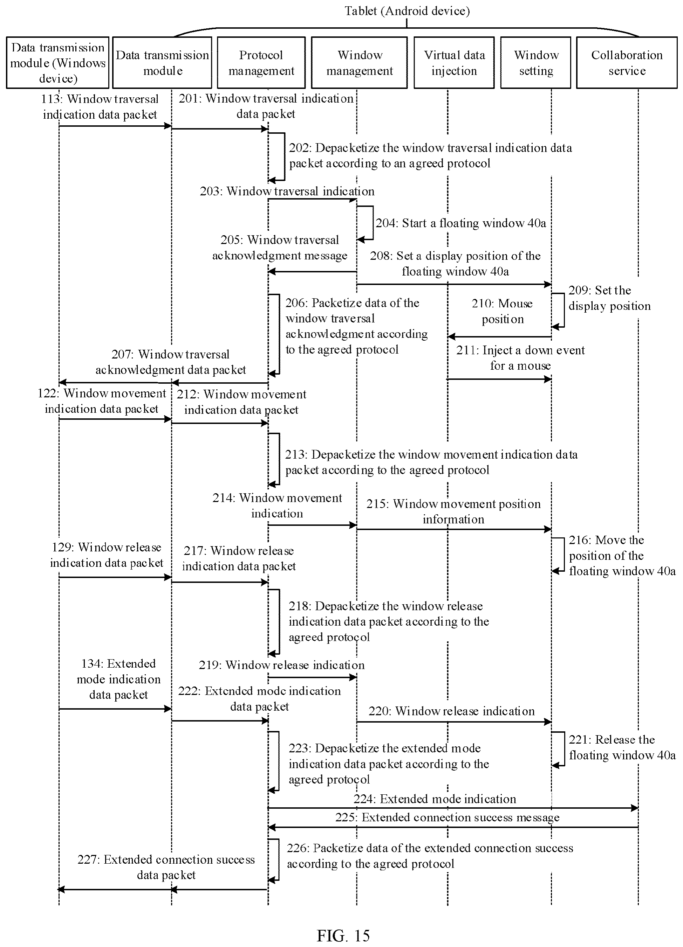

Referring to FIG. 11A to FIG. 11C, it can be learned that subsequent processing of dragging the window 20a in the Windows device needs to be performed only after the Windows data transmission module receives the window traversal acknowledgment data packet fed back by the Android data transmission module. However, that the Android data transmission module sends the window traversal acknowledgment data packet to the Windows data transmission module needs to be processed through step 201 to step 207 shown in FIG. 10A and FIG. 10B. For specific implementation details of step 201 to step 207, refer to FIG. 15 and a part of the embodiment corresponding to FIG. 15. Details are not described herein.

114: After receiving the window traversal acknowledgment data packet sent by the Android data transmission module, the Windows data transmission module sends the window traversal acknowledgment data packet to the Windows protocol management module for depacketization processing.

115: The Windows protocol management module depacketizes the window traversal acknowledgment data packet according to the agreed protocol, so as to obtain the window traversal acknowledgment message.

116: The Windows protocol management module sends the depacketized window traversal acknowledgment message to the Windows window setting.

117: After obtaining the window traversal acknowledgment message fed back by the Android device for the window 20a, the Windows window setting module hides the window 20a displayed on the screen of the Windows device.

Specifically, the window 20a is hidden to specified coordinates. In this way, when the window 20a is subsequently dragged from the Android device back to the Windows device, the window 20a appears from the hidden coordinates.

Alternatively, after the collaboration connection between the Windows device and the Android device is broken, the window 20a may automatically appear from the hidden coordinates. Alternatively, after the collaboration connection between the Windows device and the Android device is broken, when the user clicks the icon of the document 2 displayed on the Windows device, the window 20a appears from the hidden coordinates in response to the operation behavior.

It should be understood that the foregoing description is merely an example listed to better understand the technical solution of this embodiment, and is not used as a unique limitation on this embodiment.

In addition, it should be further noted that a display process of the window 20a in the PC may be divided into compositing and rendering, buffering, and display. For example, compositing and rendering of an image (subsequently represented by the window 20a) corresponding to the window 20a are completed in the window management and image drawing module shown in FIG. 8A. After the composited and rendered window 20a is obtained, the window 20a is buffered in a buffer corresponding to the window 20a, and then is extracted from the buffer through the display driver for display.

Specifically, a canvas for compositing and drawing is generally larger than the display area of the screen of the Windows device. As shown in FIG. 12, the canvas for compositing and drawing may include a visible area (a display interface of the screen of the Windows device) and an invisible area.

In a scenario in which the window 20a needs to be displayed on the screen of the Windows device, after the display driver extracts the window 20a from the buffer, the window 20a is specifically sent to the visible area of the canvas in FIG. 12, that is, the display interface of the screen of the Windows device for display.

In a scenario in which the window 20a does not need to be displayed on the screen of the Windows device, for example, in the scenario in which the window 20a is hidden in this embodiment, the window 20a is essentially still being composited and drawn, but after the display driver extracts the window 20a from the buffer, the window 20a is sent to the invisible area of the canvas in FIG. 12 for display.

It should be understood that the foregoing description is merely an example listed to better understand the technical solution of this embodiment, and is not used as a unique limitation on this embodiment.

In addition, in some possible implementations, to provide better user experience for the user, the hidden coordinates are determined, and then a proportion relationship between a y-axis coordinate of the hidden coordinates and the height yHeight of the Windows device is determined, so that the floating window 40a appears through traversal at a position with a corresponding proportion from a side edge of the Android device, for example, the left side edge shown in FIG. 3C.

It should be understood that the foregoing description is merely an example listed to better understand the technical solution of this embodiment, and is not used as a unique limitation on this embodiment.

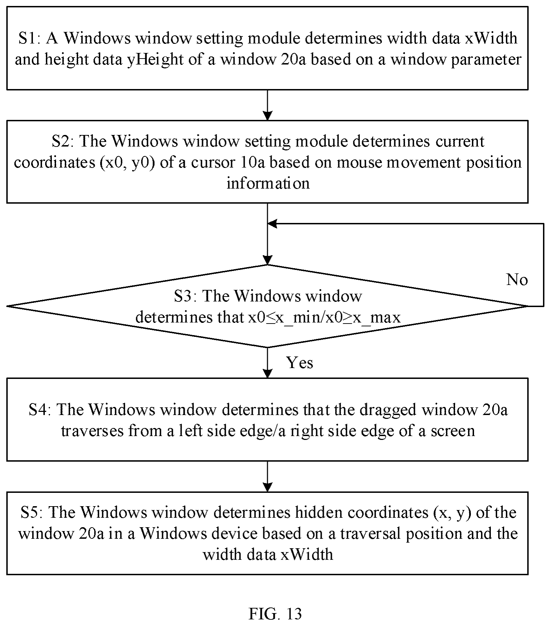

To better understand the determining of the hidden coordinates of the window 20a, the following provides description with reference to FIG. 13, FIG. 14A, and FIG. 14B.

Referring to FIG. 13, the determining of the hidden coordinates is mainly implemented by the Windows window setting module, and may be specifically implemented through step S1~step S5.

S1: The Windows window setting module determines width data xWidth and height data yHeight of the window 20a based on a window parameter.

Specifically, the Windows window setting module performs determining based on a current handle of the window 20a provided by the Windows window management module. For implementation details of determining the width and the height of the window based on the handle of the window, refer to existing literature, which is not described herein.

S2: The Windows window setting module determines current coordinates (x0, y0) of a cursor 10a based on mouse movement position information.

S3: The Windows window determines that x0≤x_min/x0≥x_max.

For example, when a vertex in the upper left corner of the screen of the Windows device is used as coordinates (0, 0) of an origin, x_min is 0. x_max is a coordinate corresponding to the X-axis in coordinates of a vertex in the lower right corner of the screen. For example, for a screen of 1920*1080, x_max is 1920.

On this basis, if x0≤x_min, it indicates that the mouse traverses from the left side edge of the screen of the Windows device. If x0≥x_max, it indicates that the mouse traverses from the right side edge of the Windows device. If x_min<x0<x_max, it indicates that the mouse is still on the screen of the Windows device, and does not reach the left side edge or the right side edge, that is, no traversal occurs.

When it is determined that no traversal occurs, the Windows window setting module may wait for a window parameter and mouse movement position information that are to be obtained at a next moment, and then perform step S3 again based on the newly obtained information.

S4: The Windows window determines that the dragged window 20a traverses from the left side edge/the right side edge of the screen.

S5: The Windows window determines hidden coordinates (x, y) of the window 20a in the Windows device based on a traversal position and current coordinates of the cursor 10a.

It may be understood that in this embodiment, the keyboard and mouse and the window each traverse from the left side edge or the right side edge of the screen of the Windows device. Therefore, a Y-axis coordinate of the hidden coordinates may be directly a current Y-axis coordinate of the cursor 10a, for example, y0 determined in step S2. An X-axis coordinate needs to be determined based on the traversal position in combination with the width data xWidth.

Referring to FIG. 14A, for example, for a scenario in which a width and a height of the screen of the Windows device are 1920*1080, and a width and a height of the window 20a are 200*100, in a process in which the user drags the window 20a to the right side edge of the screen of the Windows device by using the mouse, when the Windows window setting module determines that x0≥1920 based on a processing procedure in FIG. 13, it may be determined that the window 20a and the mouse traverse from the right side edge of the screen of the Windows device. For the scenario shown in FIG. 14A, a coordinate in the X-axis direction of the hidden coordinates is x=Xright=x_max=1920, and a coordinate in the Y-axis direction is y=Yright=y0. In other words, the hidden coordinates (x, y) are (1920, y0).

Referring to FIG. 14B, for example, for a scenario in which a width and a height of the screen of the Windows device are 1920*1080, and a width and a height of the window 20a are 200*100, in a process in which the user drags the window 20a to the left side edge of the screen of the Windows device by using the mouse, when the Windows window setting module determines that x0≤0 based on a processing procedure in FIG. 13, it may be determined that the window 20a and the mouse traverse from the left side edge of the screen of the Windows device. For the scenario shown in FIG. 14B, in this embodiment, it is set that the window 20a is hidden only when the entire window 20a moves out of the screen of the Windows device. Therefore, the coordinate in the X-axis direction of the hidden coordinates is x=Xleft=-xWidth, and the coordinate in the Y-axis direction is y=Yleft=y0. In other words, the hidden coordinates (x, y) are (-xWidth, y0).

It should be understood that the foregoing description is merely an example listed to better understand the technical solution of this embodiment, and is not used as a unique limitation on this embodiment.

It can be learned from the description in the foregoing embodiments that, when the window 20a traverses, the floating window 40a that is started first is not directly completely displayed in the middle of the screen of the Android device, but is partially displayed on an edge of the screen near the Windows device side, such as one third of the floating window 40a (as shown in FIG. 3C) mentioned above. Therefore, even if traversal occurs, before the user releases the mouse, that is, releases the pressing of the left mouse button, the user can still press the left mouse button and continue moving.

For example, in some possible cases, the user may drag the window 20a back to the Windows device before releasing the mouse. In some other possible cases, for a scenario of traversal from the right side edge, the mouse may continue moving to the right, so that the floating window 40a can be completely displayed on the screen of the Android device.

Therefore, when the left mouse button continues to be pressed and moved, the Windows system message module continues to obtain the mouse movement position information, and sends the mouse movement position information to the Windows window management module for processing, that is, step 118 is performed.

118: The Windows system message module obtains the mouse movement position information, and sends the mouse movement position information to the Windows window management module.

119: The Windows window management module determines window movement position information based on the mouse movement position information, and sends the window movement position information to the Windows window setting module.

It may be understood that, in a window dragging process, the cursor corresponding to the mouse falls on the window, thereby driving the window to move. Therefore, when learning the mouse movement position information, the Windows window management module may directly determine the window movement position information corresponding to the window 20a.

120: The Windows window setting module generates a window movement indication based on the window movement position information sent by the Windows window management module, and sends the window movement indication to the Windows protocol management module.

121: The Windows protocol management module packetizes data of the window movement indication according to an agreed protocol, to obtain a window movement indication data packet.

122: The Windows protocol management module sends the obtained window movement indication data packet to the Android data transmission module through the Windows data transmission module.

In this way, the Android window device module may change the position of the floating window 40a based on the window movement position information.

The user may release the mouse at any time after the floating window 40a appears on the screen of the Android device. Therefore, in a process of performing step 118 to step 122, operations in step 123 to step 126 may also occur.

Still referring to FIG. 11A to FIG. 11C, for example, when the user releases the mouse, the Windows system message module detects a left mouse button lifting message and a window movement stopping message, and sends the left mouse button lifting message and the window movement stopping message to the Windows window management module for subsequent processing, that is, step 123 and step 124 are performed.

123: The Windows system message module sends the left mouse button lifting message to the Windows window management module.

124: The Windows system message module sends the window movement stopping message to the Windows window management module.

125: After receiving the left mouse button lifting message and the window movement stopping message that are sent by the Windows system message module, the Windows window management module generates a window release indication, and sends the window release indication to the Windows window device setting module.

126: After receiving the window release indication sent by the Windows window management module, the Windows window device setting module sends the window release indication to the Windows protocol management module for packetization processing.

127: The Windows protocol management module packetizes data of the window release indication according to an agreed protocol, to obtain a window release indication data packet.

128: The Windows protocol management module sends the obtained window release indication data packet to the Windows data transmission module, and the Windows data transmission module sends the window release indication data packet to the outside.

129: The Windows data transmission module sends the window release indication data packet provided by the Windows protocol management module to the Android data transmission module, so as to perform subsequent processing based on the window release indication data packet by another functional module in the Android device.

It can be learned from the description in the foregoing embodiments that, for the cross-device window dragging provided in this application, a collaboration function further needs to be used to drag the window 20a displayed on the screen of the Windows device onto the screen of the Android device for display. In addition, it can be learned from the description in the foregoing embodiments that, when the user releases the mouse, that is, when a loading icon 40a-5 appears on the floating window 40a, the Windows device and the Android device automatically enable the collaboration function in a case in which the user has no perception, that is, the user does not need to enable the collaboration function, and establish a collaboration connection (hereinafter referred to as an extended connection) between the Windows device and the Android device in an extended mode supported by the collaboration function. Therefore, when generating the window release indication, the Windows window management module performs an operation of enabling the collaboration function, that is, performs step 130.

130: When generating the window release indication, the Windows window management module notifies the Windows collaboration service to enable the collaboration function.

131: The Windows collaboration service sends an extended mode indication to the Windows protocol management module, so that the Windows collaboration management module packetizes the extended mode indication.

132: The Windows protocol management module packetizes data of the extended mode indication according to an agreed protocol, to obtain an extended mode indication data packet.

133: The Windows protocol management module sends the obtained extended mode indication data packet to the Windows data transmission module, and the Windows data transmission module sends the extended mode indication data packet to the outside.

134: The Windows data transmission module sends the extended mode indication data packet provided by the Windows protocol management module to the Android data transmission module, so as to perform subsequent processing based on the extended mode indication data packet by another functional module in the Android device, and further complete an extended connection between the two modules.

In some embodiments, as shown in FIG. 10A and FIG. 10B, from receiving the extended mode indication data packet to sending an extended connection success data packet to a PC, the Android device needs to perform at least the processing through step 222 to step 227 shown in FIG. 10A and FIG. 10B, so that the extended connection between the Windows device and the Android device can be established. For specific implementation details of step 222 to step 227, refer to FIG. 15 and a part of the embodiment corresponding to FIG. 15. Details are not described herein.

135: After receiving the extended connection success data packet sent by the Android data transmission module, the Windows data transmission module sends the extended connection success data packet to the Windows protocol management module for depacketization processing.

136: The Windows protocol management module depacketizes the extended connection success data packet according to an agreed protocol, to obtain an extended connection success message fed back by the Android device.

137: The Windows protocol management module sends the extended connection success message to the Windows window setting module.

138: After it is determined that the extended connection between the Windows device and the Android device is successful, the Windows window setting module generates a collaborative image that needs to be displayed in a display area in the floating window 50a, and sends the collaborative image to the Android device for display.

Generation of the collaborative image is similar to that of the window 20a. A difference lies in that when the collaborative image is generated, a compositing and rendering process is performed based on the window 20a in the maximization mode and the taskbar 30a. Therefore, the generated collaborative image finally includes the window 20b and the taskbar 30b mentioned above.

For example, compositing and rendering of the collaborative image are still completed in the window management and image drawing module shown in FIG. 8A. After the composited and rendered collaborative image is obtained, the collaborative image is buffered in a buffer corresponding to the collaborative image, and then is packetized by the Windows protocol management module according to an agreed protocol. An obtained packet of the collaborative image is sent by the Windows data transmission module to the Android data transmission module.

Correspondingly, after receiving the packet of the collaborative image, the Android data transmission module forwards the packet to the Android protocol management module for depacketization, so as to obtain the collaborative image, and finally, the obtained collaborative image may be displayed in the display area of the floating window 50a.

For specific content included in the collaborative image, refer to the foregoing description of the embodiment corresponding to FIG. 3E. Details are not described herein again.

After completing the operation in step 138, the Windows setting module notifies the Windows window management module that dragging of the window 20a is completed, that is, step 139 is performed.

So far, dragging the window 20a displayed on the screen of the Windows device to the screen of the Android device for display is completed. Corresponding screen changes are shown in FIG. 2A, FIG. 2B, and FIG. 3A~FIG. 3D.

Operations performed by various functional modules in the Windows device in the process of dragging the window across devices are described above. For a part not described in this embodiment, reference may be made to the operations performed by various functional modules in the Android device for understanding, and details are not described herein again.

Specific details of step 201 to step 227 that are implemented by the Android device shown in FIG. 10A and FIG. 10B are described below in detail with reference to FIG. 15. It should be noted that only a part of text is shown in FIG. 15. For specific details, refer to a corresponding text part.

Referring to FIG. 15, to implement the cross-device window dragging method provided in this application, step 201 to step 227 performed by a data transmission module, a protocol management module, a window setting module, a virtual data injection module, a window setting module, and a collaboration service in the Android device specifically include:

201: After receiving the window traversal indication data packet sent by the Windows data transmission module, the Android data transmission module sends the window traversal indication data packet to the Android protocol management module for depacketization.

202: The Android protocol management module depacketizes the window traversal indication data packet based on an agreement, so as to obtain the window traversal indication.

203: The Android protocol management module sends the obtained window traversal indication to the Android window management module for processing.

204: The Android window management module starts the floating window 40a according to the window traversal indication.

In this way, before the extended connection between the Windows device and the Android device is successfully established, the floating window 40a may be used instead of the floating window 50a, making the user visually feel that the window 20a on the Windows device is indeed dragged to the Android device, but only waits for content of the window 20a to be loaded.

205: The Android window management module generates a window traversal acknowledgment message, and sends the window traversal acknowledgment message to the Android protocol management module for packetization.

206: The Android protocol management module packetizes data of the window traversal acknowledgment according to the agreed protocol, so as to obtain a window traversal data acknowledgment data packet.

207: The Android protocol management module sends the obtained window traversal data acknowledgment data packet to the Windows data transmission module through the Android data transmission module.

In this way, after receiving the window traversal data acknowledgment data packet sent by the Android device, the Windows device may perform step 114 shown in FIG. 11A to FIG. 11C and subsequent steps.

Still referring to FIG. 15, for example, after starting the floating window 40a, the Android window management module further continues to perform step 208 to step 211. To be specific, step 208 to step 211 may be performed synchronously with step 205 to step 208 without a sequence.

208: After starting the floating window 40a, the Android window management module determines a display position of the floating window 40a on the screen of the Android device, and sends the determined display position information to the Android window setting module, so as to indicate the Android window setting module to set the display position of the floating window 40a.

209: The Android window setting module sets the display position of the floating window 40a based on the display position information provided by the Android window setting module, so that the floating window 40a can be displayed at the specified position on the Android screen.

It should be understood that if the mouse does not have a corresponding down event, when the user releases the mouse after the mouse traverses to the Android device, an up event of the mouse occurs, so that the Windows device cannot perceive. However, before the mouse traverses, a pressing operation (a down event) performed by the user on the left mouse button is registered and occurs on the Windows device. After the mouse traverses from the Windows device to the Android device, there is no corresponding down event in the Android device. Therefore, to ensure that the Windows device can learn when the mouse is released after the mouse traverses to the Android device, after setting of the display position of the floating window 40a is completed, the Android window setting module sends, to the Android virtual data injection module, position information of the cursor 10b currently corresponding to the mouse on the Android device, so that the Android virtual data injection module can inject a down event for the mouse on the Android device. To be specific, step 210 and step 211 are performed, so that the Windows device perceives that the mouse is released.

210: The Android window setting module informs the Android virtual data injection module of a mouse position of the mouse on the Android device, that is, position information of the cursor 10b corresponding to the mouse on the Android device.

211: The Android virtual data injection module injects the down event at the mouse position.

It can be learned from descriptions of the embodiments shown in FIG. 3A to FIG. 3E that, when the mouse and the window 20a traverse, and the floating window 40a is displayed on the screen of the Android device for the first time, the floating window 40a is not completely displayed on the screen of the Android device. Instead, approximately one third of the floating window 40a is displayed near a side edge of the screen of the Windows device, such as the left side edge in the foregoing embodiments. Therefore, to ensure that the floating window 40a can still be dragged and moved after the mouse traverses to the Android device, a down event corresponding to the mouse needs to be injected at a position for displaying the mouse cursor 10b on the status bar 1 of the floating window 40a, and drag monitoring needs to be performed on the status bar 1. For implementation of this operation, refer to operations that are performed by the window setting module and the HwFreeFormCaptionView in the embodiment shown in FIG. 16A(1) to FIG. 16A(3). Details are not described herein.

In addition, it can be learned from the foregoing descriptions of the operations performed by the functional modules in the Windows device that, after receiving the window traversal acknowledgment data packet fed back by the Android device, the Windows device generates the window movement indication data packet as the user continues to press the left mouse button and move the mouse, and sends the window movement indication data packet to the Android device. After receiving the window movement indication data packet, the Android device performs operations in step 212 to step 216.

212: After receiving the window movement indication data packet sent by the Windows data transmission module, the Android data transmission module sends the window movement indication data packet to the Android protocol management module for depacketization.

213: The Android protocol management module depacketizes the window movement indication data packet based on an agreement, so as to obtain the window movement indication.

214: The Android protocol management module sends the obtained window movement indication to the Android window management module for processing.

215: The Android window management module extracts window movement position information from the window movement indication, and sends the extracted window movement position information to the Android window setting module.

216: The Android window setting module moves, based on the window movement position information sent by the Android window management module, the position of the floating window 40a displayed on the Android screen.

For example, the floating window 40a may be moved from the position shown in FIG. 3C to the position shown in FIG. 3D based on the window movement position information.

It may be understood that before the user releases the mouse, as the mouse is pressed and moved, the Windows device continuously sends, to the Android device, the window movement indication data packet corresponding to each movement, and the Android device continuously moves the display position of the floating window 40a based on the window movement position information obtained through depacketization.

It can be learned from the foregoing description that, after the Android virtual data injection module injects the down event for the mouse, when the user releases the mouse, the Windows device may perceive the release, and then the foregoing functional modules inside the Windows device perform processing, and finally the Windows data transmission module sends the window release indication data packet and the extended mode indication data packet to the Android data transmission module. Referring to FIG. 10A and FIG. 10B and FIG. 15, it can be learned that after receiving the window release indication data packet, the Android device performs step 217 to step 221, and after receiving the extended mode indication data packet, the Android device performs step 222 to step 227.

217: After receiving the window release indication data packet sent by the Windows data transmission module, the Android data transmission module sends the window release indication data packet to the Android protocol management module for depacketization.

218: The Android protocol management module depacketizes the window release indication data packet based on an agreement, so as to obtain the window release indication.

219: The Android protocol management module sends the obtained window release indication to the Android window management module for processing.

220: The Android window management module sends the window release indication to the Android window setting module, so that the Android window setting module can release the floating window 40a.

221: The Android window setting module releases the floating window 40a.

In this case, the control 40a-5 may be displayed in the floating window 40a.

It should be noted that, because the down event for the mouse is injected at step 211, when the mouse is released and the window release indication sent by the Windows device is received, the Android device may inject the up event for the mouse, so as to release the floating window 40a.

222: After receiving the extended mode indication data packet sent by the Windows data transmission module, the Android data transmission module sends the extended mode indication data packet to the Android protocol management module for depacketization.

223: The Android protocol management module depacketizes the extended mode indication data packet based on an agreement, so as to obtain the extended mode indication.

224: The Android protocol management module sends the obtained extended mode indication to the Android collaboration service for processing.

Because the window release indication and the extended mode indication generally have a relatively small time interval for arriving at the Android device, in a process of releasing the floating window 40a, the Android device performs operations such as depacketization and transmission on the extended mode indication data packet. Therefore, after the Android window setting module releases the floating window 40a, the Android collaboration service quickly establishes an extended connection to the Windows device, so as to generate an extended connection success message.

225: The Android collaboration service establishes an extended connection to the Windows device, and after completing the extended connection, generates an extended connection success message, and sends the extended connection success message to the Android protocol management module for packetization.

226: The Android protocol management module packetizes data of the extended connection success based on an agreed protocol, to obtain an extended connection success data packet.

227: The Android protocol management module sends the obtained extended connection success data packet to the Android data transmission module, and then the Android data transmission module sends the extended connection success data packet to the Windows data transmission module.

So far, dragging the window 20a displayed on the screen of the Windows device to the screen of the Android device for display is completed. Corresponding screen changes are shown in FIG. 2A, FIG. 2B, and FIG. 3A~FIG. 3D. Details of replacing the floating window 40a shown in FIG. 3D with the floating window 50a shown in FIG. 3E are described in detail below with reference to FIG. 16A(1) to FIG. 16A(3).

It can be learned from the description in the foregoing embodiments that, the floating window 50a displayed on the screen of the Android device may be scaled up or scaled down through dragging, and after the screen rotates, the size also changes. However, implementation of these functions needs to rely on some functional modules (methods/functions) of the FWK layer in the Android system, such as ActivityStarter, DisplayContent, MultiWindowsManager, FreeFormCaptionView, and MouseManager.

The ActivityStarter is a functional module configured to start an Activity component, such as the floating window 40a or the floating window 50a. Different from a native ActivityStarter of Android, the ActivityStarter in this application may further set a collaboration mode corresponding to the floating window 50a. For distinction, subsequently, the ActivityStarter implemented in this application is represented as the HwActivityStarterEx. It should be understood that the foregoing representation is merely for ease of description, and a name of a functional module that implements this function is not limited.

The DisplayContent is a display content manager. In this application, a process task for which the DisplayContent is responsible is to prohibit scaling of the floating window 40a. This can ensure that after being started, the floating window 50a can completely cover the floating window 40a without perception by the user, so as to avoid a case that the floating window 50a cannot completely cover the floating window 40a because the floating window 40a is scaled up.

The MultiWindowsManager is a multi-window manager. Different from a native MultiWindowsManager of Android, the MultiWindowsManager in this application may be responsible for the case that when the screen of the Android device rotates, the portrait state can also ensure an effect of the floating window 50a in the landscape state. For distinction, subsequently, the MultiWindowsManager implemented in this application is represented as the HwMultiWindowsManager. It should be understood that the foregoing representation is merely for ease of description, and a name of a functional module that implements this function is not limited.

The FreeFormCaptionView may be understood as a taskbar in a freeform mode, that is, a functional module that is responsible for managing the status bar 1 and the status bar 2 in the floating window 40a and the floating window 50a. In the cross-device window dragging solution provided in this application, when the cursor 10b is located in the area of the status bar 1, the user can drag the floating window 40a and the floating window 50a by manipulating the mouse. Therefore, different from a native FreeFormCaptionView of Android, the FreeFormCaptionView in this application may be configured to set drag monitoring for the taskbar. For distinction, subsequently, the FreeFormCaptionView implemented in this application is represented as the HwFreeFormCaptionView. It should be understood that the foregoing representation is merely for ease of description, and a name of a functional module that implements this function is not limited.

The MouseManager, that is, mouse management, is configured to manage mouse events, such as a down event, an up event, and a drag event. In this application, the MouseManager is mainly configured to manage drag monitoring performed by the mouse on the status bar 1, and cancel the drag monitoring after the mouse is released and an up event occurs. In the keyboard and mouse sharing mode, the Android device uses the keyboard and the mouse of the Windows device. Therefore, the keyboard and the mouse of the Windows device are managed. For distinction, subsequently, the MouseManager implemented in this application is represented as the HnPcMouseManager. It should be understood that the foregoing representation is merely for ease of description, and a name of a functional module that implements this function is not limited.

For ease of description, FIG. 16A(1) to FIG. 16A(3) show, on the Android device side, only the Android window management module and the Android window setting module in the collaboration service and the keyboard and mouse service, and the above-listed HwActivityStarterEx, DisplayContent, HwMultiWindowsManager, HwFreeFormCaptionView, and HnPcMouseManager that are located at the FWK layer. No specific functional module is shown for the Windows device.

The window management module in the Android device may be represented as DragWindowManager, and the window setting module in the Android device may be represented as PcScreenCoverActivity. It should be understood that the foregoing representation is merely for ease of description, and a name of a functional module that implements this function is not limited.

Referring to FIG. 16A(1) to FIG. 16A(3), for example, in this embodiment, an extended connection between the Windows device and the Android device is implemented by triggering and enabling a collaboration function for the keyboard and the mouse and the window based on a keyboard and mouse sharing connection between the Windows device and the Android device. To ensure that after an extended connection between the Windows device and the Android device is established, a display area of the floating window 50a can display, without a black edge, image content of the window 20a recorded and delivered by the Windows device, when the Windows device establishes a keyboard and mouse sharing connection to the Android device, the Windows device and the Android device agree on an aspect ratio of an area that displays the window 20a in the floating window 50a. In this way, subsequently, the Windows device may record and deliver the window 20a based on the agreed aspect ratio, and the Android device may display, through equiproportional scaling, the window 20a based on the same aspect ratio, so that the display area of the floating window 50a may display the window 20a without black edge, and an interface effect is more like directly dragging the window 20a to the Android device for display.

With regard to the agreement on the aspect ratio, for example, when the Windows device establishes the keyboard and mouse sharing connection to the Android device based on the keyboard and mouse sharing service, the Windows device determines the aspect ratio based on a width and a height of a current screen of the Windows device, and sends the aspect ratio to the Android device. In this way, the Android device may know, if window traversal occurs subsequently, a specific width and a specific height of the window 20a that needs to be displayed in a maximization mode in the floating window.

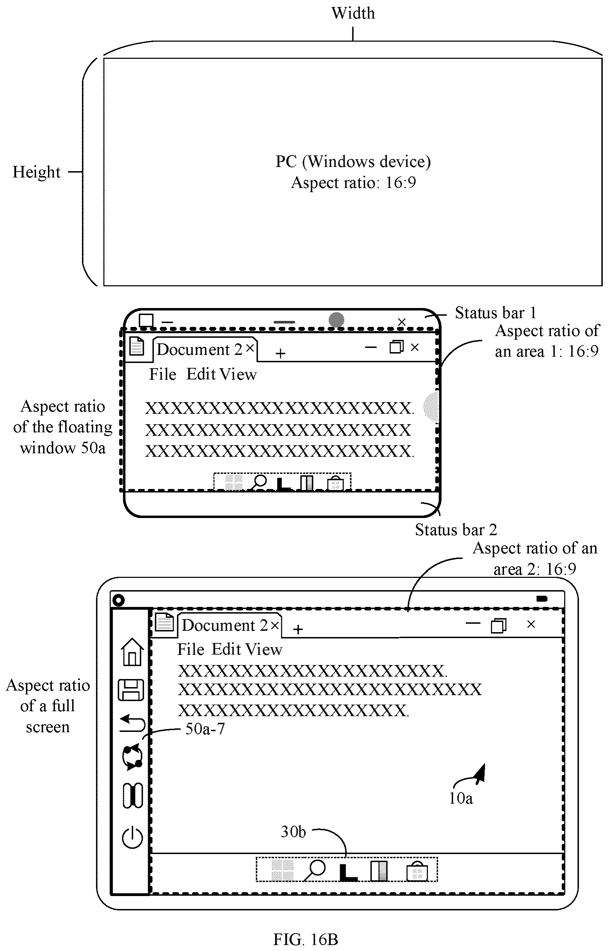

Referring to FIG. 16B, for example, in a scenario in which the aspect ratio of the Windows device is 16:9, the aspect ratio agreed on between the Windows device and the Android device is also 16:9. However, for different forms of extension screen styles in the Android device, the aspect ratio is a ratio of a different area. For example, for the floating window 50a, the aspect ratio of 16:9 indicates an aspect ratio of a remaining area other than the status bar 1 and the status bar 2 in the floating window 50a. In other words, a ratio of the width of the floating window 50a to (the height of the floating window 50a - a height of the status bar 1 - a height of the status bar 2) is 16:9.

Still referring to FIG. 16B, for example, for a scenario in which the extension screen is the entire screen of the Android device, the aspect ratio of 16:9 indicates a ratio of an area other than a sidebar 50a-7 and a taskbar 30b.

It should be understood that the foregoing description is merely an example listed to better understand the technical solution of this embodiment, and is not used as a unique limitation on this embodiment.

Still referring to FIG. 16A(1) to FIG. 16A(3), for example, after the Windows device and the Android device establish the keyboard and mouse sharing connection, and agree on the aspect ratio, if the user presses a left mouse button and mouse traversal occurs on the dragged window, hidden coordinates of the window that is dragged for traversal may be determined based on processing logic of the foregoing embodiments shown in FIG. 10A~FIG. 13, FIG. 14A, FIG. 14B, and FIG. 15. To ensure that a parallel traversal effect can be reflected between a window that first appears on the Android device, for example, the floating window 40a in the foregoing embodiments and the window 20a in the Windows device, a Y-axis height of an upper edge of the floating window 40a should be the same as a Y-axis coordinate of the hidden coordinates. For example, the Y-axis coordinate of the hidden coordinates is y0, as shown in FIG. 14A and FIG. 14B.

Still referring to FIG. 16A(1) to FIG. 16A(3), for example, after the y0b is obtained by the Android window management module, the Android window management module sets start bounds of the floating window 40a based on the y0 and the agreed aspect ratio, and sets a window mode of the floating window 40a to a floating window mode.

It should be understood that the floating window 40a is a virtual window that replaces the floating window 50a on the screen of the Android device before display of the floating window 50a is started. It can be learned from the foregoing description that, the floating window 40a is not a full-screen extension screen of the floating window 50a, but is in a floating window mode. Therefore, the window mode of the floating window 40 that replaces the floating window 50a also needs to be set to the floating window mode.

In addition, the size of the floating window 40a is generally the same as that of the floating window 50a. Therefore, an area meeting the agreed aspect ratio in the floating window 40a is the same as that in the floating window 50a, and the area is represented by an area 1 shown in FIG. 16B in the following embodiments.

The height of the status bar 1 and the height of the status bar 2 are usually fixed, but the width of the status bar 1 and the width of the status bar 2 are the same as the width of the area 1. Therefore, when the bounds of the floating window 40a are set, the bounds of the area 1 may be first determined.

In addition, it should be noted that, in some possible cases, the height of the status bar 1 and the height of the status bar 2 may be the same.

In addition, the floating window 40a is a virtual window that replaces the floating window 50a. In this embodiment, for example, the size of the floating window 40a is the same as the size of the floating window 50a. In this case, regardless of the status bar 1 and the status bar 2 in the floating window 40a shown in the accompanying drawings, or the status bar 1 and the status bar 2 shown in the floating window 50a, the heights of the status bar 1 and the status bar 2 are the same.

For example, in some possible implementations, for example, when it is agreed on that the area 1 occupies 60% (or another percentage) of the screen of the Android device, the width/height of the screen of the Android device may be first obtained, and then the width/height of the screen of the Android device * 60% is calculated to obtain the width/height corresponding to the area 1. Then, the height/width corresponding to the area 1 may be obtained based on the agreed aspect ratio and the determined width/height of the area 1.

For example, after the width of the area 1 is determined, the X coordinate (left) of the left side edge of the area 1 may be used as the X coordinate of the vertex in the upper left corner of the floating window 40a, and the X coordinate (right) of the right side edge of the area 1 may be used as the X coordinate of the vertex in the lower right corner of the floating window 40a.

In addition, it can be learned from the foregoing description that y0 is the Y-axis coordinate of an upper edge (top) of the floating window 40a. Therefore, the Y-axis coordinate of the vertex in the upper left corner of the floating window 40a may be determined as y0.

In addition, when the height of the status bar 1 and the height of the status bar 2 are fixed, and the height of the area 1 is determined, it is known that top=y0, and a lower edge (bottom) of the floating window 40a is y0 + the height of the status bar 1 + the height of the area 1 + the height of the status bar 2.

Therefore, setting of the bounds (left, top, right, bottom) of the floating window 40a may be completed.

For example, in FIG. 16A(1) to FIG. 16A(3), setting of the bounds and the window mode of the floating window 40a by the Android window management module in the foregoing manner may be used as a specific implementation form of step 208 in the embodiment shown in FIG. 15.

Still referring to FIG. 16A(1) to FIG. 16A(3), for example, after completing the foregoing two steps of setting (setting the bounds of the floating window 40a and setting the window mode to the floating window mode), the Android window management module notifies the Android window setting module to start the Activity of the floating window 40a, that is, to create the Activity of the floating window 40a.

It may be understood that, when notifying the Android window setting module to start the Activity of the floating window 40a, the Android window management module informs the Android window setting module of the parameters for the foregoing two steps of setting. In this way, when invoking the StartActivity method to notify the HwActivityStarterEx to draw the Activity of the floating window 40a, the Android window setting module informs the HwActivityStarterEx of the bounds and the floating window mode of the floating window 40a as input parameters.

Still referring to FIG. 16A(1) to FIG. 16A(3), for example, the HwActivityStarterEx draws the Activity of the floating window 40a based on a parameter passed by the Android window setting module, and notifies the HwFreeFormCaptionView to set drag monitoring for the Caption in the started floating window 40a, which is specifically the foregoing status bar 1. In this way, when the cursor 10b falls on the status bar 1, the user can drag the floating window 40a by manipulating the mouse.

Still referring to FIG. 16A(1) to FIG. 16A(3), for example, after the HwFreeFormCaptionView sets the drag monitoring for the status bar 1, the HnPcMouseManager is informed. In this way, the HnPcMouseManager can manage the drag monitoring for the status bar 1, for example, monitor whether an event of dragging the status bar 1 occurs.

In addition, it should be noted that the HnPcMouseManager further cancels the drag monitoring for the status bar 1 after the mouse is released and the up event occurs.

Still referring to FIG. 16A(1) to FIG. 16A(3), for example, when the HwActivityStarterEx completely draws the Activity of the floating window 40a, that is, when the screen of the Android device displays the floating window 40a, the DisplayContent further sets the floating window 40a, which is specifically setting to prohibit scaling of the floating window 40a.

Still referring to FIG. 16A(1) to FIG. 16A(3), for example, the Android window setting module further bypasses a hot zone of the status bar 1 of the floating window 40a in determining the floating window 40a, for example, an area in which the control 40a-1~the control 40a-4 are located in FIG. 3D, and sets an initial position of the mouse, that is, a position of the cursor 10b after the mouse traverses.

It may be understood that because the mouse just traverses and the floating window 40a is just displayed, that is, a style shown in FIG. 3C, when the user does not release the mouse, it is further possible to continue to drag the floating window 40a to move to the right, for example, move to a position shown in FIG. 3D, and then release the mouse. Therefore, the initial position set by the Android window management module for the cursor 10b specifically needs to fall within the area of the status bar 1, and bypass various function controls displayed on the status bar 1.

In addition, it should be noted that, in some possible implementation scenarios, an area on a side edge of the screen of the Android device is usually set as a hot zone, that is, an operation such as sliding of the mouse on the side edge starts another window or taskbar that is set. Therefore, the initial position set by the Android window management module for the cursor 10b further needs to bypass the hot zone on the side edge of the screen of the Android device. In this application, the floating window 40a is displayed through traversal from the left side edge of the screen of the Android device. Therefore, the initial position set by the Android window management module for the cursor 10b needs to bypass the hot zone on the left side edge of the screen of the Android device.

For example, when the top of the floating window 40a is known and the height of the status bar 1 is known, in a possible implementation, the X-axis coordinate of the initial position of the mouse may be between the left and the right that are determined above, and bypass the coordinates of the control 40a-1~the control 40a-4, and may be denoted by x1. In this case, corresponding y1 may be (top + height of the status bar 1/2).

It should be understood that the foregoing description is merely an example listed to better understand the technical solution of this embodiment, and is not used as a unique limitation on this embodiment.

For example, in FIG. 16A(1) to FIG. 16A(3), setting the initial position of the mouse (that is, displaying the cursor 10b in the status bar 1) and injecting the corresponding down event for the mouse by the Android window device module, and setting and canceling the drag monitoring for the status bar 1 by the HwFreeFormCaptionView and the HnPcMouseManager in the foregoing manner may be used as a specific implementation form of step 211 in the embodiment shown in FIG. 15.

Still referring to FIG. 16A(1) to FIG. 16A(3), for example, after the initial position of the mouse is set, the Android window setting module injects a down event for the mouse. For details, refer to step 209 to step 211 in FIG. 15. Details are not described herein again.

Still referring to FIG. 16A(1) to FIG. 16A(3), for example, after the foregoing drawing and setting of the floating window 40a are completed, the Android window setting module invokes onResume(), so as to inform the Android window management module that the floating window 40a has been normally started and is available.

Still referring to FIG. 16A(1) to FIG. 16A(3), for example, if the Android window management module further receives, after the foregoing operation is completed, mouse movement information sent by the Windows device, the Android window management module may cooperate with another functional module to move the floating window 40a based on the operations in step 212 to step 216 shown in FIG. 15. Specific implementation details are not described herein again.

Still referring to FIG. 16A(1) to FIG. 16A(3), for example, if the user releases the mouse, that is, the Android device detects an up event for the mouse, the HnPcMouseManager cancels the drag monitoring for the status bar 1. In addition, it can be learned, based on FIG. 10A, FIG. 10B, and FIG. 11A to FIG. 11C, that after the user releases the mouse, the Windows device sends a window release indication to the Android device, and at the same time, performs an operation of starting the extended mode of the collaboration function to establish an extended connection to the Android device.

Still referring to FIG. 16A(1) to FIG. 16A(3), for example, in a process of establishing the extended connection between the Android device and the Windows device, when drawing the Activity of the floating window 50a, the HwActivityStarterEx first sets the bounds of the floating window 50a.

It can be learned from the foregoing description that the floating window 50a needs to cover the floating window 40a. Therefore, when the bounds of the floating window 50a are set, the bounds of the currently displayed floating window 40a are directly searched for, and then the bounds of the floating window 50a are set based on the bounds of the floating window 40a.

For example, in a possible case, the bounds of the floating window 50a may be the same as the bounds of the floating window 40a. In this way, the floating window 40a may be seamlessly covered, and the user does not feel that the floating window 40a is replaced.

In addition, when drawing the Activity of the floating window 50a, the HwActivityStarterEx further needs to set a window module for the floating window 50a.

Specifically, if the floating window 40a exists in the current interface of the Android device, the window mode of the floating window 50as is also set to the floating window mode. If the floating window 40a does not exist, the collaboration mode needs to be changed to the mirror mode, that is, the window mode of the floating window 50a is set to a full-screen mode.

Still referring to FIG. 16A(1) to FIG. 16A(3), for example, after the foregoing setting is completed and the Activity of the floating window 50a is drawn based on the foregoing requirement, that is, after the floating window 50a is started, the HwActivityStarterEx may invoke the finish() to close the floating window 40a.

For the process of releasing the mouse and establishing the extended connection, refer to step 125 to step 137 shown in FIG. 11A to FIG. 11C, and step 217 to step 227 in FIG. 15. Specific implementation details are not described herein again.

Still referring to FIG. 16A(1) to FIG. 16A(3), for example, after the floating window 50a is displayed, if the screen of the Android device rotates, the HwMultiWindowsManager performs a job, so that regardless of whether the screen of the Android device is in the landscape state or in the portrait state, a display effect of the floating window 50a in the landscape state can be ensured. For changes in the position and the size of the floating window 50a when the screen of the Android device rotates, refer to FIG. 7A and FIG. 7B.

It may be understood that if the screen of the Android device rotates in the process of displaying the floating window 40a, the HwMultiWindowsManager can also ensure that regardless of whether the screen of the Android device is in the landscape state or in the portrait state, a display effect of the floating window 40a in the landscape state can be ensured.

Operations performed by various functional modules in the Android device in the process of dragging the window across devices are described above. For a part not described in this embodiment, reference may be made to the operations performed by various functional modules in the Windows device for understanding, and details are not described herein again.

Therefore, when the Windows device and the Android device establish a keyboard and mouse sharing connection, that is, are in a keyboard and mouse sharing scenario, but the collaboration function is not started, and when the user starts a plurality of applications by using the Windows device such as the PC mentioned in the foregoing embodiments, and needs to simultaneously use these applications, for example, view content in windows corresponding to these applications, based on the cross-device window dragging method provided in this application, drag monitoring may be performed on windows corresponding to applications/documents on the PC, and mouse traversal may be controlled in cooperation with keyboard and mouse sharing. During the mouse traversal, a position at which the window moves out of the screen of the PC is calculated, and information about the window is transmitted to the Android device, for example, the tablet mentioned in the foregoing embodiments. When the window is released on the tablet (the user releases the pressing of the left mouse button), the PC is triggered to establish a collaboration connection to the tablet, and the tablet is set to be used as an extension screen of the PC. Further, a window that is hidden in the PC, such as the window of the document 2 mentioned in the foregoing embodiments, is moved to the extension screen, that is, to the tablet for display, thereby implementing experience of dual-screen office.

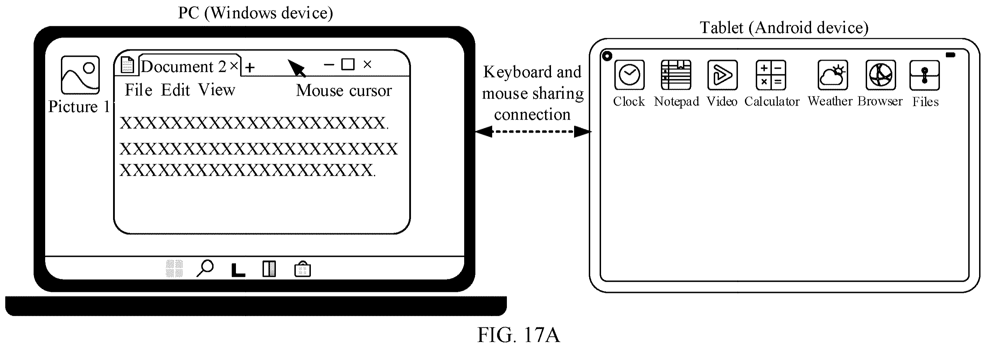

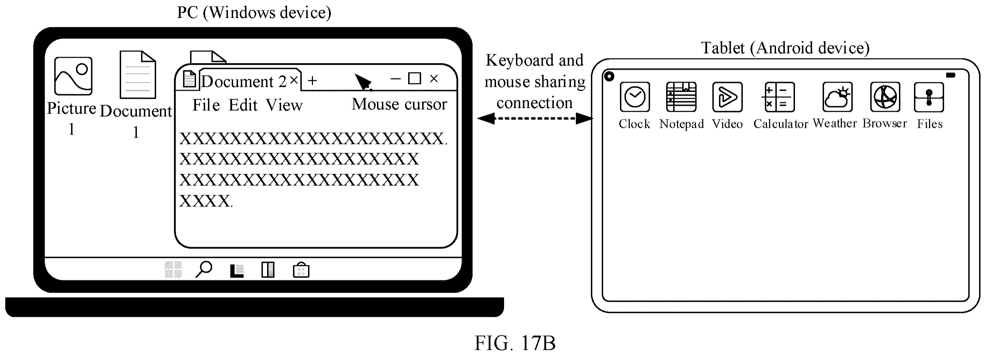

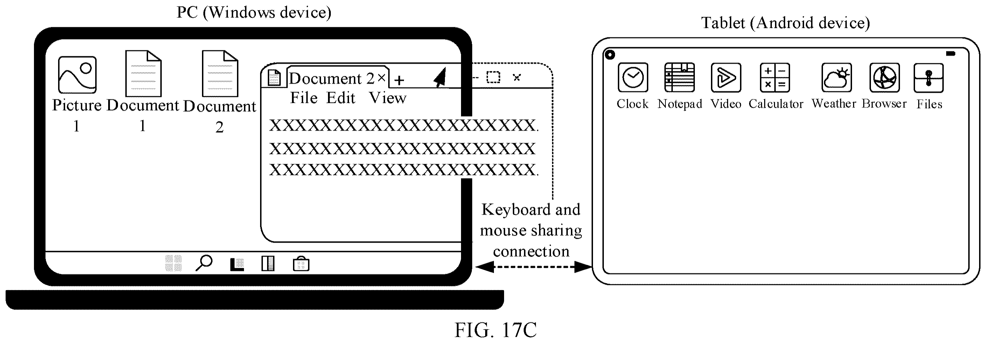

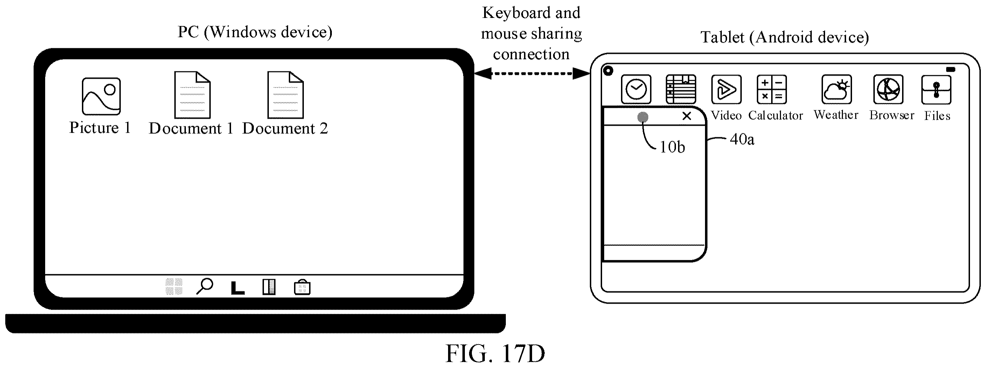

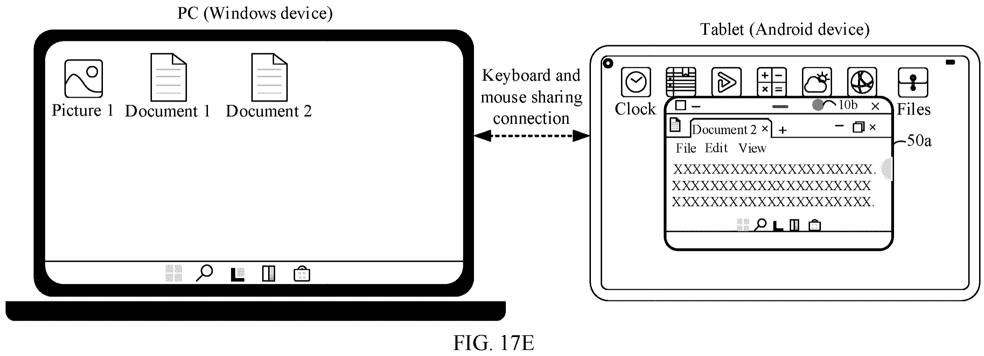

Based on the cross-device window dragging method provided in this application, in the window dragging process, changes in the screens of the Windows device and the Android device may be shown in FIG. 17A~FIG. 17E.

In addition, it should be further noted that, in another possible implementation, the user may successively drag a plurality of windows displayed in the Windows device to the Android device for display. When the floating window 50a mentioned in the foregoing embodiments is not displayed in the Android device, and when the user drags a window in the Windows device for the first time, such as the window 20a corresponding to the document 2 in the foregoing embodiments, this implementation scenario may be implemented based on the processing procedure in the foregoing embodiments. In the process of dragging the window from the Windows device to the Android device for the first time, changes in the screens of the Windows device and the Android device may be shown in FIG. 17A~FIG. 17E.

For example, after the window 20a is dragged to the floating window 50a of the Android device for display, if the user opens the document 1 in the Windows device, a window corresponding to the document 1 is, for example, a window 70a shown in FIG. 18A.

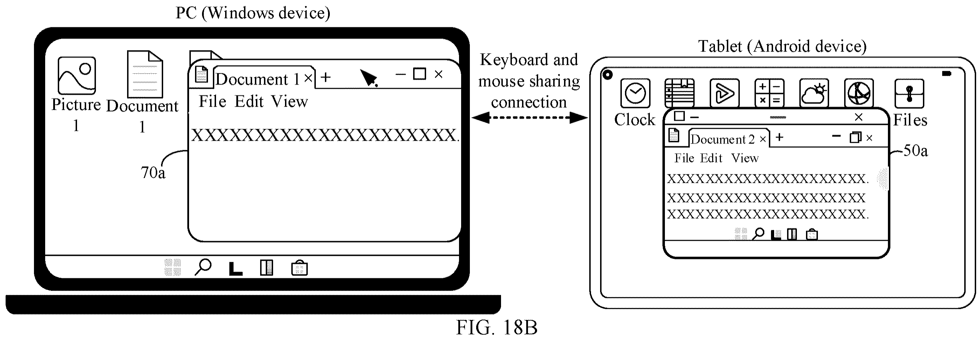

Referring to FIG. 18A and FIG. 18B, for example, when the user operates the mouse 10a to drag the window 70a to move on the screen of the Windows device, and gradually drags the window 70a onto the right side edge of the screen of the Windows device. Because the collaboration connection between the Windows device and the Android device is not broken, the floating window 50a that is used as an extension screen of the Windows device is always displayed on the screen of the Android device. Therefore, when the cursor 10a and the window 70a traverse, the floating window 40a does not need to be started again, and the collaboration connection and the floating window 50a do not need to be established again, either. Therefore, a part that is of the window 70a and that moves out of the Windows device (hereinafter referred to as a first part), and the cursor 10a directly traverse to the floating window 50a, and a part that is of the window 70a and that does not move out of the screen of the Windows device (hereinafter referred to as the second part) is displayed on the Windows device, as shown in FIG. 18C. For ease of distinction, in this embodiment, the window 70a traversing to the floating window 50a is represented as a window 70b.

For example, after the window 70a and the cursor 10a directly traverse to the floating window 50a, in a process in which the cursor 10a drags the window 70b, the window 70b also continues to move following the cursor 10a. In this way, the first part of the window 70a displayed in the floating window 50a becomes larger, whereas the second part of the window 70a displayed in the Windows device becomes smaller, until the window 70a is completely dragged to the floating window 50a for display.

In addition, it should be further noted that, for a window to which the window 20a is later dragged in the floating window 50a, a window style that is displayed on the Windows device in a restored state (a small window) before the window traverses is maintained, and the window covers the window 20b after traversal, that is, a window to which the window 20a traverses. For example, the window 70b corresponding to the window 70a blocks a part of the window 20b, as shown in FIG. 18D.

In addition, it should be further noted that, regardless of whether the foregoing window 20b or window 70b is dragged to the floating window 50a for display, the user may edit and process, by using the keyboard and the mouse in the keyboard and mouse sharing scenario, content in the window displayed in the floating window 50a. In addition, the editing and processing of the content in these windows in the floating window 50a are synchronized to a document corresponding to the windows in the Windows device. For example, after the user adds a part of text to the window 20a, and saves the edited window 20a, the part of text is added to the document 2 in the Windows device in synchronization.

It should be understood that the foregoing description is merely an example listed to better understand the technical solution of this embodiment, and is not used as a unique limitation on this embodiment.

In addition, it may be understood that to implement the foregoing functions, the electronic device includes corresponding hardware and/or software modules for performing the functions. Algorithm steps in the examples described with reference to the embodiments disclosed in this specification can be implemented by hardware or a combination of hardware and computer software in this application. Whether a specific function is performed by hardware or hardware driven by computer software depends on a particular application and a design constraint of the technical solutions. Persons skilled in the art may use different methods to implement the described functions with reference to embodiments for each particular application, but it should not be considered that the implementation goes beyond the scope of this application.

In addition, it should be noted that, in an actual application scenario, the cross-device window dragging method that is provided in the foregoing embodiments and that is implemented by an electronic device may alternatively be performed by a chip system included in the electronic device. The chip system may include a processor. The chip system may be coupled to a memory, so that when the chip system runs, a computer program stored in the memory is invoked to implement the foregoing steps performed by the electronic device. The processor in the chip system may be an application processor or may be a processor that is not an application processor.

In addition, an embodiment of this application further provides a computer-readable storage medium. The computer storage medium stores computer instructions. When the computer instructions are run on an electronic device, the electronic device is enabled to perform the foregoing related method steps, to implement the cross-device window dragging method in the foregoing embodiments.

In addition, an embodiment of this application further provides a computer program product. When the computer program product runs on an electronic device, the electronic device is enabled to perform the foregoing related steps, to implement the cross-device window dragging method in the foregoing embodiments.

In addition, an embodiment of this application further provides a chip (which may alternatively be a component or a module). The chip may include one or more processing circuits and one or more transceiver pins. The transceiver pin and the processing circuit communicate with each other by using an internal connection path. The processing circuit performs the foregoing related method steps to implement the cross-device window dragging method in the foregoing embodiments, to control a receive pin to receive a signal, and to control a transmit pin to send a signal.

In addition, an embodiment of this application further provides a system. The system includes the foregoing Windows device and the Android device that establishes a mouse sharing connection to the Windows device. Based on the cross-device window dragging method provided in the foregoing embodiments, the Windows device and the Android device may drag a window in the Windows device to the Android device for display.

In addition, it can be learned from the foregoing description that, all of the electronic device, the computer-readable storage medium, the computer program product, or the chip provided in the embodiments of this application are configured to perform the corresponding method provided above. Therefore, for beneficial effects that can be achieved by the electronic device, the computer-readable storage medium, the computer program product, or the chip, refer to the beneficial effects of the corresponding method provided above. Details are not described herein again.

The foregoing embodiments are merely intended to describe the technical solutions in this application, but not intended to limit this application. Although this application is described in detail with reference to the foregoing embodiments, persons of ordinary skill in the art should understand that they may still make modifications to the technical solutions described in the foregoing embodiments or make equivalent replacements to some technical features thereof. However, these modifications or replacements do not make the essence of the corresponding technical solutions depart from the scope of the technical solutions in the embodiments of this application.

## Claims

1. A cross-device window dragging method, wherein the method is applied to a system comprising a first electronic device and a second electronic device, an operating system of the first electronic device is a Windows system, and an operating system of the second electronic device is an Android system; and the method comprises:
displaying, by the first electronic device, a first window;
dragging, by the first electronic device in response to a drag operation that is performed by a user on the first window by operating a mouse cursor, the first window to move on a screen of the first electronic device;
sending, by the first electronic device when the mouse cursor moves out of a screen edge of the first electronic device, a window traversal indication for the first window to the second electronic device, and hiding the first window displayed on the first electronic device, wherein a mouse corresponding to the mouse cursor is connected to the first electronic device or the second electronic device;
displaying, by the second electronic device, a first floating window on a screen of the second electronic device in response to the window traversal indication, wherein the first floating window does not display the first window;
sending, by the first electronic device in a process in which the mouse cursor drags the first floating window to move on the screen of the second electronic device, a first indication to the second electronic device in response to a release operation that is performed by the user on a left button of the mouse;
releasing, by the second electronic device, the first floating window in response to the first indication, and displaying a second floating window on the screen of the second electronic device, wherein the second floating window covers the first floating window; and
displaying, by the second electronic device when receiving a first collaborative image sent by the first electronic device, the first collaborative image in a display area of the second floating window, wherein the first collaborative image comprises all display content of the first window.

2. The method according to claim 1, wherein after the displaying the first collaborative image in a display area of the second floating window, the method further comprises:
displaying, by the first electronic device, a second window;
dragging, by the first electronic device in response to a drag operation that is performed by the user on the second window by operating the mouse cursor, the second window to move on the screen of the first electronic device;
sending, by the first electronic device when the mouse cursor moves out of the screen edge of the first electronic device, a second collaborative image for the second window to the second electronic device, wherein the second collaborative image comprises a first part of the second window, and displaying a second part of the second window on the screen of the first electronic device, wherein the first part is a part that moves out of the screen edge of the first electronic device, and the second part is a part that does not move out of the screen edge of the first electronic device; and
displaying, by the second electronic device when receiving the second collaborative image sent by the first electronic device, the second collaborative image in the display area of the second floating window, wherein a window state of the second window in the second collaborative image is a restored state, and the second collaborative image blocks the first collaborative image; and
when the window state is the restored state, a title bar of the first window comprises a maximize control, and does not comprise a restore control.

3. The method according to claim 1, wherein the sending, by the first electronic device when the mouse cursor moves out of a screen edge of the first electronic device, a window traversal indication for the first window to the second electronic device, and hiding the first window displayed on the first electronic device comprises:
sending, by the first electronic device when the mouse cursor moves out of the screen edge of the first electronic device, the window traversal indication for the first window to the second electronic device; and
hiding, by the first electronic device, the first window displayed on the first electronic device, after sending the window traversal indication to the second electronic device and when receiving a window traversal acknowledgment message that is generated by the second electronic device for the window traversal indication.

4. The method according to claim 3, wherein after the displaying, by the second electronic device, a first floating window on a screen of the second electronic device in response to the window traversal indication, the method further comprises:
generating, by the second electronic device, the window traversal acknowledgment message for the window traversal indication, and sending the window traversal message to the first electronic device.

5. The method according to claim 1, wherein the first indication comprises a window release indication and a screen collaboration indication;
the window release indication is used to indicate the second electronic device to release the first floating window;
the screen collaboration indication is used to indicate the second electronic device to establish, to the first electronic device, a screen collaboration connection with a collaboration mode being an extended mode; and
the second floating window is displayed on the screen of the second electronic device after the screen collaboration connection is successfully established.

6. The method according to claim 1, wherein after the releasing, by the second electronic device, the first floating window in response to the first indication, and displaying a second floating window on the screen of the second electronic device, the method further comprises:
generating, by the second electronic device, a screen collaboration connection success message for the screen collaboration indication, and sending the screen collaboration connection success message to the first electronic device.

7. The method according to claim 6, wherein the first collaborative image further comprises a taskbar of the first electronic device; and
the method further comprises:
setting, by the first electronic device, a window state of the first window to a maximized state in response to the screen collaboration connection success message, so that the first window displays all display content comprised; and
compositing and drawing, by the first electronic device, the first collaborative image based on the first window with the window state being the maximized state and the taskbar of the first electronic device, and sending the obtained first collaborative image to the second electronic device.

8. The method according to claim 7, wherein when the window state is the maximized state, a title bar of the first window comprises a restore control, and does not comprise a maximize control.

9. The method according to any one of claims 1 to 8, wherein the hiding, by the first electronic device, the first window displayed on the first electronic device comprises:
determining, by the first electronic device, a width and a height of the first window based on a handle of the first window;
determining, by the first electronic device, a current X coordinate and a current Y coordinate of the mouse cursor corresponding to the mouse based on movement information of the mouse;
determining, by the first electronic device based on the current X coordinate and the current Y coordinate of the mouse cursor, the width of the first window, and an X coordinate interval corresponding to the screen of the first electronic device, hidden coordinates for hiding the first window, wherein the X coordinate interval comprises an X-axis coordinate of a left side edge of the screen of the first electronic device and an X-axis coordinate of a right side edge of the screen of the first electronic device, and the X-axis coordinate of the left side edge of the screen is less than the X-axis coordinate of the right side edge of the screen; and
hiding, by the first electronic device, the first window at a position of the hidden coordinates.

10. The method according to claim 9, wherein the determining, by the first electronic device based on the current X coordinate and the current Y coordinate of the mouse cursor, the width of the first window, and an X coordinate interval corresponding to the screen of the first electronic device, hidden coordinates for hiding the first window comprises:
determining, by the first electronic device, a difference between the X-axis coordinate of the left side edge of the screen and the width of the first window when the X coordinate of the mouse cursor is not greater than the X-axis coordinate of the left side edge of the screen; and
using, by the first electronic device, the difference as an X coordinate of the hidden coordinates, and using the Y coordinate of the mouse cursor as a Y coordinate of the hidden coordinates.

11. The method according to claim 9, wherein the determining, by the first electronic device based on the current X coordinate and the current Y coordinate of the mouse cursor, the width of the first window, and an X coordinate interval corresponding to the screen of the first electronic device, hidden coordinates for hiding the first window comprises:
using, by the first electronic device, the X-axis coordinate of the right side edge of the screen as an X coordinate of the hidden coordinates, and using the Y coordinate of the mouse cursor as a Y coordinate of the hidden coordinates when the X coordinate of the mouse cursor is not less than the X-axis coordinate of the right side edge of the screen.

12. The method according to claim 9, wherein after the hiding, by the first electronic device, the first window at a position of the hidden coordinates, the method further comprises:
displaying the first window from the hidden coordinates in response to a drag operation of traversing the first window from the second electronic device back to the first electronic device.

13. The method according to any one of claims 1 to 12, wherein the displaying, by the first electronic device, a first window comprises:
displaying, by the first electronic device, the first window with the window state being the maximized state, wherein when the window state is the maximized state, the title bar of the first window comprises the restore control, and does not comprise the maximize control.

14. The method according to claim 13, wherein the dragging, by the first electronic device in response to a drag operation that is performed by a user on the first window by operating a mouse cursor, the first window to move on a screen of the first electronic device comprises:
switching, by the first electronic device, the window state of the first window from the maximized state to the restored state in response to the drag operation that is performed by the user on the first window by operating the mouse cursor, wherein when the window state is the restored state, the title bar of the first window comprises the maximize control, and does not comprise the restore control; and
dragging, by the first electronic device, the first window with the window state being the restored state to move on the screen of the first electronic device.

15. The method according to any one of claims 1 to 12, wherein the displaying, by the first electronic device, a first window comprises:
displaying, by the first electronic device, the first window with the window state being the restored state, wherein when the window state is the restored state, the title bar of the first window comprises the maximize control, and does not comprise the restore control.

16. The method according to claim 15, wherein the dragging, by the first electronic device in response to a drag operation that is performed by a user on the first window by operating a mouse cursor, the first window to move on a screen of the first electronic device comprises:
dragging, by the first electronic device in response to the drag operation that is performed by the user on the first window by operating the mouse cursor, the first window with the window state being the restored state to move on the screen of the first electronic device.

17. The method according to any one of claims 1 to 16, wherein in a process of dragging the first window to move on the screen of the first electronic device, the method further comprises:
in the process of dragging the first window to move on the screen of the first electronic device, determining, by the first electronic device based on the movement information of the mouse, whether the mouse cursor corresponding to the mouse moves out of the screen of the first electronic device from the left side edge or the right side edge of the screen of the first electronic device; and
when determining that the mouse cursor corresponding to the mouse moves out of the screen of the first electronic device from the left side edge or the right side edge of the screen of the first electronic device, determining, by the first electronic device, that the mouse cursor moves out of the screen edge of the first electronic device.

18. The method according to any one of claims 1 to 17, wherein the dragging, by the first electronic device in response to a drag operation that is performed by a user on the first window by operating a mouse cursor, the first window to move on a screen of the first electronic device comprises:
determining, by the first electronic device when detecting a window movement message of the first window and detecting a left mouse button pressing message indicating that the left button of the mouse is pressed, that the user operates the mouse cursor to perform the drag operation on the first window; and
dragging, by the first electronic device in response to the drag operation, the first window to move on the screen of the first electronic device.

19. The method according to any one of claims 1 to 18, wherein the sending, by the first electronic device, a first indication to the second electronic device in response to a release operation that is performed by the user on a left button of the mouse comprises:
determining, by the first electronic device when detecting a release message for the left button of the mouse, and detecting a message indicating that the first window stops moving, that the user performs the release operation on the left button of the mouse; and
sending, by the first electronic device, the first indication to the second electronic device in response to the release operation.

20. The method according to any one of claims 1 to 19, wherein the second electronic device comprises a screen computer and a foldable-screen mobile phone.

21. A cross-device window dragging method, wherein the method is applied to a system comprising a first electronic device and a second electronic device, an operating system of the first electronic device is a Windows system, and an operating system of the second electronic device is an Android system; and the method comprises:
displaying, by the first electronic device, a first window;
dragging, by the first electronic device in response to a drag operation that is performed by a user on the first window by operating a mouse cursor, the first window to move on a screen of the first electronic device;
sending, by the first electronic device when the mouse cursor moves out of a screen edge of the first electronic device, a window traversal indication for the first window to the second electronic device, and hiding the first window displayed on the first electronic device, wherein a mouse corresponding to the mouse cursor is connected to the first electronic device or the second electronic device;
displaying, by the second electronic device, a first floating window on a screen of the second electronic device in response to the window traversal indication, wherein the first floating window comprises a first upper status bar, a first lower status bar, and a first display area, and the first display area does not display the first window;
displaying, by the second electronic device, the mouse cursor in the first upper status bar, and registering a left mouse button pressing event for the mouse;
sending, by the first electronic device in a process in which the mouse cursor drags the first floating window to move on the screen of the second electronic device, a first indication to the second electronic device in response to a release operation that is performed by the user on a left button of the mouse;
registering, by the second electronic device in response to the first indication, a left mouse button lifting event for the mouse to release the first floating window, and displaying a second floating window, wherein the second floating window covers the first floating window, and the second floating window comprises a second upper status bar, a second lower status bar, and a second display area; and
displaying, by the second electronic device when receiving a first collaborative image sent by the first electronic device, the first collaborative image in the second display area, wherein the first collaborative image comprises all display content of the first window.

22. The method according to claim 21, wherein before the sending, by the first electronic device when the mouse cursor moves out of a screen edge of the first electronic device, a window traversal indication for the first window to the second electronic device, and hiding the first window displayed on the first electronic device, the method further comprises:
establishing, by the second electronic device, a keyboard and mouse sharing connection to the first electronic device, and agreeing on an aspect ratio of the first display area in a process of establishing the keyboard and mouse sharing connection, wherein
the aspect ratio of the first display area is the same as an aspect ratio of the screen of the first electronic device.

23. The method according to claim 22, wherein a height of the first upper status bar and a height of the first lower status bar are fixed; and
the displaying, by the second electronic device, a first floating window on a screen of the second electronic device in response to the window traversal indication comprises:
creating, by the second electronic device in response to the window traversal indication, a first Activity based on the aspect ratio, a size of the screen of the second electronic device, the height of the first upper status bar, the height of the first lower status bar, and a preset proportion of the first window; and setting a window mode of the first Activity to a floating window mode to obtain the first floating window.

24. The method according to claim 23, wherein the creating, by the second electronic device in response to the window traversal indication, a first Activity based on the aspect ratio, a size of the screen of the second electronic device, the height of the first upper status bar, the height of the first lower status bar, and a preset proportion of the first window comprises:
determining, by the second electronic device, a width of the first display area and a height of the first display area based on the aspect ratio, the size of the screen of the second electronic device, and the preset proportion of the first window;
obtaining, by the second electronic device, a Y coordinate for traversing the first window carried in the window traversal indication, and using the Y coordinate for traversing the first window as a start Y coordinate of a height of the first Activity;
determining, by the second electronic device, an end Y coordinate of the height of the first Activity based on the start Y coordinate, the height of the first upper status bar, the height of the first display area, and the height of the first lower status bar;
setting, by the second electronic device, a first bounds attribute of the first Activity based on the width of the first display area, the start Y coordinate, and the end Y coordinate; and
creating, by the second electronic device, the first Activity based on the first bounds attribute.

25. The method according to claim 24, wherein the displaying a second floating window comprises:
creating, by the second electronic device, a second Activity based on the first Activity; and setting a window mode of the second Activity to a floating window mode to obtain the second floating window.

26. The method according to claim 25, wherein after the displaying a second floating window, the method further comprises:
destroying, by the second electronic device, the first floating window.

27. The method according to claim 25, wherein a height of the second upper status bar is the same as the height of the first upper status bar, and a height of the second lower status bar is the same as the height of the first lower status bar; and
the creating, by the second electronic device, a second Activity based on the first Activity comprises:
obtaining, by the second electronic device, the first bounds attribute of the first Activity;
setting, by the second electronic device when obtaining the first bounds attribute, a second bounds attribute of the second Activity based on the first bounds attribute; and
creating, by the second electronic device, the second Activity based on the second bounds attribute.

28. The method according to claim 27, wherein the second bounds attribute is the same as the first bounds attribute.

29. The method according to claim 27, wherein the method further comprises:
determining, by the second electronic device when the first bounds attribute is not obtained, a width of the second display area and a height of the second display area based on the aspect ratio, the size of the screen of the second electronic device, and the preset proportion of the first window;
obtaining, by the second electronic device, the Y coordinate for traversing the first window carried in the window traversal indication, and using the Y coordinate for traversing the first window as a start Y coordinate of a height of the second Activity;
determining, by the second electronic device, an end Y coordinate of the height of the second Activity based on the start Y coordinate, the height of the second upper status bar, the height of the second display area, and the height of the second lower status bar; and
setting, by the second electronic device, the second bounds attribute of the second Activity based on the width of the second display area, the start Y coordinate, and the end Y coordinate.

30. The method according to claim 23, wherein the creating a first Activity further comprises:
setting a window attribute of the first Activity to a scaling-prohibited mode.

31. The method according to any one of claims 21 to 30, wherein the displaying, by the second electronic device, the mouse cursor in the first upper status bar comprises:
selecting, by the second electronic device based on a display position of the first floating window, a coordinate point from the currently displayed first upper status bar as initial coordinates of the mouse, wherein the initial coordinates of the mouse bypass an area in which a function key included in the first upper status bar is located and a hot zone on a side edge of the screen of the second electronic device; and
displaying, by the second electronic device, the mouse cursor at the initial coordinates of the mouse.

32. The method according to any one of claims 21 to 31, wherein the first indication comprises a window release indication and a screen collaboration indication;
the window release indication is used to indicate the second electronic device to release the first floating window;
the screen collaboration indication is used to indicate the second electronic device to establish, to the first electronic device, a screen collaboration connection with a collaboration mode being an extended mode; and
the second floating window is displayed on the screen of the second electronic device after the screen collaboration connection is successfully established.

33. The method according to claim 32, wherein the method further comprises:
registering, by the second electronic device, drag monitoring for the first upper status bar, wherein
the second electronic device is further configured to deregister the drag monitoring in response to the window release indication.

34. The method according to claim 33, wherein before the deregistering the drag monitoring, the method further comprises:
when the drag monitoring is triggered and window movement position information sent by the first electronic device is received, moving, by the second electronic device, the display position of the first floating window based on the window movement position information.

35. The method according to any one of claims 21 to 34, wherein the second floating window is displayed in the second electronic device with a screen state being a landscape state; and
after the displaying the first collaborative image in the second display area, the method further comprises:
displaying, by the second electronic device, a third floating window at a preset position distant from an upper edge of the screen in a portrait state in response to a screen rotation operation, wherein the third floating window comprises a third upper status bar, a third lower status bar, and a third display area; and
displaying, by the second electronic device, the first collaborative image in the third display area; and destroying or hiding the second Activity, wherein
a height of the third upper status bar and a height of the third lower status bar are fixed, an aspect ratio of the third display area is the same as the aspect ratio of the first display area agreed on with the first electronic device when the keyboard and mouse sharing connection is established, and the aspect ratio of the first display area is the same as the aspect ratio of the screen of the first electronic device.

36. The method according to claim 35, wherein the method further comprises:
scaling, by the second electronic device, the second floating window in response to a scaling operation on the second floating window, wherein
an aspect ratio of the second display area of the scaled-up or scaled-down second floating window is the same as the aspect ratio of the first display area agreed on with the first electronic device when the keyboard and mouse sharing connection is established, and the aspect ratio of the first display area is the same as the aspect ratio of the screen of the first electronic device.

37. The method according to any one of claims 21 to 36, wherein after the displaying the first collaborative image in the second display area, the method further comprises:
displaying, by the first electronic device, a second window;
dragging, by the first electronic device in response to a drag operation that is performed by the user on the second window by operating the mouse cursor, the second window to move on the screen of the first electronic device;
sending, by the first electronic device when the mouse cursor moves out of the screen edge of the first electronic device, a second collaborative image for the second window to the second electronic device, wherein the second collaborative image comprises a first part of the second window, and displaying a second part of the second window on the screen of the first electronic device, wherein the first part is a part that moves out of the screen edge of the first electronic device, and the second part is a part that does not move out of the screen edge of the first electronic device; and
displaying, by the second electronic device when receiving the second collaborative image sent by the first electronic device, the second collaborative image in the second display area, wherein a window state of the second window in the second collaborative image is a restored state, and the second collaborative image blocks the first collaborative image; and
when the window state is the restored state, a title bar of the first window comprises a maximize control, and does not comprise a restore control.

38. The method according to any one of claims 21 to 37, wherein the sending, by the first electronic device when the mouse cursor moves out of a screen edge of the first electronic device, a window traversal indication for the first window to the second electronic device, and hiding the first window displayed on the first electronic device comprises:
sending, by the first electronic device when the mouse cursor moves out of the screen edge of the first electronic device, the window traversal indication for the first window to the second electronic device; and
hiding, by the first electronic device, the first window displayed on the first electronic device, after sending the window traversal indication to the second electronic device and when receiving a window traversal acknowledgment message that is generated by the second electronic device for the window traversal indication.

39. The method according to claim 38, wherein after the displaying, by the second electronic device, a first floating window on a screen of the second electronic device in response to the window traversal indication, the method further comprises:
generating, by the second electronic device, the window traversal acknowledgment message for the window traversal indication, and sending the window traversal message to the first electronic device.

40. The method according to any one of claims 21 to 39, wherein after the registering, by the second electronic device in response to the first indication, a left mouse button lifting event for the mouse to release the first floating window, and displaying a second floating window, the method further comprises:
generating, by the second electronic device, a screen collaboration connection success message for the screen collaboration indication, and sending the screen collaboration connection success message to the first electronic device.

41. The method according to claim 40, wherein the first collaborative image further comprises a taskbar of the first electronic device; and
the method further comprises:
setting, by the first electronic device, a window state of the first window to a maximized state in response to the screen collaboration connection success message, so that the first window displays all display content comprised; and
compositing and drawing, by the first electronic device, the first collaborative image based on the first window with the window state being the maximized state and the taskbar of the first electronic device, and sending the obtained first collaborative image to the second electronic device.

42. The method according to claim 41, wherein when the window state is the maximized state, a title bar of the first window comprises a restore control, and does not comprise a maximize control.

43. The method according to any one of claims 21 to 42, wherein the second electronic device comprises a screen computer and a foldable-screen mobile phone.

44. A cross-device window dragging system, comprising a first electronic device and a second electronic device, wherein a keyboard and mouse sharing connection is established between the first electronic device and the second electronic device, an operating system of the first electronic device is a Windows system, and an operating system of the second electronic device is an Android system;
the first electronic device and the second electronic device are configured to perform the cross-device window dragging method according to any one of claims 1 to 20, or perform the cross-device window dragging method according to any one of claims 21 to 43.

45. An electronic device, wherein the electronic device comprises a memory and a processor, the memory is coupled to the processor, the memory stores program instructions, and when the program instructions are executed by the processor, the electronic device is enabled to perform the cross-device window dragging method according to any one of claims 1 to 20, or perform the cross-device window dragging method according to any one of claims 21 to 43.

46. A computer-readable storage medium, comprising a computer program, wherein when the computer program is run on an electronic device, the electronic device is enabled to perform the cross-device window dragging method according to any one of claims 1 to 20, or perform the cross-device window dragging method according to any one of claims 21 to 43.
